# EUROPEAN PATENT SPECIFICATION

(11) **EP 3 745 395 B1**
(45) Date of publication and mention of the grant of the patent: **18.05.2022**
(21) Application number: 20179164.7
(22) Date of filing: 16.05.2018
(51) Int. Cl.: G10L 15/30, G10L 15/22, G06F 3/16, G06F 21/32

(54) **FAR-FIELD EXTENSION FOR DIGITAL ASSISTANT SERVICES**
FERNFELDERWEITERUNG FÜR DIGITALASSISTENTDIENSTE
EXTENSION EN CHAMP LOINTAIN POUR SERVICES D'ASSISTANT NUMÉRIQUE

(30) Priority: 16.05.2017 US 201762507151 P; 02.06.2017 DK PA201770435; 02.06.2017 DK PA201770434; 16.08.2017 US 201715679108
(43) Date of publication of application: 02.12.2020
(62) Divisional of application: 18732187.2
(73) Proprietor: Apple Inc., Cupertino, CA 95014 (US)
(72) Inventor: KIM, Yoon, Los Altos, California 94024 (US); SRISUWANANUKORN, Charles, Cupertino, California 95014 (US); CARSON, David A., Cupertino, California 95014 (US); GRUBER, Thomas R., Cupertino, California 95014 (US); BINDER, Justin G., Cupertino, California 95014 (US)
(74) Representative: COPA Copenhagen Patents

(56) References cited:
- EP-A1- 1 511 277
- EP-A1- 2 760 015
- US-A1- 2008 248 797
- US-A1- 2009 259 472
- US-A1- 2010 263 015
- US-A1- 2013 085 761
- US-A1- 2014 207 468
- US-A1- 2016 077 794
- US-A1- 2016 365 101
- US-A1- 2016 372 112

## Description

This application claims priority to U.S. Provisional Patent Application Serial No. 62/507,151 entitled "FAR-FIELD EXTENSION FOR DIGITAL ASSISTANT SERVICES," filed on May 16, 2017; Denmark Patent Application No. PA 2017 70434, entitled "FAR-FIELD EXTENSION FOR DIGITAL ASSISTANT SERVICES", filed on June 2, 2017 ; Denmark Patent Application No. PA 2017 70435, entitled "FAR-FIELD EXTENSION FOR DIGITAL ASSISTANT SERVICES", filed on June 2, 2017 ; and U.S. non-provisional Patent Application Serial No. 15/679,108, entitled "FAR-FIELD EXTENSION FOR DIGITAL ASSISTANT SERVICES," filed on August 16, 2017.

### Field

This relates generally to intelligent automated assistants and, more specifically, to far field extension for digital assistant services.

### Background

Intelligent automated assistants (or digital assistants) can provide a beneficial interface between human users and electronic devices. Such assistants can allow users to interact with devices or systems using natural language in spoken and/or text forms. For example, a user can provide a speech input containing a user request to a digital assistant operating on an electronic device. The digital assistant can interpret the user's intent from the speech input and operationalize the user's intent into tasks. The tasks can then be performed by executing one or more services of the electronic device, and a relevant output responsive to the user request can be returned to the user.

Electronic devices that can be controlled by voice are for example disclosed in EP 1 511 277 A1 and in US 2010/0263015 A1.

Using a digital assistant typically require direct interaction between the user and the digital assistant. For example, the user may be required to be in close proximity (e.g., in the same room) with the electronic device on which the digital assistant operates. The digital assistant may thus directly receive the user's speech input via its microphone and provide response to the user via its speaker. Under certain circumstances, requiring the user to be in close proximity with the electronic device may cause difficulty and inconvenience for the user to interact with the digital assistant. For example, if the user and the electronic device on which the digital assistant operates are separated beyond a distance (e.g., in different rooms) such that the digital assistant is incapable of, or has difficult of, receiving the user's speech input, the digital assistant may be incapable of providing digital assistant services to the user. Thus, techniques for far-field extension of digital assistant services are desired.

Furthermore, different types of electronic devices may have different capabilities. As a result, digital assistant services provided at different devices may be different. Certain digital assistant services may not be provided at certain devices due to device capability limitations. For example, while a digital assistant operating on a smartphone device may output voice reading of text messages, a digital assistant operating on a TV set-top box may be incapable of doing the same due to device limitations. Thus, it is desired to provide digital assistant services using multiple devices to mitigate the device capability limitation.

### Summary

The invention is defined by a method according to claim 1, a first electronic device according to claim 18 and a computer-readable storage medium according to claim 19.

Techniques for far-field extension of digital assistant services by one or more service-extension devices can improve the user-interaction interface. For example, using one or more service-extension devices, a user is no longer required to be in close proximity (e.g., in the same room) with an electronic device for receiving digital assistant services provided by the digital assistant operating on the electronic device. Further, the service-extension devices can flexibly obtain responses to user requests from a device disposed in the vicinity of the user and/or a device disposed remotely, depending on the content of the user request. For example, if the user requests personal information (e.g., calendar events), a service-extension device may obtain a response from a device disposed in the vicinity of the user (e.g., the user's smartphone), rather than a remote device, thereby reducing the time required for providing services to the user. Under some circumstances, obtaining a response from a local device may also alleviate privacy concerns because sensitive or confidential information may be contained in a communicated between local devices. Further, the ability to obtain responses from different devices enhances the capability of a service-extension device to provide responses to a user. For example, if user-requested information cannot be obtained from one device (e.g., the user's smartphone), the service-extension device may obtain the response from another device (e.g., a server). As a result, a service-extension device can dynamically obtain responses from one or more devices, and efficiently extend digital assistant services from multiple devices.

One or more service-extension devices can further extend digital assistant services to enhance the continuity in providing digital assistant services. For example, one or more service-extension devices can determine whether a response to the user request (e.g., playing music) is to be provided at any particular service-extension device or at another electronic device, depending on the user's location, movement, preferences, etc. This capability of selecting a best device to provide service extension enhances the continuity for providing digital assistant services among multiple devices and further improves the user-interaction interface. Moreover, one or more service-extension devices can be shared by multiple users (e.g., family members) and the operation of the devices can be based on authentication of the multiple users. As a result, the same service-extension devices can extend digital assistant services from multiple electronic devices associated with multiple users. This capability of sharing service-extension devices enhances the efficiency in providing the digital assistant extension services.

Furthermore, techniques for providing a notification to the user using one or more service-extension devices can provide prompt notifications to the user in an extended distance. For example, a user may be separated from a user device for a distance and may thus be incapable of directly receiving notifications provided by the user device. One or more service-extension devices can receive notifications from the user device (e.g., the user's smartphone), and provide an audio and/or visual output associated with the notification to the user. Thus, the service-extension devices effectively extended the distance that a user device can provide notifications to the user.

Furthermore, techniques for providing digital assistant services using multiple devices can mitigate the device capability limitation. For example, a user device may not be able to provide services in response to user requests due to the limitation of its capability (e.g., small screen size, lack of requested information, etc.). The user device can identify another device that is capable of providing the services and cause the other device to provide the requested services to the user. The ability to identify another device that is capable of providing the requested services leverages the capabilities of a collection of devices to provide digital assistant services to the user, and enhances the user-interaction efficiency by reducing the user's burden to seek for a suitable device.

Furthermore, these techniques enhance the operability of the device and makes the user-device interface more efficient, which, additionally, reduces power usage and improves battery life of the device by enabling the user to use the device more quickly and efficiently.

### Brief Description of the Drawings

FIG. 1 is a block diagram illustrating a system and environment for implementing a digital assistant, according to various examples.
FIG. 2A is a block diagram illustrating a portable multifunction device implementing the client-side portion of a digital assistant, according to various examples.
FIG. 2B is a block diagram illustrating exemplary components for event handling, according to various examples.
FIG. 3 illustrates a portable multifunction device implementing the client-side portion of a digital assistant, according to various examples.
FIG. 4 is a block diagram of an exemplary multifunction device with a display and a touch-sensitive surface, according to various examples.
FIG. 5A illustrates an exemplary user interface for a menu of applications on a portable multifunction device, according to various examples.
FIG. 5B illustrates an exemplary user interface for a multifunction device with a touch-sensitive surface that is separate from the display, according to various examples.
FIG. 6A illustrates a personal electronic device, according to various examples.
FIG. 6B is a block diagram illustrating a personal electronic device, according to various examples.
FIG. 7A is a block diagram illustrating a digital assistant system or a server portion thereof, according to various examples.
FIG. 7B illustrates the functions of the digital assistant shown in FIG. 7A, according to various examples.
FIG. 7C illustrates a portion of an ontology, according to various examples.
FIGs. 8A-8B illustrate functionalities of providing digital assistant services at a first electronic device based on a user input, according to various examples.
FIGs. 9A-9C illustrate functionalities of obtaining an identity of a user at a first electronic device, according to various examples.
FIGs. 10A-10C illustrate functionalities of providing digital assistant services based on a user request for information, according to various examples.
FIGs. 11A-11D illustrate functionalities of providing digital assistant services based on a user request for performing a task, according to various examples.
FIGs. 12A-12C illustrate functionalities of providing digital assistant services based on a user request for information, according to various examples.
FIGs. 13A-13B illustrate functionalities of providing digital assistant services at a first electronic device or additional electronic devices, according to various examples.
FIG. 14 illustrates functionalities of providing continuity of digital assistant services between different electronic devices, according to various examples.
FIGs. 15A-15G illustrate functionalities of providing digital assistant services based on a notification of an event, according to various examples.
FIGs. 16A-16I illustrate a process for providing a digital assistant service at a first electronic device based on a user input, according to various examples.
FIGs. 17A-17D illustrate a process for providing digital assistant services based on a notification of an event, according to various examples.
FIGs. 18A-18E illustrate functionalities for providing digital assistant services based on capabilities of multiple electronic devices, according to various examples.
FIGs. 19A-19D illustrate a process for providing digital assistant services based on capabilities of multiple electronic devices, according to various examples.

### Detailed Description

In the following description of examples, reference is made to the accompanying drawings in which are shown by way of illustration specific examples that can be practiced. It is to be understood that other examples can be used and structural changes can be made without departing from the scope of the various examples.

The present disclosure provides techniques for far-field extension of digital assistant services by one or more service-extension devices. As described, using service-extension devices can improve the user-interaction interface. In some examples, a first electronic device can be a service-extension device. The first electronic device can receive a speech input representing a user request. The first electronic device can obtain an identity of the user based on, for example, authentication of the user by a second electronic device and/or a third electronic device. In some examples, the second electronic device can be a device disposed remotely from the first electronic device (e.g., a remote server); and the third electronic device can be a device disposed in the vicinity of the first electronic device (e.g., the user's smartphone). After the identified is obtained, the first electronic device can provide a representation of the user request to at least one of the second electronic device and the third electronic device. One or both of the second electronic device and the third electronic device can determine whether to provide a response to the first electronic device. The first electronic device (e.g., a service-extension device) can receive the response and provide a representation of the response to the user. As such, the first electronic device effectively extends the digital assistant services provided by one or both of the second electronic device and the third electronic device.

The present disclosure further provides techniques for providing notifications using one or more service-extension devices. As described above, using one or more service-extension devices, notifications can be provided to the user promptly in an extended distance. In some examples, a first electronic device can receive a notification from another device (e.g., a user's smartphone) and output an indication (e.g., a beep) of the notification. The first electronic device may receive one or more speech inputs inquiring about the indication and instructing the first electronic device to perform an operation of the notification (e.g., outputting the notification). The first electronic device can determine whether the notification should be provided; and provide the notification according to the determination.

The present disclosure further provides techniques for providing digital assistant services using multiple devices. As described above, providing digital assistant services using multiple devices can mitigate the device capability limitation. In some examples, a first electronic device receives a speech input representing a user request and obtains capability data associated with one or more electronic devices capable of being communicatively coupled to the first electronic device. The capability data can include device capabilities and informational capabilities. In accordance with the capability data, the first electronic device can identify a second electronic device for providing at least a portion of a response to the user request; and cause the second electronic device to provide at least a portion of the response.

Although the following description uses terms "first," "second," etc. to describe various elements, these elements should not be limited by the terms. These terms are only used to distinguish one element from another. For example, a first input could be termed a second input, and, similarly, a second input could be termed a first input, without departing from the scope of the various described examples. The first input and the second input are both inputs and, in some cases, are separate and different inputs.

The terminology used in the description of the various described examples herein is for the purpose of describing particular examples only and is not intended to be limiting. As used in the description of the various described examples and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

### 1. System and Environment

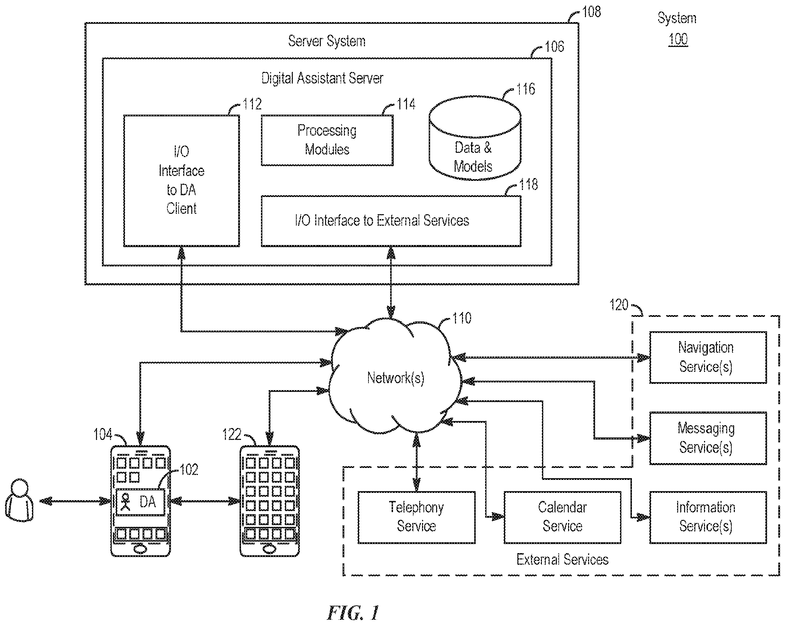

FIG. 1 illustrates a block diagram of system 100 according to various examples. In some examples, system 100 implements a digital assistant. The terms "digital assistant," "virtual assistant," "intelligent automated assistant," or "automatic digital assistant" refer to any information processing system that interprets natural language input in spoken and/or textual form to infer user intent, and performs actions based on the inferred user intent. For example, to act on an inferred user intent, the system performs one or more of the following: identifying a task flow with steps and parameters designed to accomplish the inferred user intent, inputting specific requirements from the inferred user intent into the task flow; executing the task flow by invoking programs, methods, services, APIs, or the like; and generating output responses to the user in an audible (e.g., speech) and/or visual form.

Specifically, a digital assistant is capable of accepting a user request at least partially in the form of a natural language command, request, statement, narrative, and/or inquiry. Typically, the user request seeks either an informational answer or performance of a task by the digital assistant. A satisfactory response to the user request includes a provision of the requested informational answer, a performance of the requested task, or a combination of the two. For example, a user asks the digital assistant a question, such as "Where am I right now?" Based on the user's current location, the digital assistant answers, "You are in Central Park near the west gate." The user also requests the performance of a task, for example, "Please invite my friends to my girlfriend's birthday party next week." In response, the digital assistant can acknowledge the request by saying "Yes, right away," and then send a suitable calendar invite on behalf of the user to each of the user's friends listed in the user's electronic address book. During performance of a requested task, the digital assistant sometimes interacts with the user in a continuous dialogue involving multiple exchanges of information over an extended period of time. There are numerous other ways of interacting with a digital assistant to request information or performance of various tasks. In addition to providing verbal responses and taking programmed actions, the digital assistant also provides responses in other visual or audio forms, e.g., as text, alerts, music, videos, animations, etc.

As shown in FIG. 1, in some examples, a digital assistant is implemented according to a client-server model. The digital assistant includes client-side portion 102 (hereafter "DA client 102") executed on user device 104 and server-side portion 106 (hereafter "DA server 106") executed on server system 108. DA client 102 communicates with DA server 106 through one or more networks 110. DA client 102 provides client-side functionalities such as user-facing input and output processing and communication with DA server 106. DA server 106 provides server-side functionalities for any number of DA clients 102 each residing on a respective user device 104.

In some examples, DA server 106 includes client-facing I/O interface 112, one or more processing modules 114, data and models 116, and I/O interface to external services 118. The client-facing I/O interface 112 facilitates the client-facing input and output processing for DA server 106. One or more processing modules 114 utilize data and models 116 to process speech input and determine the user's intent based on natural language input. Further, one or more processing modules 114 perform task execution based on inferred user intent. In some examples, DA server 106 communicates with external services 120 through network(s) 110 for task completion or information acquisition. I/O interface to external services 118 facilitates such communications.

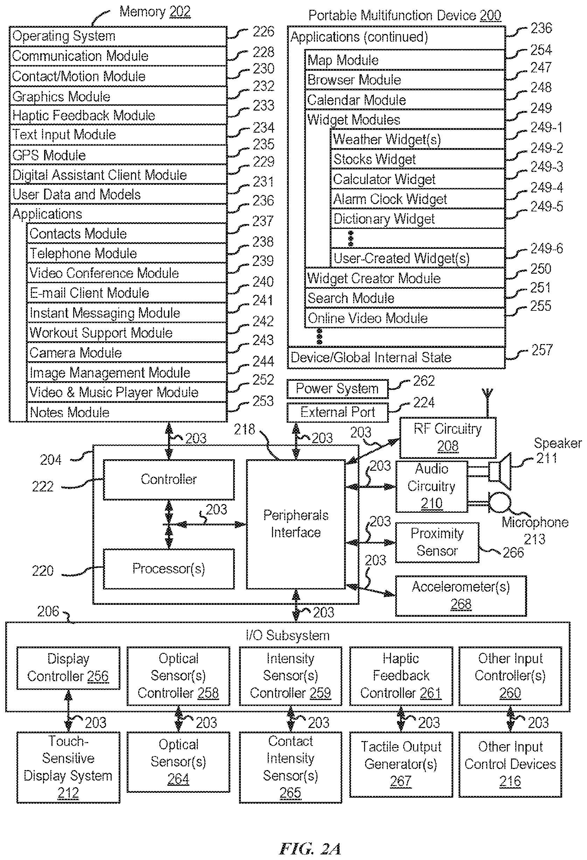

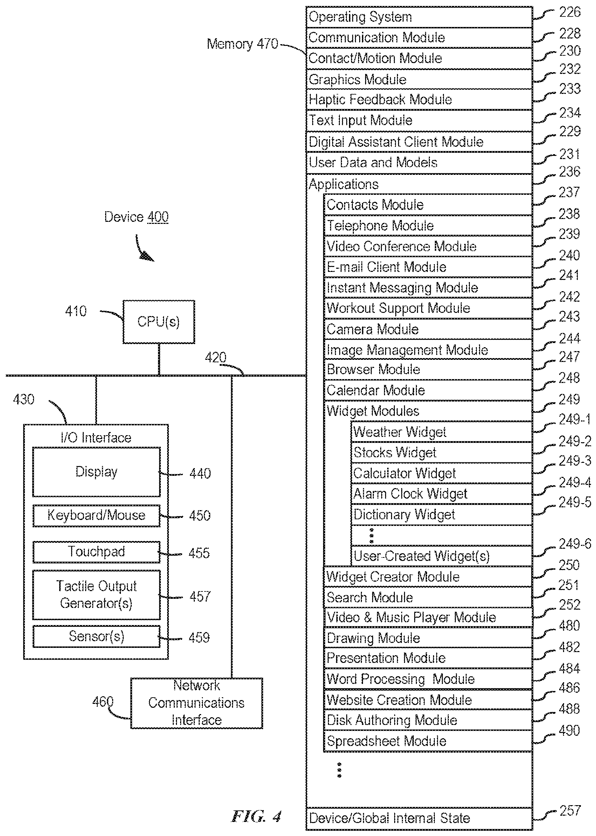

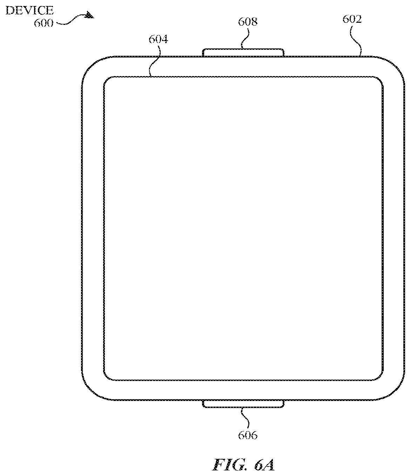

User device 104 can be any suitable electronic device. In some examples, user device is a portable multifunctional device (e.g., device 200, described below with reference to FIG. 2A), a multifunctional device (e.g., device 400, described below with reference to FIG. 4), or a personal electronic device (e.g., device 600, described below with reference to FIG. 6A-B.) A portable multifunctional device is, for example, a mobile telephone that also contains other functions, such as PDA and/or music player functions. Specific examples of portable multifunction devices include the iPhone^{®}, iPod Touch^{®}, and iPad^{®} devices from Apple Inc. of Cupertino, California. Other examples of portable multifunction devices include, without limitation, laptop or tablet computers. Further, in some examples, user device 104 is a non-portable multifunctional device. In particular, user device 104 is a desktop computer, a game console, a television, or a television set-top box. In some examples, user device 104 includes a touch-sensitive surface (e.g., touch screen displays and/or touchpads). Further, user device 104 optionally includes one or more other physical user-interface devices, such as a physical keyboard, a mouse, and/or a joystick. Various examples of electronic devices, such as multifunctional devices, are described below in greater detail.

Examples of communication network(s) 110 include local area networks (LAN) and wide area networks (WAN), e.g., the Internet. Communication network(s) 110 is implemented using any known network protocol, including various wired or wireless protocols, such as, for example, Ethernet, Universal Serial Bus (USB), FIREWIRE, Global System for Mobile Communications (GSM), Enhanced Data GSM Environment (EDGE), code division multiple access (CDMA), time division multiple access (TDMA), Bluetooth, Wi-Fi, voice over Internet Protocol (VoIP), Wi-MAX, or any other suitable communication protocol.

Server system 108 is implemented on one or more standalone data processing apparatus or a distributed network of computers. In some examples, server system 108 also employs various virtual devices and/or services of third-party service providers (e.g., third-party cloud service providers) to provide the underlying computing resources and/or infrastructure resources of server system 108.

In some examples, user device 104 communicates with DA server 106 via second user device 122. Second user device 122 is similar or identical to user device 104. For example, second user device 122 is similar to devices 200, 400, or 600 described below with reference to FIGs. 2A, 4, and 6A-B. User device 104 is configured to communicatively couple to second user device 122 via a direct communication connection, such as Bluetooth, NFC, BTLE, or the like, or via a wired or wireless network, such as a local Wi-Fi network. In some examples, second user device 122 is configured to act as a proxy between user device 104 and DA server 106. For example, DA client 102 of user device 104 is configured to transmit information (e.g., a user request received at user device 104) to DA server 106 via second user device 122. DA server 106 processes the information and return relevant data (e.g., data content responsive to the user request) to user device 104 via second user device 122.

In some examples, user device 104 is configured to communicate abbreviated requests for data to second user device 122 to reduce the amount of information transmitted from user device 104. Second user device 122 is configured to determine supplemental information to add to the abbreviated request to generate a complete request to transmit to DA server 106. This system architecture can advantageously allow user device 104 having limited communication capabilities and/or limited battery power (e.g., a watch or a similar compact electronic device) to access services provided by DA server 106 by using second user device 122, having greater communication capabilities and/or battery power (e.g., a mobile phone, laptop computer, tablet computer, or the like), as a proxy to DA server 106. While only two user devices 104 and 122 are shown in FIG. 1, it should be appreciated that system 100, in some examples, includes any number and type of user devices configured in this proxy configuration to communicate with DA server system 106.

Although the digital assistant shown in FIG. 1 includes both a client-side portion (e.g., DA client 102) and a server-side portion (e.g., DA server 106), in some examples, the functions of a digital assistant are implemented as a standalone application installed on a user device. In addition, the divisions of functionalities between the client and server portions of the digital assistant can vary in different implementations. For instance, in some examples, the DA client is a thin-client that provides only user-facing input and output processing functions, and delegates all other functionalities of the digital assistant to a backend server.

### 2. Electronic Devices

Attention is now directed toward embodiments of electronic devices for implementing the client-side portion of a digital assistant. FIG. 2A is a block diagram illustrating portable multifunction device 200 with touch-sensitive display system 212 in accordance with some embodiments. Touch-sensitive display 212 is sometimes called a "touch screen" for convenience and is sometimes known as or called a "touch-sensitive display system." Device 200 includes memory 202 (which optionally includes one or more computer-readable storage mediums), memory controller 222, one or more processing units (CPUs) 220, peripherals interface 218, RF circuitry 208, audio circuitry 210, speaker 211, microphone 213, input/output (I/O) subsystem 206, other input control devices 216, and external port 224. Device 200 optionally includes one or more optical sensors 264. Device 200 optionally includes one or more contact intensity sensors 265 for detecting intensity of contacts on device 200 (e.g., a touch-sensitive surface such as touch-sensitive display system 212 of device 200). Device 200 optionally includes one or more tactile output generators 267 for generating tactile outputs on device 200 (e.g., generating tactile outputs on a touch-sensitive surface such as touch-sensitive display system 212 of device 200 or touchpad 455 of device 400). These components optionally communicate over one or more communication buses or signal lines 203.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 200 is only one example of a portable multifunction device, and that device 200 optionally has more or fewer components than shown, optionally combines two or more components, or optionally has a different configuration or arrangement of the components. The various components shown in FIG. 2A are implemented in hardware, software, or a combination of both hardware and software, including one or more signal processing and/or application-specific integrated circuits.

Memory 202 includes one or more computer-readable storage mediums. The computer-readable storage mediums are, for example, tangible and non-transitory. Memory 202 includes high-speed random access memory and also includes non-volatile memory, such as one or more magnetic disk storage devices, flash memory devices, or other non-volatile solid-state memory devices. Memory controller 222 controls access to memory 202 by other components of device 200.

In some examples, a non-transitory computer-readable storage medium of memory 202 is used to store instructions (e.g., for performing aspects of processes described below) for use by or in connection with an instruction execution system, apparatus, or device, such as a computer-based system, processor-containing system, or other system that can fetch the instructions from the instruction execution system, apparatus, or device and execute the instructions. In other examples, the instructions (e.g., for performing aspects of the processes described below) are stored on a non-transitory computer-readable storage medium (not shown) of the server system 108 or are divided between the non-transitory computer-readable storage medium of memory 202 and the non-transitory computer-readable storage medium of server system 108.

Peripherals interface 218 is used to couple input and output peripherals of the device to CPU 220 and memory 202. The one or more processors 220 run or execute various software programs and/or sets of instructions stored in memory 202 to perform various functions for device 200 and to process data. In some embodiments, peripherals interface 218, CPU 220, and memory controller 222 are implemented on a single chip, such as chip 204. In some other embodiments, they are implemented on separate chips.

RF (radio frequency) circuitry 208 receives and sends RF signals, also called electromagnetic signals. RF circuitry 208 converts electrical signals to/from electromagnetic signals and communicates with communications networks and other communications devices via the electromagnetic signals. RF circuitry 208 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 208 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 208 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

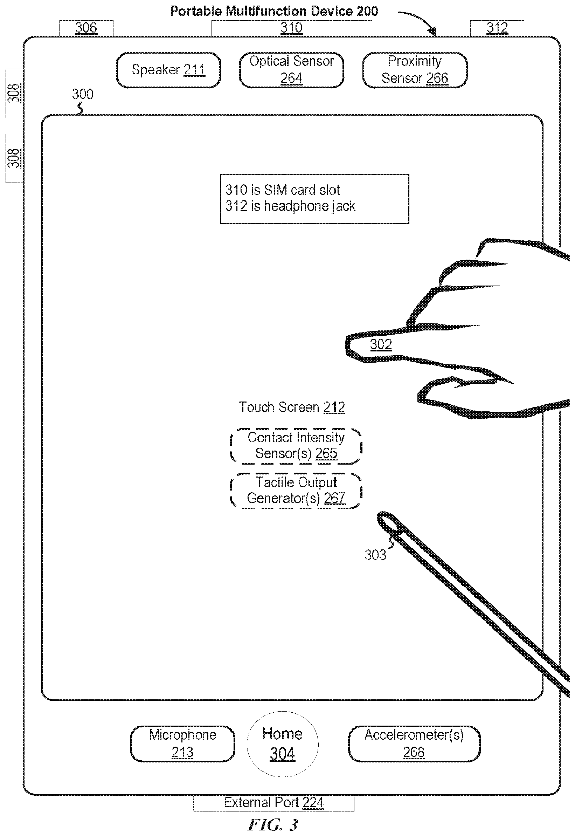

Audio circuitry 210, speaker 211, and microphone 213 provide an audio interface between a user and device 200. Audio circuitry 210 receives audio data from peripherals interface 218, converts the audio data to an electrical signal, and transmits the electrical signal to speaker 211. Speaker 211 converts the electrical signal to human-audible sound waves. Audio circuitry 210 also receives electrical signals converted by microphone 213 from sound waves. Audio circuitry 210 converts the electrical signal to audio data and transmits the audio data to peripherals interface 218 for processing. Audio data are retrieved from and/or transmitted to memory 202 and/or RF circuitry 208 by peripherals interface 218. In some embodiments, audio circuitry 210 also includes a headset jack (e.g., 312, FIG. 3). The headset jack provides an interface between audio circuitry 210 and removable audio input/output peripherals, such as output-only headphones or a headset with both output (e.g., a headphone for one or both ears) and input (e.g., a microphone).

I/O subsystem 206 couples input/output peripherals on device 200, such as touch screen 212 and other input control devices 216, to peripherals interface 218. I/O subsystem 206 optionally includes display controller 256, optical sensor controller 258, intensity sensor controller 259, haptic feedback controller 261, and one or more input controllers 260 for other input or control devices. The one or more input controllers 260 receive/send electrical signals from/to other input control devices 216. The other input control devices 216 optionally include physical buttons (e.g., push buttons, rocker buttons, etc.), dials, slider switches, joysticks, click wheels, and so forth. In some alternate embodiments, input controller(s) 260 are, optionally, coupled to any (or none) of the following: a keyboard, an infrared port, a USB port, and a pointer device such as a mouse. The one or more buttons (e.g., 308, FIG. 3) optionally include an up/down button for volume control of speaker 211 and/or microphone 213. The one or more buttons optionally include a push button (e.g., 306, FIG. 3).

A quick press of the push button disengages a lock of touch screen 212 or begin a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657 849. A longer press of the push button (e.g., 306) turns power to device 200 on or off. The user is able to customize a functionality of one or more of the buttons. Touch screen 212 is used to implement virtual or soft buttons and one or more soft keyboards.

Touch-sensitive display 212 provides an input interface and an output interface between the device and a user. Display controller 256 receives and/or sends electrical signals from/to touch screen 212. Touch screen 212 displays visual output to the user. The visual output includes graphics, text, icons, video, and any combination thereof (collectively termed "graphics"). In some embodiments, some or all of the visual output correspond to user-interface objects.

Touch screen 212 has a touch-sensitive surface, sensor, or set of sensors that accepts input from the user based on haptic and/or tactile contact. Touch screen 212 and display controller 256 (along with any associated modules and/or sets of instructions in memory 202) detect contact (and any movement or breaking of the contact) on touch screen 212 and convert the detected contact into interaction with user-interface objects (e.g., one or more soft keys, icons, web pages, or images) that are displayed on touch screen 212. In an exemplary embodiment, a point of contact between touch screen 212 and the user corresponds to a finger of the user.

Touch screen 212 uses LCD (liquid crystal display) technology, LPD (light emitting polymer display) technology, or LED (light emitting diode) technology, although other display technologies may be used in other embodiments. Touch screen 212 and display controller 256 detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 212. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 212 is analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1. However, touch screen 212 displays visual output from device 200, whereas touch-sensitive touchpads do not provide visual output.

A touch-sensitive display in some embodiments of touch screen 212 is as described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006.

Touch screen 212 has, for example, a video resolution in excess of 100 dpi. In some embodiments, the touch screen has a video resolution of approximately 160 dpi. The user makes contact with touch screen 212 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 200 includes a touchpad (not shown) for activating or deactivating particular functions. In some embodiments, the touchpad is a touch-sensitive area of the device that, unlike the touch screen, does not display visual output. The touchpad is a touch-sensitive surface that is separate from touch screen 212 or an extension of the touch-sensitive surface formed by the touch screen.

Device 200 also includes power system 262 for powering the various components. Power system 262 includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 200 also includes one or more optical sensors 264. FIG. 2A shows an optical sensor coupled to optical sensor controller 258 in I/O subsystem 206. Optical sensor 264 includes charge-coupled device (CCD) or complementary metal-oxide semiconductor (CMOS) phototransistors. Optical sensor 264 receives light from the environment, projected through one or more lenses, and converts the light to data representing an image. In conjunction with imaging module 243 (also called a camera module), optical sensor 264 captures still images or video. In some embodiments, an optical sensor is located on the back of device 200, opposite touch screen display 212 on the front of the device so that the touch screen display is used as a viewfinder for still and/or video image acquisition. In some embodiments, an optical sensor is located on the front of the device so that the user's image is obtained for video conferencing while the user views the other video conference participants on the touch screen display. In some embodiments, the position of optical sensor 264 can be changed by the user (e.g., by rotating the lens and the sensor in the device housing) so that a single optical sensor 264 is used along with the touch screen display for both video conferencing and still and/or video image acquisition.

Device 200 optionally also includes one or more contact intensity sensors 265. FIG. 2A shows a contact intensity sensor coupled to intensity sensor controller 259 in I/O subsystem 206. Contact intensity sensor 265 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 265 receives contact intensity information (e.g., pressure information or a proxy for pressure information) from the environment. In some embodiments, at least one contact intensity sensor is collocated with, or proximate to, a touch-sensitive surface (e.g., touch-sensitive display system 212). In some embodiments, at least one contact intensity sensor is located on the back of device 200, opposite touch screen display 212, which is located on the front of device 200.

Device 200 also includes one or more proximity sensors 266. FIG. 2A shows proximity sensor 266 coupled to peripherals interface 218. Alternately, proximity sensor 266 is coupled to input controller 260 in I/O subsystem 206. Proximity sensor 266 is performed as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals". In some embodiments, the proximity sensor turns off and disables touch screen 212 when the multifunction device is placed near the user's ear (e.g., when the user is making a phone call).

Device 200 optionally also includes one or more tactile output generators 267. FIG. 2A shows a tactile output generator coupled to haptic feedback controller 261 in I/O subsystem 206. Tactile output generator 267 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 265 receives tactile feedback generation instructions from haptic feedback module 233 and generates tactile outputs on device 200 that are capable of being sensed by a user of device 200. In some embodiments, at least one tactile output generator is collocated with, or proximate to, a touch-sensitive surface (e.g., touch-sensitive display system 212) and, optionally, generates a tactile output by moving the touch-sensitive surface vertically (e.g., in/out of a surface of device 200) or laterally (e.g., back and forth in the same plane as a surface of device 200). In some embodiments, at least one tactile output generator sensor is located on the back of device 200, opposite touch screen display 212, which is located on the front of device 200.

Device 200 also includes one or more accelerometers 268. FIG. 2A shows accelerometer 268 coupled to peripherals interface 218. Alternately, accelerometer 268 is coupled to an input controller 260 in I/O subsystem 206. Accelerometer 268 performs, for example, as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer". embodiments, information is displayed on the touch screen display in a portrait view or a landscape view based on an analysis of data received from the one or more accelerometers. Device 200 optionally includes, in addition to accelerometer(s) 268, a magnetometer (not shown) and a GPS (or GLONASS or other global navigation system) receiver (not shown) for obtaining information concerning the location and orientation (e.g., portrait or landscape) of device 200.

In some embodiments, the software components stored in memory 202 include operating system 226, communication module (or set of instructions) 228, contact/motion module (or set of instructions) 230, graphics module (or set of instructions) 232, text input module (or set of instructions) 234, Global Positioning System (GPS) module (or set of instructions) 235, Digital Assistant Client Module 229, and applications (or sets of instructions) 236. Further, memory 202 stores data and models, such as user data and models 231. Furthermore, in some embodiments, memory 202 (FIG. 2A) or 470 (FIG. 4) stores device/global internal state 257, as shown in FIGS. 2A and 4. Device/global internal state 257 includes one or more of: active application state, indicating which applications, if any, are currently active; display state, indicating what applications, views or other information occupy various regions of touch screen display 212; sensor state, including information obtained from the device's various sensors and input control devices 216; and location information concerning the device's location and/or attitude.

Operating system 226 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 228 facilitates communication with other devices over one or more external ports 224 and also includes various software components for handling data received by RF circuitry 208 and/or external port 224. External port 224 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Contact/motion module 230 optionally detects contact with touch screen 212 (in conjunction with display controller 256) and other touch-sensitive devices (e.g., a touchpad or physical click wheel). Contact/motion module 230 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 230 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 230 and display controller 256 detect contact on a touchpad.

In some embodiments, contact/motion module 230 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 200). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 230 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 232 includes various known software components for rendering and displaying graphics on touch screen 212 or other display, including components for changing the visual impact (e.g., brightness, transparency, saturation, contrast, or other visual property) of graphics that are displayed. As used herein, the term "graphics" includes any object that can be displayed to a user, including ,without limitation, text, web pages, icons (such as user-interface objects including soft keys), digital images, videos, animations, and the like.

In some embodiments, graphics module 232 stores data representing graphics to be used. Each graphic is, optionally, assigned a corresponding code. Graphics module 232 receives, from applications etc., one or more codes specifying graphics to be displayed along with, if necessary, coordinate data and other graphic property data, and then generates screen image data to output to display controller 256.

Haptic feedback module 233 includes various software components for generating instructions used by tactile output generator(s) 267 to produce tactile outputs at one or more locations on device 200 in response to user interactions with device 200.

Text input module 234, which is, in some examples, a component of graphics module 232, provides soft keyboards for entering text in various applications (e.g., contacts 237, email 240, IM 241, browser 247, and any other application that needs text input).

GPS module 235 determines the location of the device and provides this information for use in various applications (e.g., to telephone 238 for use in location-based dialing; to camera 243 as picture/video metadata; and to applications that provide location-based services such as weather widgets, local yellow page widgets, and map/navigation widgets).

Digital assistant client module 229 includes various client-side digital assistant instructions to provide the client-side functionalities of the digital assistant. For example, digital assistant client module 229 is capable of accepting voice input (e.g., speech input), text input, touch input, and/or gestural input through various user interfaces (e.g., microphone 213, accelerometer(s) 268, touch-sensitive display system 212, optical sensor(s) 229, other input control devices 216, etc.) of portable multifunction device 200. Digital assistant client module 229 is also capable of providing output in audio (e.g., speech output), visual, and/or tactile forms through various output interfaces (e.g., speaker 211, touch-sensitive display system 212, tactile output generator(s) 267, etc.) of portable multifunction device 200. For example, output is provided as voice, sound, alerts, text messages, menus, graphics, videos, animations, vibrations, and/or combinations of two or more of the above. During operation, digital assistant client module 229 communicates with DA server 106 using RF circuitry 208.

User data and models 231 include various data associated with the user (e.g., user-specific vocabulary data, user preference data, user-specified name pronunciations, data from the user's electronic address book, to-do lists, shopping lists, etc.) to provide the client-side functionalities of the digital assistant. Further, user data and models 231 include various models (e.g., speech recognition models, statistical language models, natural language processing models, ontology, task flow models, service models, etc.) for processing user input and determining user intent.

In some examples, digital assistant client module 229 utilizes the various sensors, subsystems, and peripheral devices of portable multifunction device 200 to gather additional information from the surrounding environment of the portable multifunction device 200 to establish a context associated with a user, the current user interaction, and/or the current user input. In some examples, digital assistant client module 229 provides the contextual information or a subset thereof with the user input to DA server 106 to help infer the user's intent. In some examples, the digital assistant also uses the contextual information to determine how to prepare and deliver outputs to the user. Contextual information is referred to as context data.

In some examples, the contextual information that accompanies the user input includes sensor information, e.g., lighting, ambient noise, ambient temperature, images or videos of the surrounding environment, etc. In some examples, the contextual information can also include the physical state of the device, e.g., device orientation, device location, device temperature, power level, speed, acceleration, motion patterns, cellular signals strength, etc. In some examples, information related to the software state of DA server 106, e.g., running processes, installed programs, past and present network activities, background services, error logs, resources usage, etc., and of portable multifunction device 200 is provided to DA server 106 as contextual information associated with a user input.

In some examples, the digital assistant client module 229 selectively provides information (e.g., user data 231) stored on the portable multifunction device 200 in response to requests from DA server 106. In some examples, digital assistant client module 229 also elicits additional input from the user via a natural language dialogue or other user interfaces upon request by DA server 106. Digital assistant client module 229 passes the additional input to DA server 106 to help DA server 106 in intent deduction and/or fulfillment of the user's intent expressed in the user request.

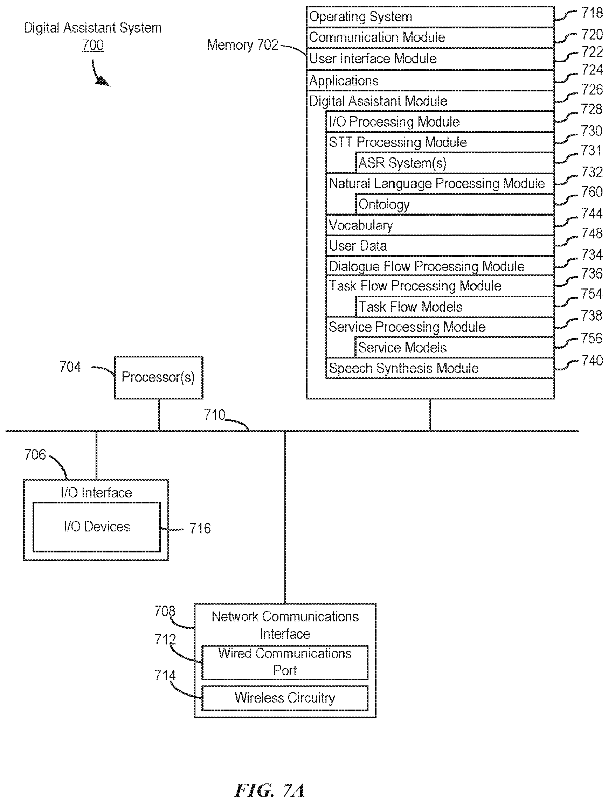

A more detailed description of a digital assistant is described below with reference to FIGs. 7A-C. It should be recognized that digital assistant client module 229 can include any number of the sub-modules of digital assistant module 726 described below.

Applications 236 include the following modules (or sets of instructions), or a subset or superset thereof:
- Contacts module 237 (sometimes called an address book or contact list);
- Telephone module 238;
- Video conference module 239;
- E-mail client module 240;
- Instant messaging (IM) module 241;
- Workout support module 242;
- Camera module 243 for still and/or video images;
- Image management module 244;
- Video player module;
- Music player module;
- Browser module 247;
- Calendar module 248;
- Widget modules 249, which includes, in some examples, one or more of: weather widget 249-1, stocks widget 249-2, calculator widget 249-3, alarm clock widget 249-4, dictionary widget 249-5, and other widgets obtained by the user, as well as user-created widgets 249-6;
- Widget creator module 250 for making user-created widgets 249-6;
- Search module 251;
- Video and music player module 252, which merges video player module and music player module;
- Notes module 253;
- Map module 254; and/or
- Online video module 255.

Examples of other applications 236 that are stored in memory 202 include other word processing applications, other image editing applications, drawing applications, presentation applications, JAVA-enabled applications, encryption, digital rights management, voice recognition, and voice replication.

In conjunction with touch screen 212, display controller 256, contact/motion module 230, graphics module 232, and text input module 234, contacts module 237 are used to manage an address book or contact list (e.g., stored in application internal state 292 of contacts module 237 in memory 202 or memory 470), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 238, video conference module 239, e-mail 240, or IM 241; and so forth.

In conjunction with RF circuitry 208, audio circuitry 210, speaker 211, microphone 213, touch screen 212, display controller 256, contact/motion module 230, graphics module 232, and text input module 234, telephone module 238 are used to enter a sequence of characters corresponding to a telephone number, access one or more telephone numbers in contacts module 237, modify a telephone number that has been entered, dial a respective telephone number, conduct a conversation, and disconnect or hang up when the conversation is completed. As noted above, the wireless communication uses any of a plurality of communications standards, protocols, and technologies.

In conjunction with RF circuitry 208, audio circuitry 210, speaker 211, microphone 213, touch screen 212, display controller 256, optical sensor 264, optical sensor controller 258, contact/motion module 230, graphics module 232, text input module 234, contacts module 237, and telephone module 238, video conference module 239 includes executable instructions to initiate, conduct, and terminate a video conference between a user and one or more other participants in accordance with user instructions.

In conjunction with RF circuitry 208, touch screen 212, display controller 256, contact/motion module 230, graphics module 232, and text input module 234, e-mail client module 240 includes executable instructions to create, send, receive, and manage e-mail in response to user instructions. In conjunction with image management module 244, e-mail client module 240 makes it very easy to create and send e-mails with still or video images taken with camera module 243.

In conjunction with RF circuitry 208, touch screen 212, display controller 256, contact/motion module 230, graphics module 232, and text input module 234, the instant messaging module 241 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 208, touch screen 212, display controller 256, contact/motion module 230, graphics module 232, text input module 234, GPS module 235, map module 254, and music player module, workout support module 242 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 212, display controller 256, optical sensor(s) 264, optical sensor controller 258, contact/motion module 230, graphics module 232, and image management module 244, camera module 243 includes executable instructions to capture still images or video (including a video stream) and store them into memory 202, modify characteristics of a still image or video, or delete a still image or video from memory 202.

In conjunction with touch screen 212, display controller 256, contact/motion module 230, graphics module 232, text input module 234, and camera module 243, image management module 244 includes executable instructions to arrange, modify (e.g., edit), or otherwise manipulate, label, delete, present (e.g., in a digital slide show or album), and store still and/or video images.

In conjunction with RF circuitry 208, touch screen 212, display controller 256, contact/motion module 230, graphics module 232, and text input module 234, browser module 247 includes executable instructions to browse the Internet in accordance with user instructions, including searching, linking to, receiving, and displaying web pages or portions thereof, as well as attachments and other files linked to web pages.

In conjunction with RF circuitry 208, touch screen 212, display controller 256, contact/motion module 230, graphics module 232, text input module 234, e-mail client module 240, and browser module 247, calendar module 248 includes executable instructions to create, display, modify, and store calendars and data associated with calendars (e.g., calendar entries, to-do lists, etc.) in accordance with user instructions.

In conjunction with RF circuitry 208, touch screen 212, display controller 256, contact/motion module 230, graphics module 232, text input module 234, and browser module 247, widget modules 249 are mini-applications that can be downloaded and used by a user (e.g., weather widget 249-1, stocks widget 249-2, calculator widget 249-3, alarm clock widget 249-4, and dictionary widget 249-5) or created by the user (e.g., user-created widget 249-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 208, touch screen 212, display controller 256, contact/motion module 230, graphics module 232, text input module 234, and browser module 247, the widget creator module 250 are used by a user to create widgets (e.g., turning a user-specified portion of a web page into a widget).

In conjunction with touch screen 212, display controller 256, contact/motion module 230, graphics module 232, and text input module 234, search module 251 includes executable instructions to search for text, music, sound, image, video, and/or other files in memory 202 that match one or more search criteria (e.g., one or more user-specified search terms) in accordance with user instructions.

In conjunction with touch screen 212, display controller 256, contact/motion module 230, graphics module 232, audio circuitry 210, speaker 211, RF circuitry 208, and browser module 247, video and music player module 252 includes executable instructions that allow the user to download and play back recorded music and other sound files stored in one or more file formats, such as MP3 or AAC files, and executable instructions to display, present, or otherwise play back videos (e.g., on touch screen 212 or on an external, connected display via external port 224). In some embodiments, device 200 optionally includes the functionality of an MP3 player, such as an iPod (trademark of Apple Inc.).

In conjunction with touch screen 212, display controller 256, contact/motion module 230, graphics module 232, and text input module 234, notes module 253 includes executable instructions to create and manage notes, to-do lists, and the like in accordance with user instructions.

In conjunction with RF circuitry 208, touch screen 212, display controller 256, contact/motion module 230, graphics module 232, text input module 234, GPS module 235, and browser module 247, map module 254 are used to receive, display, modify, and store maps and data associated with maps (e.g., driving directions, data on stores and other points of interest at or near a particular location, and other location-based data) in accordance with user instructions.

In conjunction with touch screen 212, display controller 256, contact/motion module 230, graphics module 232, audio circuitry 210, speaker 211, RF circuitry 208, text input module 234, e-mail client module 240, and browser module 247, online video module 255 includes instructions that allow the user to access, browse, receive (e.g., by streaming and/or download), play back (e.g., on the touch screen or on an external, connected display via external port 224), send an e-mail with a link to a particular online video, and otherwise manage online videos in one or more file formats, such as H.264. In some embodiments, instant messaging module 241, rather than e-mail client module 240, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs, procedures, or modules, and thus various subsets of these modules can be combined or otherwise rearranged in various embodiments. For example, video player module can be combined with music player module into a single module (e.g., video and music player module 252, FIG. 2A). In some embodiments, memory 202 stores a subset of the modules and data structures identified above. Furthermore, memory 202 stores additional modules and data structures not described above.

In some embodiments, device 200 is a device where operation of a predefined set of functions on the device is performed exclusively through a touch screen and/or a touchpad. By using a touch screen and/or a touchpad as the primary input control device for operation of device 200, the number of physical input control devices (such as push buttons, dials, and the like) on device 200 is reduced.

The predefined set of functions that are performed exclusively through a touch screen and/or a touchpad optionally include navigation between user interfaces. In some embodiments, the touchpad, when touched by the user, navigates device 200 to a main, home, or root menu from any user interface that is displayed on device 200. In such embodiments, a "menu button" is implemented using a touchpad. In some other embodiments, the menu button is a physical push button or other physical input control device instead of a touchpad.

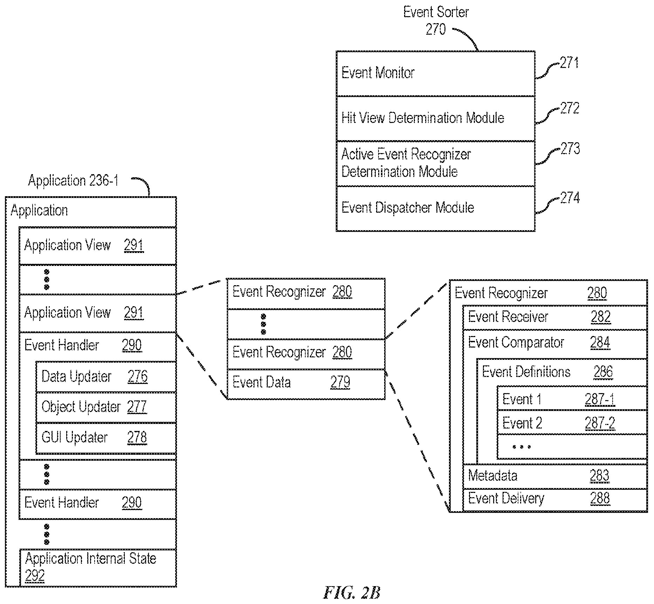

FIG. 2B is a block diagram illustrating exemplary components for event handling in accordance with some embodiments. In some embodiments, memory 202 (FIG. 2A) or 470 (FIG. 4) includes event sorter 270 (e.g., in operating system 226) and a respective application 236-1 (e.g., any of the aforementioned applications 237-251, 255, 480-490).

Event sorter 270 receives event information and determines the application 236-1 and application view 291 of application 236-1 to which to deliver the event information. Event sorter 270 includes event monitor 271 and event dispatcher module 274. In some embodiments, application 236-1 includes application internal state 292, which indicates the current application view(s) displayed on touch-sensitive display 212 when the application is active or executing. In some embodiments, device/global internal state 257 is used by event sorter 270 to determine which application(s) is (are) currently active, and application internal state 292 is used by event sorter 270 to determine application views 291 to which to deliver event information.

In some embodiments, application internal state 292 includes additional information, such as one or more of: resume information to be used when application 236-1 resumes execution, user interface state information that indicates information being displayed or that is ready for display by application 236-1, a state queue for enabling the user to go back to a prior state or view of application 236-1, and a redo/undo queue of previous actions taken by the user.

Event monitor 271 receives event information from peripherals interface 218. Event information includes information about a sub-event (e.g., a user touch on touch-sensitive display 212, as part of a multi-touch gesture). Peripherals interface 218 transmits information it receives from I/O subsystem 206 or a sensor, such as proximity sensor 266, accelerometer(s) 268, and/or microphone 213 (through audio circuitry 210). Information that peripherals interface 218 receives from I/O subsystem 206 includes information from touch-sensitive display 212 or a touch-sensitive surface.

In some embodiments, event monitor 271 sends requests to the peripherals interface 218 at predetermined intervals. In response, peripherals interface 218 transmits event information. In other embodiments, peripherals interface 218 transmits event information only when there is a significant event (e.g., receiving an input above a predetermined noise threshold and/or for more than a predetermined duration).

In some embodiments, event sorter 270 also includes a hit view determination module 272 and/or an active event recognizer determination module 273.

Hit view determination module 272 provides software procedures for determining where a sub-event has taken place within one or more views when touch-sensitive display 212 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected correspond to programmatic levels within a programmatic or view hierarchy of the application. For example, the lowest level view in which a touch is detected is called the hit view, and the set of events that are recognized as proper inputs is determined based, at least in part, on the hit view of the initial touch that begins a touch-based gesture.

Hit view determination module 272 receives information related to sub events of a touch-based gesture. When an application has multiple views organized in a hierarchy, hit view determination module 272 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 272, the hit view typically receives all sub-events related to the same touch or input source for which it was identified as the hit view.

Active event recognizer determination module 273 determines which view or views within a view hierarchy should receive a particular sequence of sub-events. In some embodiments, active event recognizer determination module 273 determines that only the hit view should receive a particular sequence of sub-events. In other embodiments, active event recognizer determination module 273 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 274 dispatches the event information to an event recognizer (e.g., event recognizer 280). In embodiments including active event recognizer determination module 273, event dispatcher module 274 delivers the event information to an event recognizer determined by active event recognizer determination module 273. In some embodiments, event dispatcher module 274 stores in an event queue the event information, which is retrieved by a respective event receiver 282.

In some embodiments, operating system 226 includes event sorter 270. Alternatively, application 236-1 includes event sorter 270. In yet other embodiments, event sorter 270 is a stand-alone module, or a part of another module stored in memory 202, such as contact/motion module 230.

In some embodiments, application 236-1 includes a plurality of event handlers 290 and one or more application views 291, each of which includes instructions for handling touch events that occur within a respective view of the application's user interface. Each application view 291 of the application 236-1 includes one or more event recognizers 280. Typically, a respective application view 291 includes a plurality of event recognizers 280. In other embodiments, one or more of event recognizers 280 are part of a separate module, such as a user interface kit (not shown) or a higher level object from which application 236-1 inherits methods and other properties. In some embodiments, a respective event handler 290 includes one or more of: data updater 276, object updater 277, GUI updater 278, and/or event data 279 received from event sorter 270. Event handler 290 utilizes or calls data updater 276, object updater 277, or GUI updater 278 to update the application internal state 292. Alternatively, one or more of the application views 291 include one or more respective event handlers 290. Also, in some embodiments, one or more of data updater 276, object updater 277, and GUI updater 278 are included in a respective application view 291.

A respective event recognizer 280 receives event information (e.g., event data 279) from event sorter 270 and identifies an event from the event information. Event recognizer 280 includes event receiver 282 and event comparator 284. In some embodiments, event recognizer 280 also includes at least a subset of: metadata 283, and event delivery instructions 288 (which include sub-event delivery instructions).

Event receiver 282 receives event information from event sorter 270. The event information includes information about a sub-event, for example, a touch or a touch movement. Depending on the sub-event, the event information also includes additional information, such as location of the sub-event. When the sub-event concerns motion of a touch, the event information also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 284 compares the event information to predefined event or sub-event definitions and, based on the comparison, determines an event or sub event, or determines or updates the state of an event or sub-event. In some embodiments, event comparator 284 includes event definitions 286. Event definitions 286 contain definitions of events (e.g., predefined sequences of sub-events), for example, event 1 (287-1), event 2 (287-2), and others. In some embodiments, sub-events in an event (287) include, for example, touch begin, touch end, touch movement, touch cancellation, and multiple touching. In one example, the definition for event 1 (287-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (287-2) is a dragging on a displayed object. The dragging, for example, comprises a touch (or contact) on the displayed object for a predetermined phase, a movement of the touch across touch-sensitive display 212, and liftoff of the touch (touch end). In some embodiments, the event also includes information for one or more associated event handlers 290.

In some embodiments, event definition 287 includes a definition of an event for a respective user-interface object. In some embodiments, event comparator 284 performs a hit test to determine which user-interface object is associated with a sub-event. For example, in an application view in which three user-interface objects are displayed on touch-sensitive display 212, when a touch is detected on touch-sensitive display 212, event comparator 284 performs a hit test to determine which of the three user-interface objects is associated with the touch (sub-event). If each displayed object is associated with a respective event handler 290, the event comparator uses the result of the hit test to determine which event handler 290 should be activated. For example, event comparator 284 selects an event handler associated with the sub-event and the object triggering the hit test.

In some embodiments, the definition for a respective event (287) also includes delayed actions that delay delivery of the event information until after it has been determined whether the sequence of sub-events does or does not correspond to the event recognizer's event type.

When a respective event recognizer 280 determines that the series of sub-events do not match any of the events in event definitions 286, the respective event recognizer 280 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 280 includes metadata 283 with configurable properties, flags, and/or lists that indicate how the event delivery system should perform sub-event delivery to actively involved event recognizers. In some embodiments, metadata 283 includes configurable properties, flags, and/or lists that indicate how event recognizers interact, or are enabled to interact, with one another. In some embodiments, metadata 283 includes configurable properties, flags, and/or lists that indicate whether sub-events are delivered to varying levels in the view or programmatic hierarchy.

In some embodiments, a respective event recognizer 280 activates event handler 290 associated with an event when one or more particular sub-events of an event are recognized. In some embodiments, a respective event recognizer 280 delivers event information associated with the event to event handler 290. Activating an event handler 290 is distinct from sending (and deferred sending) sub-events to a respective hit view. In some embodiments, event recognizer 280 throws a flag associated with the recognized event, and event handler 290 associated with the flag catches the flag and performs a predefined process.

In some embodiments, event delivery instructions 288 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 276 creates and updates data used in application 236-1. For example, data updater 276 updates the telephone number used in contacts module 237, or stores a video file used in video player module. In some embodiments, object updater 277 creates and updates objects used in application 236-1. For example, object updater 277 creates a new user-interface object or updates the position of a user-interface object. GUI updater 278 updates the GUI. For example, GUI updater 278 prepares display information and sends it to graphics module 232 for display on a touch-sensitive display.

In some embodiments, event handler(s) 290 includes or has access to data updater 276, object updater 277, and GUI updater 278. In some embodiments, data updater 276, object updater 277, and GUI updater 278 are included in a single module of a respective application 236-1 or application view 291. In other embodiments, they are included in two or more software modules.

It shall be understood that the foregoing discussion regarding event handling of user touches on touch-sensitive displays also applies to other forms of user inputs to operate multifunction devices 200 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 3 illustrates a portable multifunction device 200 having a touch screen 212 in accordance with some embodiments. The touch screen optionally displays one or more graphics within user interface (UI) 300. In this embodiment, as well as others described below, a user is enabled to select one or more of the graphics by making a gesture on the graphics, for example, with one or more fingers 302 (not drawn to scale in the figure) or one or more styluses 303 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 200. In some implementations or circumstances, inadvertent contact with a graphic does not select the graphic. For example, a swipe gesture that sweeps over an application icon optionally does not select the corresponding application when the gesture corresponding to selection is a tap.

Device 200 also includes one or more physical buttons, such as "home" or menu button 304. As described previously, menu button 304 is used to navigate to any application 236 in a set of applications that is executed on device 200. Alternatively, in some embodiments, the menu button is implemented as a soft key in a GUI displayed on touch screen 212.

In one embodiment, device 200 includes touch screen 212, menu button 304, push button 306 for powering the device on/off and locking the device, volume adjustment button(s) 308, subscriber identity module (SIM) card slot 310, headset jack 312, and docking/charging external port 224. Push button 306 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 200 also accepts verbal input for activation or deactivation of some functions through microphone 213. Device 200 also, optionally, includes one or more contact intensity sensors 265 for detecting intensity of contacts on touch screen 212 and/or one or more tactile output generators 267 for generating tactile outputs for a user of device 200.

FIG. 4 is a block diagram of an exemplary multifunction device with a display and a touch-sensitive surface in accordance with some embodiments. Device 400 need not be portable. In some embodiments, device 400 is a laptop computer, a desktop computer, a tablet computer, a multimedia player device, a navigation device, an educational device (such as a child's learning toy), a gaming system, or a control device (e.g., a home or industrial controller). Device 400 typically includes one or more processing units (CPUs) 410, one or more network or other communications interfaces 460, memory 470, and one or more communication buses 420 for interconnecting these components. Communication buses 420 optionally include circuitry (sometimes called a chipset) that interconnects and controls communications between system components. Device 400 includes input/output (I/O) interface 430 comprising display 440, which is typically a touch screen display. I/O interface 430 also optionally includes a keyboard and/or mouse (or other pointing device) 450 and touchpad 455, tactile output generator 457 for generating tactile outputs on device 400 (e.g., similar to tactile output generator(s) 267 described above with reference to FIG. 2A), sensors 459 (e.g., optical, acceleration, proximity, touch-sensitive, and/or contact intensity sensors similar to contact intensity sensor(s) 265 described above with reference to FIG. 2A). Memory 470 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 470 optionally includes one or more storage devices remotely located from CPU(s) 410. In some embodiments, memory 470 stores programs, modules, and data structures analogous to the programs, modules, and data structures stored in memory 202 of portable multifunction device 200 (FIG. 2A), or a subset thereof. Furthermore, memory 470 optionally stores additional programs, modules, and data structures not present in memory 202 of portable multifunction device 200. For example, memory 470 of device 400 optionally stores drawing module 480, presentation module 482, word processing module 484, website creation module 486, disk authoring module 488, and/or spreadsheet module 490, while memory 202 of portable multifunction device 200 (FIG. 2A) optionally does not store these modules.

Each of the above-identified elements in FIG. 4 is, in some examples, stored in one or more of the previously mentioned memory devices. Each of the above-identified modules corresponds to a set of instructions for performing a function described above. The above-identified modules or programs (e.g., sets of instructions) need not be implemented as separate software programs, procedures, or modules, and thus various subsets of these modules are combined or otherwise rearranged in various embodiments. In some embodiments, memory 470 stores a subset of the modules and data structures identified above. Furthermore, memory 470 stores additional modules and data structures not described above.

Attention is now directed towards embodiments of user interfaces that can be implemented on, for example, portable multifunction device 200.

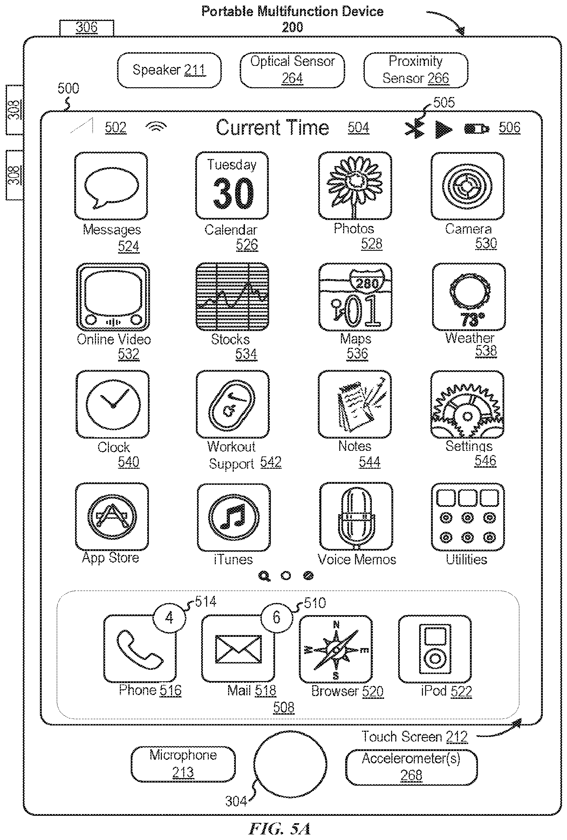

FIG. 5A illustrates an exemplary user interface for a menu of applications on portable multifunction device 200 in accordance with some embodiments. Similar user interfaces are implemented on device 400. In some embodiments, user interface 500 includes the following elements, or a subset or superset thereof:

Signal strength indicator(s) 502 for wireless communication(s), such as cellular and Wi-Fi signals;
- Time 504;
- Bluetooth indicator 505;
- Battery status indicator 506;
- Tray 508 with icons for frequently used applications, such as:
   ∘ Icon 516 for telephone module 238, labeled "Phone," which optionally includes an indicator 514 of the number of missed calls or voicemail messages;
   ∘ Icon 518 for e-mail client module 240, labeled "Mail," which optionally includes an indicator 510 of the number of unread e-mails;
   ∘ Icon 520 for browser module 247, labeled "Browser;" and
   ∘ Icon 522 for video and music player module 252, also referred to as iPod (trademark of Apple Inc.) module 252, labeled "iPod;" and
- Icons for other applications, such as:
   ∘ Icon 524 for IM module 241, labeled "Messages;"
   ∘ Icon 526 for calendar module 248, labeled "Calendar;"
   ∘ Icon 528 for image management module 244, labeled "Photos;"
   ∘ Icon 530 for camera module 243, labeled "Camera;"
   ∘ Icon 532 for online video module 255, labeled "Online Video;"
   ∘ Icon 534 for stocks widget 249-2, labeled "Stocks;"
   ∘ Icon 536 for map module 254, labeled "Maps;"
   ∘ Icon 538 for weather widget 249-1, labeled "Weather;"
   ∘ Icon 540 for alarm clock widget 249-4, labeled "Clock;"
   ∘ Icon 542 for workout support module 242, labeled "Workout Support;"
   ∘ Icon 544 for notes module 253, labeled "Notes;" and
   ∘ Icon 546 for a settings application or module, labeled "Settings," which provides access to settings for device 200 and its various applications 236.

It should be noted that the icon labels illustrated in FIG. 5A are merely exemplary. For example, icon 522 for video and music player module 252 is optionally labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

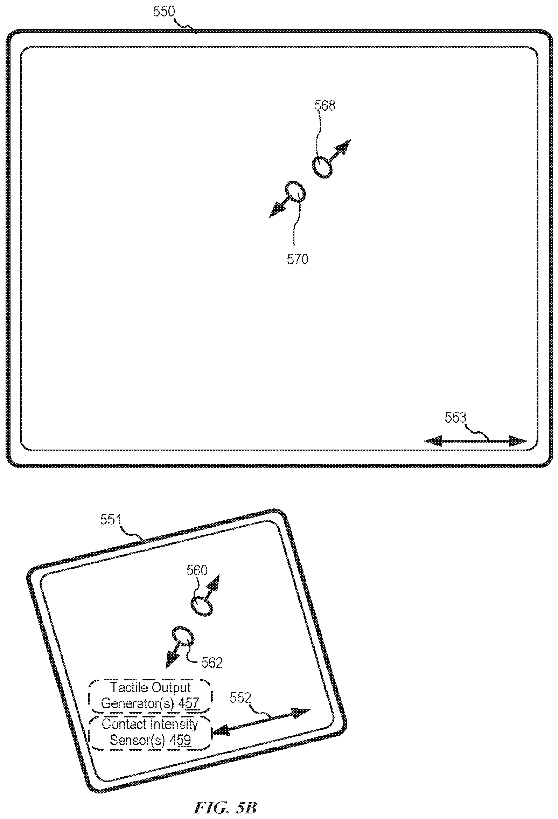

FIG. 5B illustrates an exemplary user interface on a device (e.g., device 400, FIG. 4) with a touch-sensitive surface 551 (e.g., a tablet or touchpad 455, FIG. 4) that is separate from the display 550 (e.g., touch screen display 212). Device 400 also, optionally, includes one or more contact intensity sensors (e.g., one or more of sensors 457) for detecting intensity of contacts on touch-sensitive surface 551 and/or one or more tactile output generators 459 for generating tactile outputs for a user of device 400.

Although some of the examples which follow will be given with reference to inputs on touch screen display 212 (where the touch-sensitive surface and the display are combined), in some embodiments, the device detects inputs on a touch-sensitive surface that is separate from the display, as shown in FIG. 5B. In some embodiments, the touch-sensitive surface (e.g., 551 in FIG. 5B) has a primary axis (e.g., 552 in FIG. 5B) that corresponds to a primary axis (e.g., 553 in FIG. 5B) on the display (e.g., 550). In accordance with these embodiments, the device detects contacts (e.g., 560 and 562 in FIG. 5B) with the touch-sensitive surface 551 at locations that correspond to respective locations on the display (e.g., in FIG. 5B, 560 corresponds to 568 and 562 corresponds to 570). In this way, user inputs (e.g., contacts 560 and 562, and movements thereof) detected by the device on the touch-sensitive surface (e.g., 551 in FIG. 5B) are used by the device to manipulate the user interface on the display (e.g., 550 in FIG. 5B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

FIG. 6A illustrates exemplary personal electronic device 600. Device 600 includes body 602. In some embodiments, device 600 includes some or all of the features described with respect to devices 200 and 400 (e.g., FIGS. 2A-4B). In some embodiments, device 600 has touch-sensitive display screen 604, hereafter touch screen 604. Alternatively, or in addition to touch screen 604, device 600 has a display and a touch-sensitive surface. As with devices 200 and 400, in some embodiments, touch screen 604 (or the touch-sensitive surface) has one or more intensity sensors for detecting intensity of contacts (e.g., touches) being applied. The one or more intensity sensors of touch screen 604 (or the touch-sensitive surface) provide output data that represents the intensity of touches. The user interface of device 600 responds to touches based on their intensity, meaning that touches of different intensities can invoke different user interface operations on device 600.

Techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, and International Patent Application Serial No. PCT/US2013/069483, titled "Device, Method, and Graphical User Interface for Transitioning Between Touch Input to Display Output Relationships," filed November 11, 2013.

In some embodiments, device 600 has one or more input mechanisms 606 and 608. Input mechanisms 606 and 608, if included, are physical. Examples of physical input mechanisms include push buttons and rotatable mechanisms. In some embodiments, device 600 has one or more attachment mechanisms. Such attachment mechanisms, if included, can permit attachment of device 600 with, for example, hats, eyewear, earrings, necklaces, shirts, jackets, bracelets, watch straps, chains, trousers, belts, shoes, purses, backpacks, and so forth. These attachment mechanisms permit device 600 to be worn by a user.

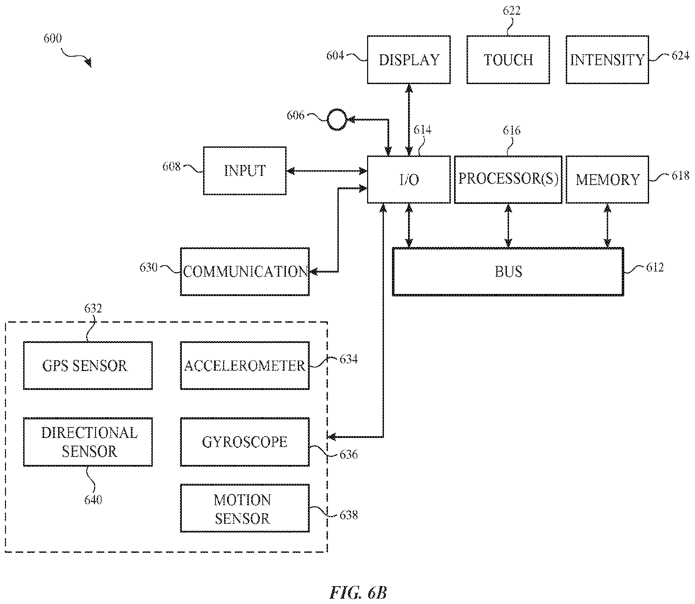

FIG. 6B depicts exemplary personal electronic device 600. In some embodiments, device 600 includes some or all of the components described with respect to FIGS. 2A, 2B, and 4. Device 600 has bus 612 that operatively couples I/O section 614 with one or more computer processors 616 and memory 618. I/O section 614 is connected to display 604, which can have touch-sensitive component 622 and, optionally, touch-intensity sensitive component 624. In addition, I/O section 614 is connected with communication unit 630 for receiving application and operating system data, using Wi-Fi, Bluetooth, near field communication (NFC), cellular, and/or other wireless communication techniques. Device 600 includes input mechanisms 606 and/or 608. Input mechanism 606 is a rotatable input device or a depressible and rotatable input device, for example. Input mechanism 608 is a button, in some examples.

Input mechanism 608 is a microphone, in some examples. Personal electronic device 600 includes, for example, various sensors, such as GPS sensor 632, accelerometer 634, directional sensor 640 (e.g., compass), gyroscope 636, motion sensor 638, and/or a combination thereof, all of which are operatively connected to I/O section 614.

Memory 618 of personal electronic device 600 is a non-transitory computer-readable storage medium, for storing computer-executable instructions, which, when executed by one or more computer processors 616, for example, cause the computer processors to perform the techniques and processes described below. The computer-executable instructions, for example, are also stored and/or transported within any non-transitory computer-readable storage medium for use by or in connection with an instruction execution system, apparatus, or device, such as a computer-based system, processor-containing system, or other system that can fetch the instructions from the instruction execution system, apparatus, or device and execute the instructions. Personal electronic device 600 is not limited to the components and configuration of FIG. 6B, but can include other or additional components in multiple configurations.

As used here, the term "affordance" refers to a user-interactive graphical user interface object that is, for example, displayed on the display screen of devices 200, 400, 600, 810A-C, 820, 830, 840, 1182, 1186, 1880, and/or 1882 (FIGS. 2, 4, 6, 8A-8B, 9A-9C, 10A-10C, 11A-11D, 12A-12C, 13A-13B, 14, 15A-15G, and 18A-18E). For example, an image (e.g., icon), a button, and text (e.g., hyperlink) each constitutes an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 455 in FIG. 4 or touch-sensitive surface 551 in FIG. 5B) while the cursor is over a particular user interface element (e.g., a button, window, slider or other user interface element), the particular user interface element is adjusted in accordance with the detected input. In some implementations that include a touch screen display (e.g., touch-sensitive display system 212 in FIG. 2A or touch screen 212 in FIG. 5A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation) rather than being used to determine whether to perform a first operation or a second operation.

In some embodiments, a portion of a gesture is identified for purposes of determining a characteristic intensity. For example, a touch-sensitive surface receives a continuous swipe contact transitioning from a start location and reaching an end location, at which point the intensity of the contact increases. In this example, the characteristic intensity of the contact at the end location is based on only a portion of the continuous swipe contact, and not the entire swipe contact (e.g., only the portion of the swipe contact at the end location). In some embodiments, a smoothing algorithm is applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

The intensity of a contact on the touch-sensitive surface is characterized relative to one or more intensity thresholds, such as a contact-detection intensity threshold, a light press intensity threshold, a deep press intensity threshold, and/or one or more other intensity thresholds. In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

An increase of characteristic intensity of the contact from an intensity below the light press intensity threshold to an intensity between the light press intensity threshold and the deep press intensity threshold is sometimes referred to as a "light press" input. An increase of characteristic intensity of the contact from an intensity below the deep press intensity threshold to an intensity above the deep press intensity threshold is sometimes referred to as a "deep press" input. An increase of characteristic intensity of the contact from an intensity below the contact-detection intensity threshold to an intensity between the contact-detection intensity threshold and the light press intensity threshold is sometimes referred to as detecting the contact on the touch-surface. A decrease of characteristic intensity of the contact from an intensity above the contact-detection intensity threshold to an intensity below the contact-detection intensity threshold is sometimes referred to as detecting liftoff of the contact from the touch-surface. In some embodiments, the contact-detection intensity threshold is zero. In some embodiments, the contact-detection intensity threshold is greater than zero.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90%, or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the descriptions of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

### 3. Digital Assistant System

FIG. 7A illustrates a block diagram of digital assistant system 700 in accordance with various examples. In some examples, digital assistant system 700 is implemented on a standalone computer system. In some examples, digital assistant system 700 is distributed across multiple computers. In some examples, some of the modules and functions of the digital assistant are divided into a server portion and a client portion, where the client portion resides on one or more user devices (e.g., devices 104, 122, 200, 400, 600, 810A-C, 830, 840, 1182, 1186, 1880, and/or 1882) and communicates with the server portion (e.g., server system 108) through one or more networks, e.g., as shown in FIG. 1. In some examples, digital assistant system 700 is an implementation of server system 108 (and/or DA server 106) shown in FIG. 1. It should be noted that digital assistant system 700 is only one example of a digital assistant system, and that digital assistant system 700 can have more or fewer components than shown, can combine two or more components, or can have a different configuration or arrangement of the components. The various components shown in FIG. 7A are implemented in hardware, software instructions for execution by one or more processors, firmware, including one or more signal processing and/or application specific integrated circuits, or a combination thereof.

Digital assistant system 700 includes memory 702, one or more processors 704, input/output (I/O) interface 706, and network communications interface 708. These components can communicate with one another over one or more communication buses or signal lines 710.

In some examples, memory 702 includes a non-transitory computer-readable medium, such as high-speed random access memory and/or a non-volatile computer-readable storage medium (e.g., one or more magnetic disk storage devices, flash memory devices, or other non-volatile solid-state memory devices).

In some examples, I/O interface 706 couples input/output devices 716 of digital assistant system 700, such as displays, keyboards, touch screens, and microphones, to user interface module 722. I/O interface 706, in conjunction with user interface module 722, receives user inputs (e.g., voice input, keyboard inputs, touch inputs, etc.) and processes them accordingly. In some examples, e.g., when the digital assistant is implemented on a standalone user device, digital assistant system 700 includes any of the components and I/O communication interfaces described with respect to devices 200, 400, 600, 810A-C, 820, 830, 840, 1182, 1186, 1880, and/or 1882 in FIGS. 2, 4, 6A-6B, 8A-8B, 9A-9C, 10A-10C, 11A-11D, 12A-12C, 13A-13B, 14, 15A-15G, and 18A-18E, respectively. In some examples, digital assistant system 700 represents the server portion of a digital assistant implementation, and can interact with the user through a client-side portion residing on a user device (e.g., devices 104, 200, 400, 600, 810A-C, 830, 840, 1182, 1186, 1880, and/or 1882).

In some examples, the network communications interface 708 includes wired communication port(s) 712 and/or wireless transmission and reception circuitry 714. The wired communication port(s) receives and send communication signals via one or more wired interfaces, e.g., Ethernet, Universal Serial Bus (USB), FIREWIRE, etc. The wireless circuitry 714 receives and sends RF signals and/or optical signals from/to communications networks and other communications devices. The wireless communications use any of a plurality of communications standards, protocols, and technologies, such as GSM, EDGE, CDMA, TDMA, Bluetooth, Wi-Fi, VoIP, Wi-MAX, or any other suitable communication protocol. Network communications interface 708 enables communication between digital assistant system 700 with networks, such as the Internet, an intranet, and/or a wireless network, such as a cellular telephone network, a wireless local area network (LAN), and/or a metropolitan area network (MAN), and other devices.

In some examples, memory 702, or the computer-readable storage media of memory 702, stores programs, modules, instructions, and data structures including all or a subset of: operating system 718, communications module 720, user interface module 722, one or more applications 724, and digital assistant module 726. In particular, memory 702, or the computer-readable storage media of memory 702, stores instructions for performing the processes described below. One or more processors 704 execute these programs, modules, and instructions, and reads/writes from/to the data structures.

Operating system 718 (e.g., Darwin, RTXC, LINUX, UNIX, iOS, OS X, WINDOWS, or an embedded operating system such as VxWorks) includes various software components and/or drivers for controlling and managing general system tasks (e.g., memory management, storage device control, power management, etc.) and facilitates communications between various hardware, firmware, and software components.

Communications module 720 facilitates communications between digital assistant system 700 with other devices over network communications interface 708. For example, communications module 720 communicates with RF circuitry 208 of electronic devices such as devices 200, 400, and 600 shown in FIG. 2A, 4, 6A-B, respectively. Communications module 720 also includes various components for handling data received by wireless circuitry 714 and/or wired communications port 712.

User interface module 722 receives commands and/or inputs from a user via I/O interface 706 (e.g., from a keyboard, touch screen, pointing device, controller, and/or microphone), and generate user interface objects on a display. User interface module 722 also prepares and delivers outputs (e.g., speech, sound, animation, text, icons, vibrations, haptic feedback, light, etc.) to the user via the I/O interface 706 (e.g., through displays, audio channels, speakers, touch-pads, etc.).

Applications 724 include programs and/or modules that are configured to be executed by one or more processors 704. For example, if the digital assistant system is implemented on a standalone user device, applications 724 include user applications, such as games, a calendar application, a navigation application, or an email application. If digital assistant system 700 is implemented on a server, applications 724 include resource management applications, diagnostic applications, or scheduling applications, for example.

Memory 702 also stores digital assistant module 726 (or the server portion of a digital assistant). In some examples, digital assistant module 726 includes the following sub-modules, or a subset or superset thereof: input/output processing module 728, speech-to-text (STT) processing module 730, natural language processing module 732, dialogue flow processing module 734, task flow processing module 736, service processing module 738, and speech synthesis module 740. Each of these modules has access to one or more of the following systems or data and models of the digital assistant module 726, or a subset or superset thereof: ontology 760, vocabulary index 744, user data 748, task flow models 754, service models 756, and ASR systems.

In some examples, using the processing modules, data, and models implemented in digital assistant module 726, the digital assistant can perform at least some of the following: converting speech input into text; identifying a user's intent expressed in a natural language input received from the user; actively eliciting and obtaining information needed to fully infer the user's intent (e.g., by disambiguating words, games, intentions, etc.); determining the task flow for fulfilling the inferred intent; and executing the task flow to fulfill the inferred intent.

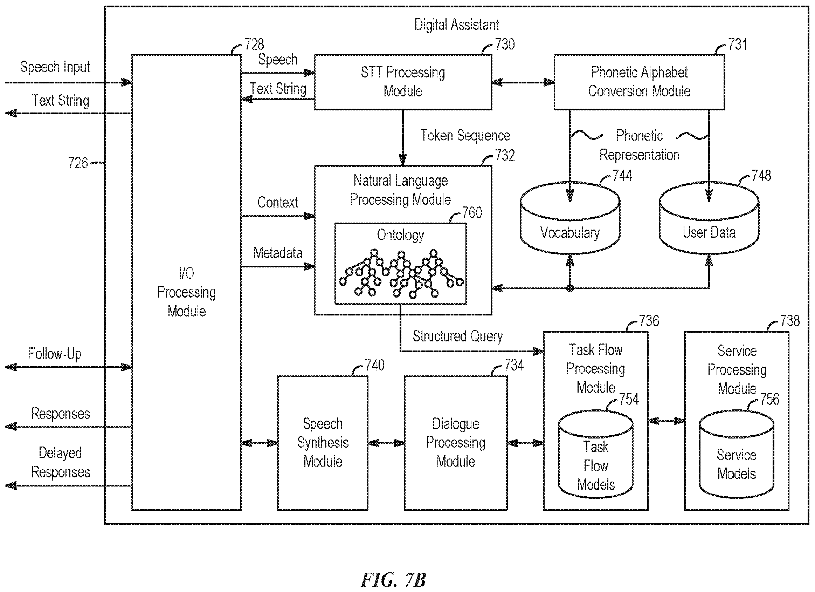

In some examples, as shown in FIG. 7B, I/O processing module 728 interacts with the user through I/O devices 716 in FIG. 7A or with a user device (e.g., devices 104, 200, 400, or 600) through network communications interface 708 in FIG. 7A to obtain user input (e.g., a speech input) and to provide responses (e.g., as speech outputs) to the user input. I/O processing module 728 optionally obtains contextual information associated with the user input from the user device, along with or shortly after the receipt of the user input. The contextual information includes user-specific data, vocabulary, and/or preferences relevant to the user input. In some examples, the contextual information also includes software and hardware states of the user device at the time the user request is received, and/or information related to the surrounding environment of the user at the time that the user request was received. In some examples, I/O processing module 728 also sends follow-up questions to, and receives answers from, the user regarding the user request. When a user request is received by I/O processing module 728 and the user request includes speech input, I/O processing module 728 forwards the speech input to STT processing module 730 (or speech recognizer) for speech-to-text conversions.

STT processing module 730 includes one or more ASR systems. The one or more ASR systems can process the speech input that is received through I/O processing module 728 to produce a recognition result. Each ASR system includes a front-end speech pre-processor. The front-end speech pre-processor extracts representative features from the speech input. For example, the front-end speech pre-processor performs a Fourier transform on the speech input to extract spectral features that characterize the speech input as a sequence of representative multi-dimensional vectors. Further, each ASR system includes one or more speech recognition models (e.g., acoustic models and/or language models) and implements one or more speech recognition engines. Examples of speech recognition models include Hidden Markov Models, Gaussian-Mixture Models, Deep Neural Network Models, n-gram language models, and other statistical models. Examples of speech recognition engines include the dynamic time warping based engines and weighted finite-state transducers (WFST) based engines. The one or more speech recognition models and the one or more speech recognition engines are used to process the extracted representative features of the front-end speech pre-processor to produce intermediate recognitions results (e.g., phonemes, phonemic strings, and sub-words), and ultimately, text recognition results (e.g., words, word strings, or sequence of tokens). In some examples, the speech input is processed at least partially by a third-party service or on the user's device (e.g., device 104, 200, 400, or 600) to produce the recognition result. Once STT processing module 730 produces recognition results containing a text string (e.g., words, or sequence of words, or sequence of tokens), the recognition result is passed to natural language processing module 732 for intent deduction. In some examples, STT processing module 730 produces multiple candidate text representations of the speech input. Each candidate text representation is a sequence of words or tokens corresponding to the speech input. In some examples, each candidate text representation is associated with a speech recognition confidence score. Based on the speech recognition confidence scores, STT processing module 730 ranks the candidate text representations and provides the n-best (e.g., n highest ranked) candidate text representation(s) to natural language processing module 732 for intent deduction, where n is a predetermined integer greater than zero. For example, in one example, only the highest ranked (n=1) candidate text representation is passed to natural language processing module 732 for intent deduction. In another example, the five highest ranked (n=5) candidate text representations are passed to natural language processing module 732 for intent deduction.

More details on the speech-to-text processing are described in U.S. Utility Application Serial No. 13/236,942 for "Consolidating Speech Recognition Results," filed on September 20, 2011.

In some examples, STT processing module 730 includes and/or accesses a vocabulary of recognizable words via phonetic alphabet conversion module 731. Each vocabulary word is associated with one or more candidate pronunciations of the word represented in a speech recognition phonetic alphabet. In particular, the vocabulary of recognizable words includes a word that is associated with a plurality of candidate pronunciations. For example, the vocabulary includes the word "tomato" that is associated with the candidate pronunciations of / 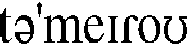 / and / 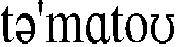 /. Further, vocabulary words are associated with custom candidate pronunciations that are based on previous speech inputs from the user. Such custom candidate pronunciations are stored in STT processing module 730 and are associated with a particular user via the user's profile on the device. In some examples, the candidate pronunciations for words are determined based on the spelling of the word and one or more linguistic and/or phonetic rules. In some examples, the candidate pronunciations are manually generated, e.g., based on known canonical pronunciations.

In some examples, the candidate pronunciations are ranked based on the commonness of the candidate pronunciation. For example, the candidate pronunciation / 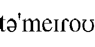 / is ranked higher than / 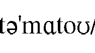 /, because the former is a more commonly used pronunciation (e.g., among all users, for users in a particular geographical region, or for any other appropriate subset of users). In some examples, candidate pronunciations are ranked based on whether the candidate pronunciation is a custom candidate pronunciation associated with the user. For example, custom candidate pronunciations are ranked higher than canonical candidate pronunciations. This can be useful for recognizing proper nouns having a unique pronunciation that deviates from canonical pronunciation. In some examples, candidate pronunciations are associated with one or more speech characteristics, such as geographic origin, nationality, or ethnicity. For example, the candidate pronunciation / 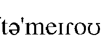 / is associated with the United States, whereas the candidate pronunciation / 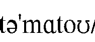 / is associated with Great Britain. Further, the rank of the candidate pronunciation is based on one or more characteristics (e.g., geographic origin, nationality, ethnicity, etc.) of the user stored in the user's profile on the device. For example, it can be determined from the user's profile that the user is associated with the United States. Based on the user being associated with the United States, the candidate pronunciation / 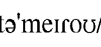 / (associated with the United States) is ranked higher than the candidate pronunciation / 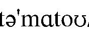 / (associated with Great Britain). In some examples, one of the ranked candidate pronunciations is selected as a predicted pronunciation (e.g., the most likely pronunciation).

When a speech input is received, STT processing module 730 is used to determine the phonemes corresponding to the speech input (e.g., using an acoustic model), and then attempt to determine words that match the phonemes (e.g., using a language model). For example, if STT processing module 730 first identifies the sequence of phonemes / 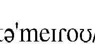 / corresponding to a portion of the speech input, it can then determine, based on vocabulary index 744, that this sequence corresponds to the word "tomato."

In some examples, STT processing module 730 uses approximate matching techniques to determine words in an utterance. Thus, for example, the STT processing module 730 determines that the sequence of phonemes / 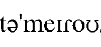 / corresponds to the word "tomato," even if that particular sequence of phonemes is not one of the candidate sequence of phonemes for that word.

Natural language processing module 732 ("natural language processor") of the digital assistant takes the n-best candidate text representation(s) ("word sequence(s)" or "token sequence(s)") generated by STT processing module 730, and attempts to associate each of the candidate text representations with one or more "actionable intents" recognized by the digital assistant. An "actionable intent" (or "user intent") represents a task that can be performed by the digital assistant, and can have an associated task flow implemented in task flow models 754. The associated task flow is a series of programmed actions and steps that the digital assistant takes in order to perform the task. The scope of a digital assistant's capabilities is dependent on the number and variety of task flows that have been implemented and stored in task flow models 754, or in other words, on the number and variety of "actionable intents" that the digital assistant recognizes. The effectiveness of the digital assistant, however, also dependents on the assistant's ability to infer the correct "actionable intent(s)" from the user request expressed in natural language.

In some examples, in addition to the sequence of words or tokens obtained from STT processing module 730, natural language processing module 732 also receives contextual information associated with the user request, e.g., from I/O processing module 728. The natural language processing module 732 optionally uses the contextual information to clarify, supplement, and/or further define the information contained in the candidate text representations received from STT processing module 730. The contextual information includes, for example, user preferences, hardware, and/or software states of the user device, sensor information collected before, during, or shortly after the user request, prior interactions (e.g., dialogue) between the digital assistant and the user, and the like. As described herein, contextual information is, in some examples, dynamic, and changes with time, location, content of the dialogue, and other factors.

In some examples, the natural language processing is based on, e.g., ontology 760. Ontology 760 is a hierarchical structure containing many nodes, each node representing either an "actionable intent" or a "property" relevant to one or more of the "actionable intents" or other "properties." As noted above, an "actionable intent" represents a task that the digital assistant is capable of performing, i.e., it is "actionable" or can be acted on. A "property" represents a parameter associated with an actionable intent or a sub-aspect of another property. A linkage between an actionable intent node and a property node in ontology 760 defines how a parameter represented by the property node pertains to the task represented by the actionable intent node.

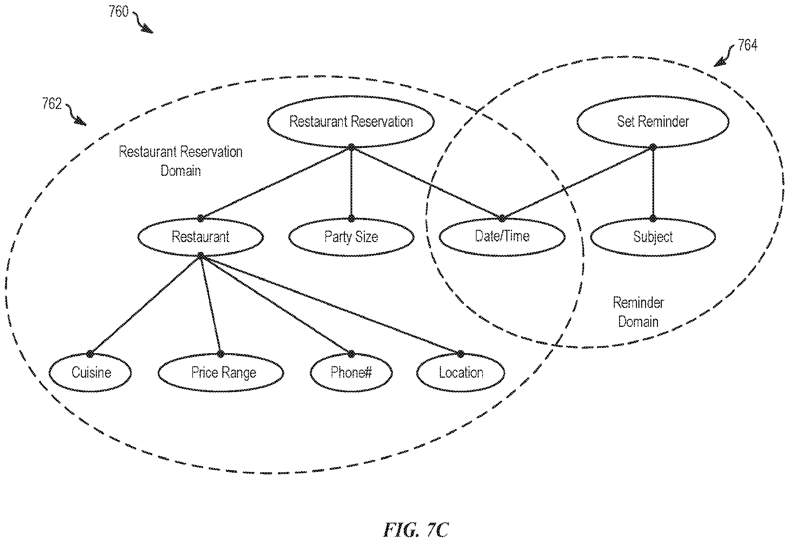

In some examples, ontology 760 is made up of actionable intent nodes and property nodes. Within ontology 760, each actionable intent node is linked to one or more property nodes either directly or through one or more intermediate property nodes. Similarly, each property node is linked to one or more actionable intent nodes either directly or through one or more intermediate property nodes. For example, as shown in FIG. 7C, ontology 760 includes a "restaurant reservation" node (i.e., an actionable intent node). Property nodes "restaurant," "date/time" (for the reservation), and "party size" are each directly linked to the actionable intent node (i.e., the "restaurant reservation" node).

In addition, property nodes "cuisine," "price range," "phone number," and "location" are sub-nodes of the property node "restaurant," and are each linked to the "restaurant reservation" node (i.e., the actionable intent node) through the intermediate property node "restaurant." For another example, as shown in FIG. 7C, ontology 760 also includes a "set reminder" node (i.e., another actionable intent node). Property nodes "date/time" (for setting the reminder) and "subject" (for the reminder) are each linked to the "set reminder" node. Since the property "date/time" is relevant to both the task of making a restaurant reservation and the task of setting a reminder, the property node "date/time" is linked to both the "restaurant reservation" node and the "set reminder" node in ontology 760.

An actionable intent node, along with its linked concept nodes, is described as a "domain." In the present discussion, each domain is associated with a respective actionable intent, and refers to the group of nodes (and the relationships there between) associated with the particular actionable intent. For example, ontology 760 shown in FIG. 7C includes an example of restaurant reservation domain 762 and an example of reminder domain 764 within ontology 760. The restaurant reservation domain includes the actionable intent node "restaurant reservation," property nodes "restaurant," "date/time," and "party size," and sub-property nodes "cuisine," "price range," "phone number," and "location." Reminder domain 764 includes the actionable intent node "set reminder," and property nodes "subject" and "date/time." In some examples, ontology 760 is made up of many domains. Each domain shares one or more property nodes with one or more other domains. For example, the "date/time" property node is associated with many different domains (e.g., a scheduling domain, a travel reservation domain, a movie ticket domain, etc.), in addition to restaurant reservation domain 762 and reminder domain 764.

While FIG. 7C illustrates two example domains within ontology 760, other domains include, for example, "find a movie," "initiate a phone call," "find directions," "schedule a meeting," "send a message," and "provide an answer to a question," "read a list," "providing navigation instructions," "provide instructions for a task" and so on. A "send a message" domain is associated with a "send a message" actionable intent node, and further includes property nodes such as "recipient(s)," "message type," and "message body." The property node "recipient" is further defined, for example, by the sub-property nodes such as "recipient name" and "message address."

In some examples, ontology 760 includes all the domains (and hence actionable intents) that the digital assistant is capable of understanding and acting upon. In some examples, ontology 760 is modified, such as by adding or removing entire domains or nodes, or by modifying relationships between the nodes within the ontology 760.

In some examples, nodes associated with multiple related actionable intents are clustered under a "super domain" in ontology 760. For example, a "travel" super-domain includes a cluster of property nodes and actionable intent nodes related to travel. The actionable intent nodes related to travel includes "airline reservation," "hotel reservation," "car rental," "get directions," "find points of interest," and so on. The actionable intent nodes under the same super domain (e.g., the "travel" super domain) have many property nodes in common. For example, the actionable intent nodes for "airline reservation," "hotel reservation," "car rental," "get directions," and "find points of interest" share one or more of the property nodes "start location," "destination," "departure date/time," "arrival date/time," and "party size."

In some examples, each node in ontology 760 is associated with a set of words and/or phrases that are relevant to the property or actionable intent represented by the node. The respective set of words and/or phrases associated with each node are the so-called "vocabulary" associated with the node. The respective set of words and/or phrases associated with each node are stored in vocabulary index 744 in association with the property or actionable intent represented by the node. For example, returning to FIG. 7B, the vocabulary associated with the node for the property of "restaurant" includes words such as "food," "drinks," "cuisine," "hungry," "eat," "pizza," "fast food," "meal," and so on. For another example, the vocabulary associated with the node for the actionable intent of "initiate a phone call" includes words and phrases such as "call," "phone," "dial," "ring," "call this number," "make a call to," and so on. The vocabulary index 744 optionally includes words and phrases in different languages.

Natural language processing module 732 receives the candidate text representations (e.g., text string(s) or token sequence(s)) from STT processing module 730, and for each candidate representation, determines what nodes are implicated by the words in the candidate text representation. In some examples, if a word or phrase in the candidate text representation is found to be associated with one or more nodes in ontology 760 (via vocabulary index 744), the word or phrase "triggers" or "activates" those nodes. Based on the quantity and/or relative importance of the activated nodes, natural language processing module 732 selects one of the actionable intents as the task that the user intended the digital assistant to perform. In some examples, the domain that has the most "triggered" nodes is selected. In some examples, the domain having the highest confidence value (e.g., based on the relative importance of its various triggered nodes) is selected. In some examples, the domain is selected based on a combination of the number and the importance of the triggered nodes. In some examples, additional factors are considered in selecting the node as well, such as whether the digital assistant has previously correctly interpreted a similar request from a user.

User data 748 includes user-specific information, such as user-specific vocabulary, user preferences, user address, user's default and secondary languages, user's contact list, and other short-term or long-term information for each user. In some examples, natural language processing module 732 uses the user-specific information to supplement the information contained in the user input to further define the user intent. For example, for a user request "invite my friends to my birthday party," natural language processing module 732 is able to access user data 748 to determine who the "friends" are and when and where the "birthday party" would be held, rather than requiring the user to provide such information explicitly in his/her request.

It should be recognized that in some examples, natural language processing module 732 is implemented using one or more machine learning mechanisms (e.g., neural networks). In particular, the one or more machine learning mechanisms are configured to receive a candidate text representation and contextual information associated with the candidate text representation. Based on the candidate text representation and the associated contextual information, the one or more machine learning mechanism are configured to determine intent confidence scores over a set of candidate actionable intents. Natural language processing module 732 can select one or more candidate actionable intents from the set of candidate actionable intents based on the determined intent confidence scores. In some examples, an ontology (e.g., ontology 760) is also used to select the one or more candidate actionable intents from the set of candidate actionable intents.

Other details of searching an ontology based on a token string is described in U.S. Utility Application Serial No. 12/341,743 for "Method and Apparatus for Searching Using An Active Ontology," filed December 22, 2008.

In some examples, once natural language processing module 732 identifies an actionable intent (or domain) based on the user request, natural language processing module 732 generates a structured query to represent the identified actionable intent. In some examples, the structured query includes parameters for one or more nodes within the domain for the actionable intent, and at least some of the parameters are populated with the specific information and requirements specified in the user request. For example, the user says "Make me a dinner reservation at a sushi place at 7." In this case, natural language processing module 732 is able to correctly identify the actionable intent to be "restaurant reservation" based on the user input. According to the ontology, a structured query for a "restaurant reservation" domain includes parameters such as {Cuisine}, {Time}, {Date}, {Party Size}, and the like. In some examples, based on the speech input and the text derived from the speech input using STT processing module 730, natural language processing module 732 generates a partial structured query for the restaurant reservation domain, where the partial structured query includes the parameters {Cuisine = "Sushi"} and {Time = "7pm"}. However, in this example, the user's utterance contains insufficient information to complete the structured query associated with the domain. Therefore, other necessary parameters such as {Party Size} and {Date} is not specified in the structured query based on the information currently available. In some examples, natural language processing module 732 populates some parameters of the structured query with received contextual information. For example, in some examples, if the user requested a sushi restaurant "near me," natural language processing module 732 populates a {location} parameter in the structured query with GPS coordinates from the user device.

In some examples, natural language processing module 732 identifies multiple candidate actionable intents for each candidate text representation received from STT processing module 730. Further, in some examples, a respective structured query (partial or complete) is generated for each identified candidate actionable intent. Natural language processing module 732 determines an intent confidence score for each candidate actionable intent and ranks the candidate actionable intents based on the intent confidence scores. In some examples, natural language processing module 732 passes the generated structured query (or queries), including any completed parameters, to task flow processing module 736 ("task flow processor"). In some examples, the structured query (or queries) for the m-best (e.g., m highest ranked) candidate actionable intents are provided to task flow processing module 736, where m is a predetermined integer greater than zero. In some examples, the structured query (or queries) for the m-best candidate actionable intents are provided to task flow processing module 736 with the corresponding candidate text representation(s).

Other details of inferring a user intent based on multiple candidate actionable intents determined from multiple candidate text representations of a speech input are described in U.S. Utility Application Serial No. 14/298,725 for "System and Method for Inferring User Intent From Speech Inputs," filed June 6, 2014.

Task flow processing module 736 is configured to receive the structured query (or queries) from natural language processing module 732, complete the structured query, if necessary, and perform the actions required to "complete" the user's ultimate request. In some examples, the various procedures necessary to complete these tasks are provided in task flow models 754. In some examples, task flow models 754 include procedures for obtaining additional information from the user and task flows for performing actions associated with the actionable intent.

As described above, in order to complete a structured query, task flow processing module 736 needs to initiate additional dialogue with the user in order to obtain additional information, and/or disambiguate potentially ambiguous utterances. When such interactions are necessary, task flow processing module 736 invokes dialogue flow processing module 734 to engage in a dialogue with the user. In some examples, dialogue flow processing module 734 determines how (and/or when) to ask the user for the additional information and receives and processes the user responses. The questions are provided to and answers are received from the users through I/O processing module 728. In some examples, dialogue flow processing module 734 presents dialogue output to the user via audio and/or visual output, and receives input from the user via spoken or physical (e.g., clicking) responses. Continuing with the example above, when task flow processing module 736 invokes dialogue flow processing module 734 to determine the "party size" and "date" information for the structured query associated with the domain "restaurant reservation," dialogue flow processing module 734 generates questions such as "For how many people?" and "On which day?" to pass to the user. Once answers are received from the user, dialogue flow processing module 734 then populates the structured query with the missing information, or pass the information to task flow processing module 736 to complete the missing information from the structured query.

Once task flow processing module 736 has completed the structured query for an actionable intent, task flow processing module 736 proceeds to perform the ultimate task associated with the actionable intent. Accordingly, task flow processing module 736 executes the steps and instructions in the task flow model according to the specific parameters contained in the structured query. For example, the task flow model for the actionable intent of "restaurant reservation" includes steps and instructions for contacting a restaurant and actually requesting a reservation for a particular party size at a particular time. For example, using a structured query such as: {restaurant reservation, restaurant = ABC Café, date = 3/12/2012, time = 7pm, party size = 5}, task flow processing module 736 performs the steps of: (1) logging onto a server of the ABC Café or a restaurant reservation system such as OPENTABLE^{®}, (2) entering the date, time, and party size information in a form on the website, (3) submitting the form, and (4) making a calendar entry for the reservation in the user's calendar.

In some examples, task flow processing module 736 employs the assistance of service processing module 738 ("service processing module") to complete a task requested in the user input or to provide an informational answer requested in the user input. For example, service processing module 738 acts on behalf of task flow processing module 736 to make a phone call, set a calendar entry, invoke a map search, invoke or interact with other user applications installed on the user device, and invoke or interact with third-party services (e.g., a restaurant reservation portal, a social networking website, a banking portal, etc.). In some examples, the protocols and application programming interfaces (API) required by each service are specified by a respective service model among service models 756. Service processing module 738 accesses the appropriate service model for a service and generate requests for the service in accordance with the protocols and APIs required by the service according to the service model.

For example, if a restaurant has enabled an online reservation service, the restaurant submits a service model specifying the necessary parameters for making a reservation and the APIs for communicating the values of the necessary parameter to the online reservation service. When requested by task flow processing module 736, service processing module 738 establishes a network connection with the online reservation service using the web address stored in the service model, and send the necessary parameters of the reservation (e.g., time, date, party size) to the online reservation interface in a format according to the API of the online reservation service.

In some examples, natural language processing module 732, dialogue flow processing module 734, and task flow processing module 736 are used collectively and iteratively to infer and define the user's intent, obtain information to further clarify and refine the user intent, and finally generate a response (i.e., an output to the user, or the completion of a task) to fulfill the user's intent. The generated response is a dialogue response to the speech input that at least partially fulfills the user's intent. Further, in some examples, the generated response is output as a speech output. In these examples, the generated response is sent to speech synthesis module 740 (e.g., speech synthesizer) where it can be processed to synthesize the dialogue response in speech form. In yet other examples, the generated response is data content relevant to satisfying a user request in the speech input.

In examples where task flow processing module 736 receives multiple structured queries from natural language processing module 732, task flow processing module 736 initially processes the first structured query of the received structured queries to attempt to complete the first structured query and/or execute one or more tasks or actions represented by the first structured query. In some examples, the first structured query corresponds to the highest ranked actionable intent. In other examples, the first structured query is selected from the received structured queries based on a combination of the corresponding speech recognition confidence scores and the corresponding intent confidence scores. In some examples, if task flow processing module 736 encounters an error during processing of the first structured query (e.g., due to an inability to determine a necessary parameter), the task flow processing module 736 can proceed to select and process a second structured query of the received structured queries that corresponds to a lower ranked actionable intent. The second structured query is selected, for example, based on the speech recognition confidence score of the corresponding candidate text representation, the intent confidence score of the corresponding candidate actionable intent, a missing necessary parameter in the first structured query, or any combination thereof.

Speech synthesis module 740 is configured to synthesize speech outputs for presentation to the user. Speech synthesis module 740 synthesizes speech outputs based on text provided by the digital assistant. For example, the generated dialogue response is in the form of a text string. Speech synthesis module 740 converts the text string to an audible speech output. Speech synthesis module 740 uses any appropriate speech synthesis technique in order to generate speech outputs from text, including, but not limited, to concatenative synthesis, unit selection synthesis, diphone synthesis, domain-specific synthesis, formant synthesis, articulatory synthesis, hidden Markov model (HMM) based synthesis, and sinewave synthesis. In some examples, speech synthesis module 740 is configured to synthesize individual words based on phonemic strings corresponding to the words. For example, a phonemic string is associated with a word in the generated dialogue response. The phonemic string is stored in metadata associated with the word. Speech synthesis model 740 is configured to directly process the phonemic string in the metadata to synthesize the word in speech form.

In some examples, instead of (or in addition to) using speech synthesis module 740, speech synthesis is performed on a remote device (e.g., the server system 108), and the synthesized speech is sent to the user device for output to the user. For example, this can occur in some implementations where outputs for a digital assistant are generated at a server system. And because server systems generally have more processing power or resources than a user device, it is possible to obtain higher quality speech outputs than would be practical with client-side synthesis.

Additional details on digital assistants can be found in the U.S. Utility Application No. 12/987,982, entitled "Intelligent Automated Assistant," filed January 10, 2011, and U.S. Utility Application No. 13/251,088, entitled "Generating and Processing Task Items That Represent Tasks to Perform," filed September 30, 2011.

### 4. Exemplary functions of a digital assistant providing digital assistant services based on user inputs.

FIGs. 2, 4, 6, 8A-8B, 9A-9C, 10A-10C, 11A-11D, 12A-12C, 13A-13B, and 14 illustrate functionalities of providing digital assistant services by a digital assistant operating on an electronic device. In some examples, the digital assistant (e.g., digital assistant system 700) is implemented by a user device according to various examples. In some examples, the user device, a server (e.g., server 108, device 820), or a combination thereof, may implement a digital assistant system (e.g., digital assistant system 700). The user device can be implemented using, for example, device 200, 400, 600, 810A-C, 820, 830, 840, 1182, and/or 1186. In some examples, the user device is a device having audio outputting capabilities and network connectivity, a smartphone, a laptop computer, a desktop computer, or a tablet computer.

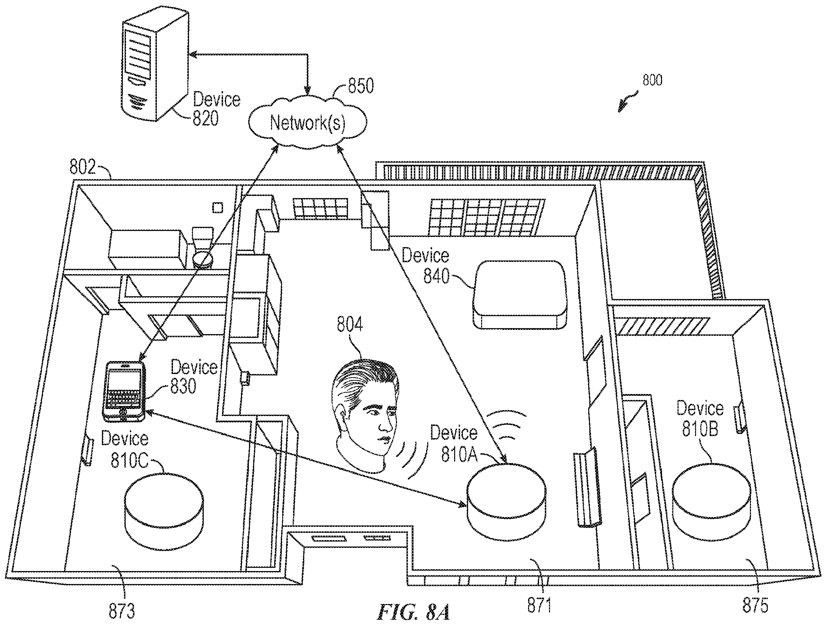

FIGs. 8A-8B illustrate functionalities of providing digital assistant services at one or more electronic devices 810A-C based on a user input, according to various examples. In some examples, electronic device 810A (and similarly other electronic devices 810B-C) can include one or more audio input and output devices (e.g., a microphone and one or more speakers) and one or more network communication interfaces. Device 810A and devices 810B-C are collectively referred to as electronic devices 810 or devices 810. Device 810A, and similarly devices 810B-C, can include multiple speakers to provide surround sound. In some example, an electronic device 810 can further include one or more indicators (e.g., lights) for providing device operational indications. For example, one or more indicators of device 810A may emit light to indicate that device 810A is powered on, connected to a network, outputting audios, etc. Devices 810A-C can be service-extension devices to extend digital assistant services from other devices.

As illustrated in FIG. 8A, in some examples, the digital assistant operating on device 810A can be configured to communicatively couple to other electronic devices (e.g., devices 810B-C, 820, 830, and/or 840) via a direct communication connection, such as Bluetooth, near-field communication (NFC), BTLE (Bluetooth Low Energy), or the like, or via a wired or wireless network, such as a local Wi-Fi network. For example, a digital assistant operating on device 810A can detect devices 810B-C via Bluetooth discovery, and communicatively couple to devices 810B-C via a Bluetooth connection. As another example, the digital assistant operating on device 810A can detect a Wi-Fi network and communicatively couple to devices830 and 840 via a Wi-Fi network. As another example, the digital assistant operating on device 810A can detect a near field communication when the device 830 (e.g., a client device such as the user's smartphone) is in close proximity with, or physically in touch with, device 810A. For instance, to pair up device 810A and device 830, user 804 may tap device 810A with device 830, thereby establishing near-field communication between the two devices. As another example, the digital assistant operating on device 810A can detect that device 830 (e.g., a client device such as the user's smartphone) is within a predetermined distance (e.g., within a range of Bluetooth communication) and establish a connection with device 830. For instance, as user 804 approaches or enters area 800 with device 830, the digital assistant operating on device 810A may detect that device 830 is within communication range, and thus connect with device 830. As another example, the digital assistant operating on device 810A can establish a connection with device 830 based on one or more previous established connections between the two devices. For instance, the digital assistant operating on device 810A can store a log file indicating the devices that it connected in the past, and optionally connection parameters. Thus, based on the log file, the digital assistant operating on device 810A can determine, for example, that it has connected to device 830 before. Based on such determination, the digital assistant operating on device 810A can establish the connection with device 830.

In some examples, electronic device 820 can be a server; and devices 830 and 840 can be client devices disposed in the vicinity of electronic devices 810. For example, device 820 can be a remotely disposed cloud server; and devices 830 and 840 can be the user's smartphone and a TV set-top box, respectively. In some examples, the digital assistant operating on device 810A establishes one or more connections with at least one of devices 820, 830, and 840, before it can receive user inputs comprising user requests and/or provide representations of user requests to one or more of devices 820, 830, and 840. Receiving user inputs and providing representations of user requests to devices 820, 830, and/or 840 are described in more detail below. Establishing connections before receiving user inputs and providing representations of user requests to other devices can improve the operation efficiency and speed of providing responses to user requests. For example, by establishing connections beforehand, the digital assistant operating on device 810A may not waste time to establish a connection after a user input is received.

In some examples, after establishing a connection between device 810A and device 830 (e.g., a client device such as the user's smartphone), the digital assistant operating on device 810A and/or device 830 can notify device 820 (e.g., a server) of the established connection. As described in more detail below, the digital assistant operating on device 810A may provide representations of a user request to one or both of device 820 and device 830 for obtaining responses. Device 820 may be a remote device such as a server and device 830 may be a device disposed in the vicinity of device 810A. Thus, notifying device 820 (e.g., a remote server) of a connection between device 810A and device 830 can facilitate an efficient operation. For example, as described below, in some embodiments, the digital assistant operating on device 810A may provide the representations of the user request to both device 820 and device 830. Device 820 and/or device 830 may determine that device 830 (e.g., a client device disposed in the vicinity of device 810A) is capable of providing the response. Thus, because device 820 is notified that device 830 and device 810A are connected, device 820 may not provide a response to device 810A. Instead, device 820 may coordinate with device 830 to provide the response. In some examples, because device 830 (e.g., the user's smartphone) is disposed in the vicinity of device 810A, the response may be provided in a faster and more efficient manner.

In some examples, the digital assistant operating on devices 810A can establish connections with one or more devices having the same type. For example, as shown in FIG. 8A, a plurality of devices 810A-C can be service-extension devices and can be disposed in area 800. The digital assistant operating on device 810A can thus establish a connection with each of device 810B and device 810C. As described in more detail below, establishing connections between devices 810A, 810B, and 810C enables responses to be provided to user 804 by any device 810A-C disposed in area 800. This provides flexibility and improves the user-interaction efficiency. For example, user 804 may provide a speech input (e.g., "Play music") to device 810A, and receive a response by device 810C (e.g., music playing at device 810C).

In some embodiments, devices 810A-C can be service-extension devices for extending digital assistant services from one device to another. For example, as shown in FIG. 8A, devices 810A-C can be disposed in the vicinity of an electronic device 830 (e.g., a smartphone device) and/or electronic device 840 (e.g., a TV set-top box) to extend digital assistant services provided by electronic devices 830 and/or 840. In some examples, disposing devices 810A-C in the vicinity of devices 830 and/or 840 may include disposing devices 810A-C within a predetermined boundary surrounding, or a predetermined distance from, devices 830 and/or 840. For example, devices 810A-C may be disposed in the same house or building as devices 830 or 840. As shown in FIG. 8A, user 804 may be physically within or nearby an area 800, which may include one or more rooms 871, 873, and 875. User 804 may by physically located in room 871, while electronic device 830 (e.g., the user's smartphone) may be disposed in another room 873. In some examples, user 804 may want to access digital assistant services provided by device 830, despite that device 830 is incapable of directly communicating with user 804 (e.g., device 830 may not be able to directly receive the user 804's speech input via its microphone). In some examples, devices 810A-C can serve as service-extension devices for extending digital assistant services provided by device 830, as described in more detail below.

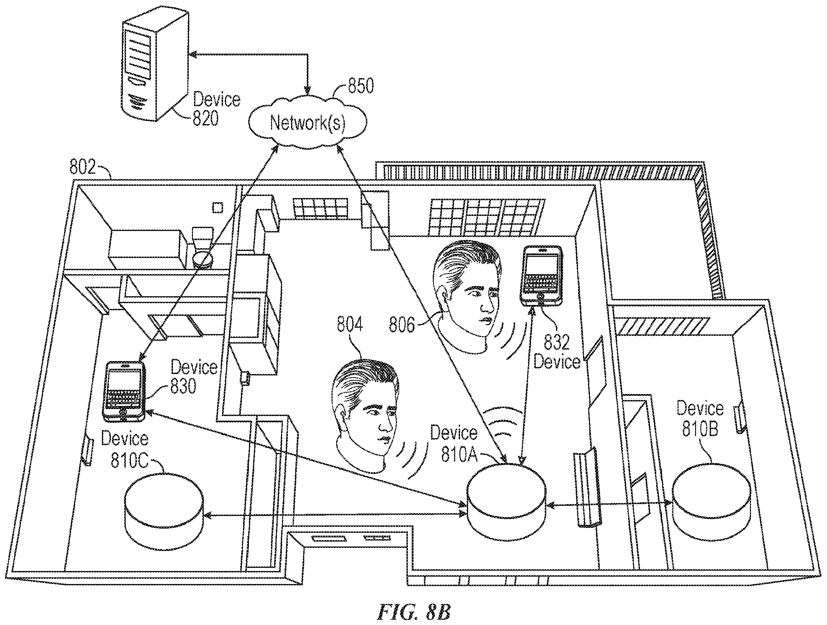

In some embodiments, one or more devices 810A-C may or may not be associated with a single device or user. Devices 810A-C (e.g., service-extension devices) can be shared by multiple users and can extend digital assistant services for multiple devices. In some examples, one or more devices 810A-C can extend digital assistant services to a plurality of users. As illustrated in FIG. 8B, user 804 and user 806 can share one or more devices 810A-C. For example, user 804 may have an associated device 830 (e.g., user 804's smartphone or smart watch); and user 806 may have an associated device 832 (e.g., user 806's smartphone or tablet). In some examples, the digital assistant operating on device 810A can establish a connection between itself and device 830; and a connection between itself and device 832. As such, the digital assistant operating on device 810A can extend digital assistant services for one or both devices 830 and 832. The capability of extending digital assistant services for multiple devices enables devices 810A-C to be shared by, for example, multiple users (e.g., family members).

With reference back to FIG. 8A, in some embodiments, a digital assistant operating on electronic device 810A can receive, from user 804, a speech input representing a user request. For example, user 804 may provide one or more speech inputs such as "What is on my calendar tomorrow?", "When is my first meeting?", "How is the weather?" or "Play Star Wars from my movie application." In some examples, the user request can be a request for information specific to user 804. For example, the speech inputs such as "What is on my calendar tomorrow?" or "When is my first meeting tomorrow?" represent requests for information specific to user 804. In some examples, the user request can be a request for non-user specific information. For examples, the speech inputs such as "How is the weather tomorrow?" or "What is the today's stock price of AAPL?" represent requests for information that is not specific to any particular user.

In some embodiments, prior to receiving the user's speech input, the digital assistant operating on device 810A can receive an additional speech input that includes a predetermined content. In response to receiving the additional speech input, the digital assistant operating on device 810A can activate device 810A. For example, device 810A may be placed in a standby mode or a lower power mode. Placing device 810A in standby mode or a lower power mode can reduce power consumption and in some examples, enhances the protection of the user's privacy. For example, during a standby mode or lower power mode, only limited voice detection and/or speech processing functions are enabled for the digital assistant operating on device 810A. Other functions of device 810A (e.g., camera, indication light, speaker, etc.) may be disabled. In some examples, during the standby mode or lower power mode, the digital assistant operating on device 810A can still detect a speech input and determine whether the speech input includes predetermined content such as "Wake up, speaker" or "Hey, Speaker." Based on the determination, the digital assistant operating on device 810A can activate the device 810A. In some examples, after device 810A is activated, device 810A exits the standby mode and switches to a normal operation mode. In the normal operation mode, the digital assistant operating on device 810A can perform additional functions.

As illustrated in FIG. 8A, in an area 800 (e.g., a house), a plurality of devices 810A-C can be disposed. In some examples, a speech input activating one of device 810A-C may or may not activate other devices being disposed in the vicinity. For example, as described above, user 804 may provide a speech input including predetermined content (e.g., "Wake up, speaker") to device 810A. In some examples, device 810B may be disposed in another portion of area 800 (e.g., another room) and thus may not receive the speech input. As a result, device 810B may not be activated. In some examples, device 810B may be disposed in the vicinity of device 810A (e.g., in the same room) and may also receive the speech input including the predetermined content. In some examples, the digital assistant operating on device 810A can coordinate with device 810B to determine which device should be activated. For example, the digital assistants operating on device 810A and device 810B can both detect and record the volume or sound pressure associated with the speech input. Based on the comparison of the sound pressure detected at device 810A and the sound pressure detected at device 810B, the user's position relative to the two devices can be determined. For example, it may be determined that the user is physically closer to device 810A than to device 810B. As a result, device 810A may be activated while device 810B may not be activated. It is appreciated that the determination of which device is to be activated can be based on the user's speech input (e.g., user 804 provides "wake up, speaker in living room") and/or any context information such as the user's preferences, the user's relative position, the capabilities and attributes of the devices (e.g., one device is better for performing certain tasks than another device), etc.

In some embodiments, after receiving the user's speech input, the digital assistant operating on electronic device 810A can output one or more speech inquiries regarding the user request. For example, a user intent may not be determined or clear based on the user's speech input; or the digital assistant operating on device 810A may not have properly received the speech input. As such, the digital assistant operating on device 810A may output a speech inquiry such as "What's that?" or "I did not quite get that," thereby seeking to clarify the user request. In response to the one or more speech inquiries, user 804 can thus provide one or more additional speech inputs clarifying his or her requests (e.g., repeat or rephrase the previous speech input). And device 810A can receive the one or more additional speech inputs.

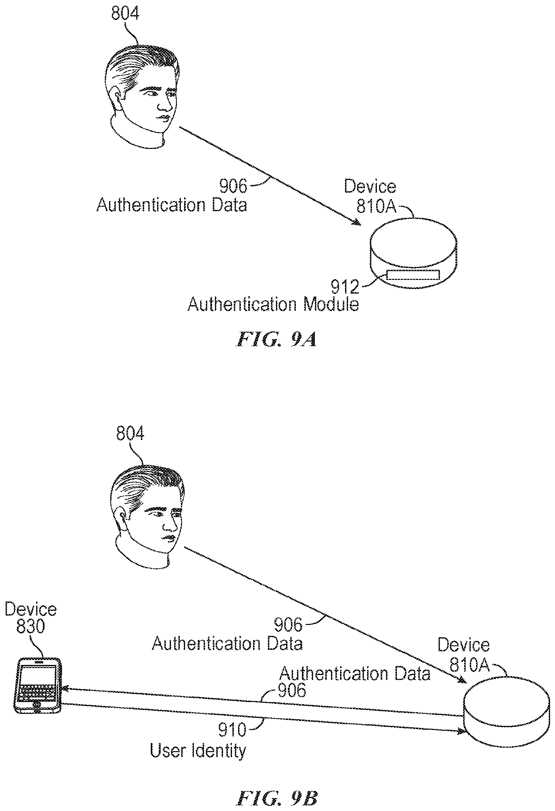

In some embodiments, after receiving the user's speech input, the digital assistant operating on device 810A can obtain an identity of user 804. As described, electronic device 810A can extend digital assistant services for multiple devices (e.g., devices 830 and 832) associated with one or more users (e.g., users 804 and 806 as shown in FIG. 8B). Thus, for providing extension of digital assistant services from a proper device associated with a particular user (e.g., user 804 or user 806), the digital assistant operating on electronic device 810A can obtain the identity of the user. FIGs. 9A-9C illustrate functionalities of obtaining an identity of user 804 at electronic device 810A, according to various examples. With references to FIGs. 8A and 9A-9C, in some examples, electronic device 810A can include an authentication module 912. Authentication module 912 can include one or more sensors such as voice biometric sensors, facial recognition systems, fingerprint readers, NFC sensors, etc. In some examples, as shown in FIG. 9A, authentication module 912 can obtain authentication data 906 associated with user 804. In some examples, authentication data 906 can include user's voice biometrics, and/or fingerprint, and/or user's facial recognition data. For example, user 804's voice biometrics may include the user's voice characteristics such as acoustic patterns or voiceprints. User 804's facial recognition data may include the user's facial characteristics that may uniquely identify the user, such as the relative position, size, and/or shape of the eyes, nose, cheekbones, jaw, etc.

In some examples, authentication data 906 can include sensing of another electronic device that identifies the user. For example, the digital assistant operating on device 810A may detect that user 804's wearable device (e.g., a smart watch) is disposed in the vicinity of device 810A, communicate with the wearable device via NFC (e.g., Bluetooth), and obtain authentication data 906 from the wearable device (e.g., having already been authenticated on the user's watch). As another example, the digital assistant operating on device 810A may detect that device 810A is physically in contact with the user's smartphone that identifies the user, communicate with the user's smartphone via NFC (e.g., Bluetooth), and obtain authentication data 906 from the user's smartphone. In some examples, authentication data 906 can include other credentials of the user, such as the user's fingerprints, passwords, or the like. It is appreciated that the digital assistant operating on electronic device 810A can obtain any authentication data associated with user 804 in any manner.

With reference to FIGs. 8A and 9A-9C, the digital assistant operating on device 810A can obtain a determination of the identity of the user 804 based on authentication data 906. As illustrated in FIG. 9B, in some embodiments, the digital assistant operating on electronic device 810A can provide the obtained authentication data 906 to electronic device 830 for authentication. For example, the digital assistant operating on device 810A can provide the user's voice biometrics data, the user's facial recognition data, the user's fingerprint data, device sensing data, and/or other credentials to electronic device 830. As described, electronic device 830 can be a device that is associated with user 804 (e.g., user 804's smartphone) and can thus store user identity information. Based on the received authentication data 906, device 830 can determine whether authentication data 906 include credentials that match with the stored user identity information (e.g., a password or a fingerprint). If authentication data 906 include credentials that match with user identity information, device 830 can send a determination of user identity 910 of user 804 to device 810A.

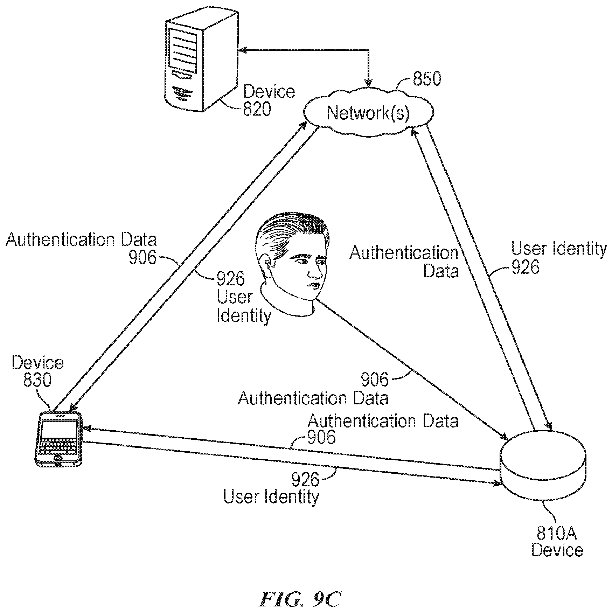

With reference to FIG. 9C, as described, the digital assistant operating on device 810A can provide authentication data 906 to device 830. In some embodiments, device 830 (e.g., a smartphone) may be incapable of obtaining the identity of user 804 and may thus forward authentication data 906 to electronic device 820. For example, device 830 may not store voice biometric information that can identify a user, and may thus be incapable of making a determination of user 804's identity. Device 830 may thus forward authentication data 906 to device 820. In some examples, device 820 may be disposed remotely from devices 810A and 830. For example, device 820 can be a server that is communicatively coupled to devices 810A and 830 via network(s) 850. Device 820 may store user identity information and may thus determine whether authentication data 906 include credentials that match with the stored identity information. If device 820 determines that authentication data 906 include credentials that match with user identity information of user 804, device 820 can send the determination of user identity 926 of user 804 to device 810A. In some examples, device 820 can send the determination of user identity 926 of user 804 directly to device 810A. In some examples, device 820 can send the determination of user identity 926 of user 804 to device 830, which then forward to device 810A.

In some examples, obtaining the identity of user 804 can be based on a speech input including predetermined content. As described above, based on a speech input including predetermined content (e.g., "Wake up, speaker" or "Hey, Speaker"), the digital assistant operating on device 810A can activate device 810A. The speech input including the predetermined content can also be used to determine user 804's voice biometrics, which may include the user's voice characteristics such as acoustic patterns or voiceprints. As a result, a speech input including a predetermined content (e.g., a speech input for activating device 810A) can be used for identifying user 804, in manners similar to those described above.

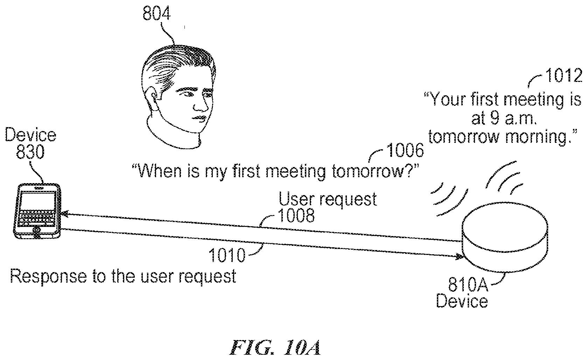

FIGs. 10A-10C illustrate functionalities of providing digital assistant services based on a user request for information, according to various examples. With reference to FIGs. 8A and 10A-10C, in accordance with the obtained user identity, the digital assistant operating on electronic device 810A can provide a representation of the user request 1008 to at least one of device 820 or device 830. As described above, in some examples, device 820 may be a server disposed remotely from devices 810A-C and 830. Device 830 may be a client device associated with user 804 (e.g., the user's smartphone) and may be disposed in the vicinity of devices 810A-C (e.g., in the same house or building).

In some embodiments, the digital assistant operating on device 810A can provide the representation of the user request 1008 to a device that is disposed in the vicinity of device 810A before providing the representation of the user request to a remote device. As illustrated in FIG. 10A, user 804 may provide a speech input 1006 such as "When is my first meeting tomorrow?" Thus, speech input 1006 includes a user request for information regarding, for example, user 804's first meeting time on the next day. In some embodiments, the digital assistant operating on device 810A can determine whether device 830 is communicatively coupled to device 810A. For example, the digital assistant operating on device 810A can detect whether device 830 is within the range of communication and whether a connection can be established via NFC such as Bluetooth or Wi-Fi connections. In accordance with a determination that device 830 is communicatively coupled to device 810A, the digital assistant operating on device 810A can provide representation of the user request 1008 to device 830. In some embodiments, device 830 is a device that is disposed in the vicinity of device 810A (e.g., the user's smartphone); and the digital assistant operating on device 810A may not further provide representation of the user request to a remote device such as device 820 shown in FIG. 8A. As a result, the user request is not transmitted remotely, and may stay within a device that is disposed in the vicinity of device 810A (e.g., the user's personal devices). By providing the representation of the user request 1008 only to device 830, which is disposed in the vicinity of device 810A, a response from device 830 may be obtained in a fast and efficient manner without having to consume time for communication with a remote device. As a result, the speed of responding to a user request at device 810A may be improved. Moreover, a user request (e.g., the user requested included in speech input 1006) may include a request for sensitive or confidential user-specific information (e.g., the user's calendar information). As a result, for privacy concerns, it may be desired not to send the representation of the user request 1008 to a remote device, such as a cloud server.

As illustrated in FIG. 10A, in some example, device 830 receives the representation of user request 1008 from device 810A and determines whether it is capable of providing a response to the user request. For example, as described, the user request may include a request for information of user 804's first meeting time on the next day. Device 830 may determine that it stores user 804's calendar information is stored in device 830 and thus determine it is capable of providing the response to the user request. Accordingly, device 830 can send the response 1010 to the user request to device 810A. The response 1010 may include, for example, user 804's first meeting time on the next day. The digital assistant operating on device 810A receives the response 1010 to the user request from device 830, and can provide a representation of the response 1010 to user 804. As shown in FIG. 10A, the digital assistant operating on device 810A can provide a speech output 1012 such as "Your first meeting is at 9 a.m. tomorrow morning."

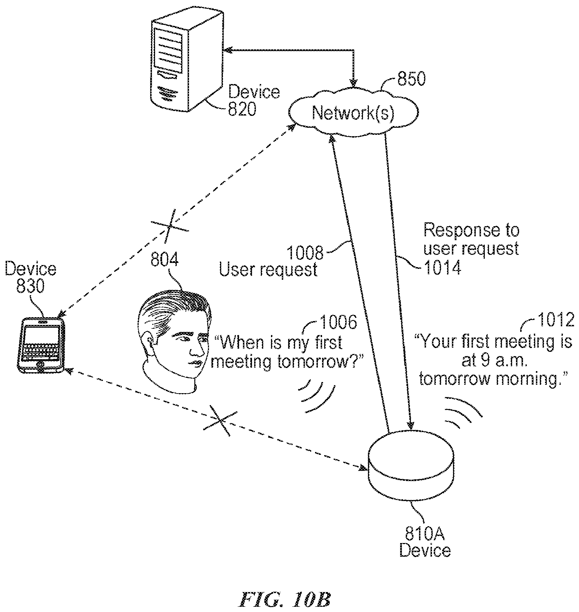

As described, the digital assistant operating on device 810A can determine whether device 830 is communicatively coupled to device 810A. For example, the digital assistant operating on device 810A can detect whether device 830 is within the range of communication and whether a connection between the two devices can be established via Bluetooth or Wi-Fi connections. With reference to FIG. 10B, in some embodiments, the digital assistant operating on device 810A can determine that device 830 is not communicatively coupled to device 810A For example, the digital assistant operating on device 810A may not be capable of detecting device 830 because device 830 is beyond the range of communication, or because a connection cannot be established between the two devices. In accordance with a determination that the device 830 is not communicatively coupled to device 810A, the digital assistant operating on device 810A can provide the representation of the user request 1008 to device 820. As described above, device 820 can be a remote device such as a server. In some examples, the digital assistant operating on device 810A can provide the representation of the user request 1008 to device 820 via network(s) 850.

In some embodiments, as shown in FIG. 10B, device 820 receives the representation of user request 1008 from device 810A and determines whether it is capable of providing the response to the user request. For example, as described, the user request may include a request for information of user 804's first meeting time on the next day. Device 820 may determine that it stores, or has access to, user 804's calendar information (e.g., stored in user 804's cloud account) and thus determine it is capable of providing the response to the user request. Accordingly, device 820 can send a response 1014 to the user request to device 810A. The response 1014 to the user request may include, for example, the user's first meeting time on the next day. Device 810A receives the response 1014 to the user request from device 820, and can provide a representation of response 1014 to user 804. As shown in FIG. 10B, the digital assistant operating on device 810A can provide a speech output 1012 such as "Your first meeting is at 9 a.m. tomorrow morning." In some examples, after providing response to user 804, device 810A can continue to monitor subsequent speech inputs.

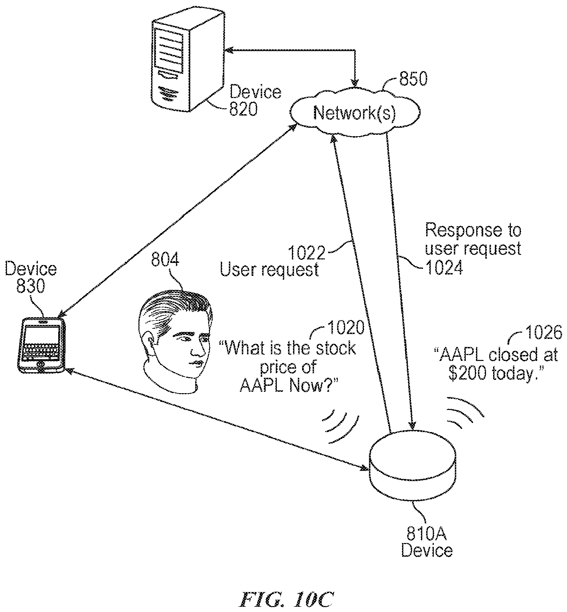

With reference to FIG. 10C, in some embodiments, user 804 may provide a speech input 1020 such as "What is the stock price of AAPL today?" This type of speech input represents a user request for non-user-specific information. Non-user-specific information is not specific to a particular user and may be general information such as weather information, stock price information, sports game information, etc. In some embodiments, as shown in FIG. 10C, the digital assistant operating on device 810A can provide the representation of user request 1022 for non-user-specific information to device 820 and not to device 830. As described, device 820 may be a server that is disposed remotely from device 810A, and device 830 may be the user's smartphone that is disposed in the vicinity of device 810A. In some embodiments, non-user-specific information (e.g., weather, stock price, game scores, etc.) may not be available and/or updated at device 830 (e.g., the user's smartphone). Thus, device 810A can determine that it is more appropriate and efficient to obtain the non-user-specific information from a remote device (e.g., a server), rather than a device that is disposed in the vicinity of device 810A (e.g., a user's personal device). As such, the digital assistant operating on device 810A can provide the representation of user request 1022 for non-user-specific information to device 820 (e.g., a server) via network(s) 850.

As shown in FIG. 10C, device 820 receives the representation of user request 1022 from device 810A and determines that it is capable of providing the response to the user request. For example, as described, the user request may include a request for stock price information of AAPL. Device 820 may determine that it is capable of obtaining the information from a relevant data source (e.g., a finance website) and thus capable of providing the response to the user request. Accordingly, device 820 can send a response 1024 to the user request to device 810A. Response 1024 to the user request may include, for example, the current stock price of AAPL. The digital assistant operating on device 810A receives response 1024 from device 820, and can provide a representation of response 1024 to user 804. As shown in FIG. 10C, the digital assistant operating on device 810A can provide a speech output 1026 such as "AAPL closed at $200 today."

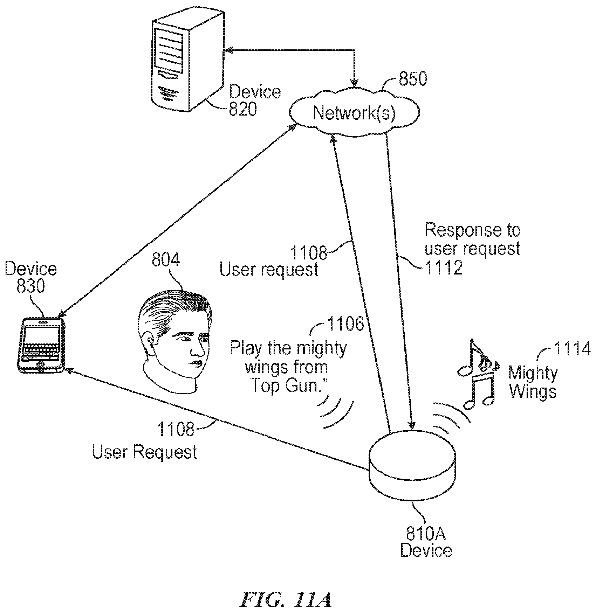

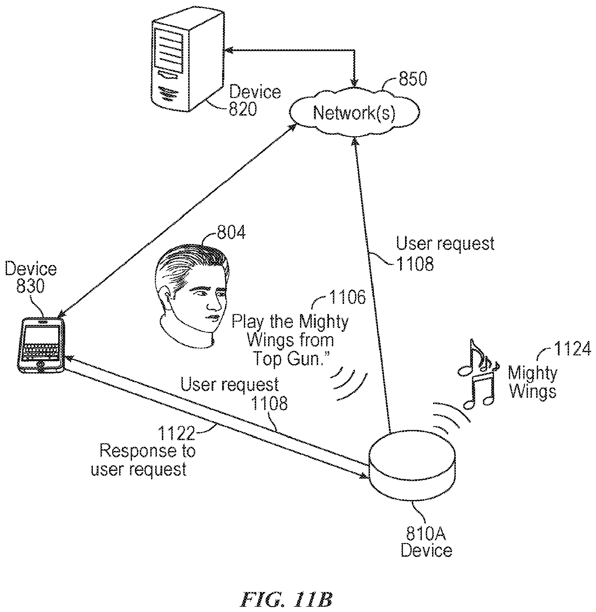

FIGs. 11A-11D illustrate functionalities of providing digital assistant services based on a user request for performing a task, according to various examples. With reference to FIGs. 11A and 11B, in some embodiments, user 804 may provide a speech input 1106 representing a user request for performing a task. For example, speech input 1106 may include "Play the Mighty Wings from Top Gun." Speech input 1106 thus represents a request to perform a task of playing a particular piece of music. In some examples, the digital assistant operating on device 810A may be incapable of (e.g., due to lack of sufficient information) determining whether a response to a user request can be provided by device 830 (e.g., a device disposed in the vicinity of device 810A such as the user 804's personal smartphone) or device 820 (e.g., a remote server). In the above example, device 810A may not have sufficient information to determine whether the user 804's smartphone or a server stores the song "Mighty Wings." Accordingly, the digital assistant operating on device 810A can provide the representation of user request 1108 to both device 830 and device 820.

As illustrated in FIG. 11A, device 820 and device 830 both receive the representation of the user request 1108 (e.g., a user request to perform a task). One or both of device 820 and device 830 can determine whether the respective device is capable of providing the response to the user request 1108. For example, device 830 can determine whether it stores the song Might Wings and if so, determine that it is capable of providing the response. Device 820 can make a similar determination. In some examples, the determinations can be made separately and independently on device 820 and device 830. For example, both devices 820 and 830 may determine whether they store the song "Mighty Wings;" and communicate the result of determination to the other device. In some examples, one of device 820 or device 830 can make the determination first and then send an indication to the other device. For example, device 830 may determine whether the song "Mighty Wings" is stored in device 830, and send an indication of the determination to device 820. If device 830 determines that it stores the song "Mighty Wings," it can send a corresponding indication to device 820 so that device 820 does not make any further determination. If device 830 determines that it does not have the song "Mighty Wings," it may send a corresponding indication to device 820 so that device 820 can then determine whether it stores, or has access to, the requested song. Similarly, device 820 may make a determination first and then send an indication to device 830. In some embodiments, the digital assistant operating on device 810A can cause one or both devices 820 and 830 to determine whether the respective device is capable of providing the response the user request. For example, the representation of the user request 1108 that is sent to devices 820 and 830 may include an explicit or implicit request for one or both devices 820 and 830 to determine whether one or both devices are capable of providing the requested response.

As shown in FIG. 11A, in some examples, device 820 (e.g., a server) may determine that it is capable of providing the response to the user request; and device 830 (e.g., the user's smartphone) may determine that it is incapable of providing the response to the user request. For example, device 820 may determine that it stores, or have access to, the requested song "Mighty Wings" and device 830 may determine that it does not store the song. Accordingly, device 820 can provide a response 1112 to the user request to device 810A. For example, device 820 can stream the song "Mighty Wings" to device 810A. Device 810A receives response 1112 from device 820 and provides a representation of response 1112 to user 804. For example, the digital assistant operating on device 810A receives the streaming of the song "Mighty Wings" and provides audio outputs 1114 of the song.

With reference to FIG. 11B, in some examples, device 830 (e.g., the user's smartphone) may determine that it is capable of providing the response to the user request; and device 820 (e.g., the server) may determine that it is incapable of providing the response to the user request. For example, device 830 may determine that it stores the song "Mighty Wings" and device 820 may determine that it does not store the song, or does not have access, to the requested song without requiring a further user interaction (e.g., asking the user to purchase the song). Accordingly, device 830 can provide a response 1112 to the user request to device 810A. For example, device 830 can stream the song "Mighty Wings" to device 810A. The digital assistant operating on device 810A receives response 1122 from device 830 and provides a representation of response 1122 to user 804. For example, device 810A receives the streaming of the song "Mighty Wings" and provides audio outputs 1124 of the song.

With reference to FIGs. 11A and 11B, in some examples, both device 830 (e.g., the user's smartphone) and device 820 (e.g., a server) may determine that the respective device is capable of providing the response to the user request. For example, device 830 may determine that it stores the song "Mighty Wings;" and device 820 may determine that it also stores the requested song (e.g., in the user's cloud account) or has access to the song without requiring further user interaction (e.g., without requiring the user to purchase the song). Accordingly, either device 820 or device 830 is capable of providing a response to the user request to device 810A. In some examples, the selection of a device from multiple devices for providing the response can be based on a predetermined condition. For example, the predetermine condition may include a pre-configured policy (e.g., device 830 is the default device to provide response if more than one device are capable of providing responses), a condition of connection bandwidth (e.g., the device that has a higher bandwidth of connection is the device to provide response), a condition of user's preferences (e.g., in order to save cellular data usage, the user prefers to use a device that is connected to device 810A via Wi-Fi for providing responses), or the like. Based on the predetermine condition, one of device 820 and device 830 can stream the song "Mighty Wings" to device 810A. The digital assistant operating on device 810A receives the response to the user request and provides a representation of the response to the user. For example, device 810A receives the streaming of the song "Mighty Wings" and provides audio outputs of the song.

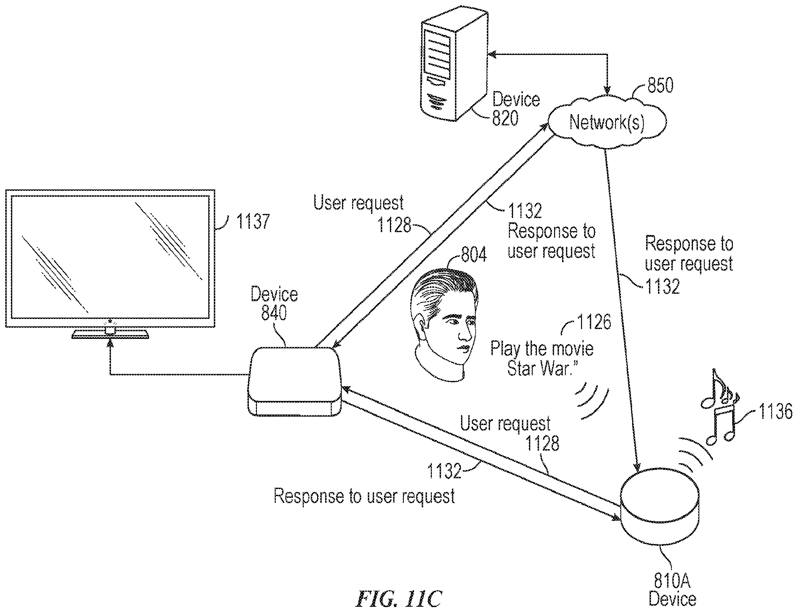

With reference to FIG. 11C, in some embodiments, user 804 may provide a speech input 1126 representing a user request for performing a task. Speech input 1126 may include, for example, "Play the movie Star Wars." The digital assistant operating on device 810A receives speech input 1126. In some examples, based on speech input 1126, device 810A can provide a representation of a user request 1128 to a device that is disposed in the vicinity of device 810A (e.g., device 840) and not to a remote device (e.g., device 820 such as a server). The digital assistant operating on device 810A may not provide the representation of user request 1128 to a remote device for a number of reasons. For example, the digital assistant operating on device 810A may determine that the information is likely to be available at a device that is disposed in the vicinity of device 810A (e.g., device 840 such as a TV set-top box); that there is no or poor connection to a remote device; that the bandwidth to a remote device is limited or inferior; that a predetermined configuration requires providing representations of user requests to a device that is the vicinity of device 810A (e.g., a device connected to device 810A via Wi-Fi); or the like. As described above, device 840 may be a TV set-top box that is disposed in the vicinity of device 810A, and device 820 may be a server disposed remotely. In some examples, the digital assistant operating on device 810A can be configured to always provide the representation of a user request to a device that is disposed in the vicinity of device 810A (e.g., device 840). In some examples, the digital assistant operating on device 810A can be configured to provide the representation of a user request to a device that is disposed in the vicinity of device 810A (e.g., device 840) or a remote device (e.g., device 820) based on the type and/or content of the user request. As described above, in some examples, if the user request is a request for user-specific information, the digital assistant operating on device 810A can provide the representation of the user request to a device that is disposed in the vicinity of device 810A (e.g., the user's smartphone); and if the user request is a request for non-user-specific information, device 810A can provide the representation of the user request to a remote device (e.g., the server).

As shown in FIG. 11C, device 840 receives the representation of the user request 1128, which may cause device 840 to determine whether it is capable of providing a response to the user request. For example, device 840 may determine that it stores the movie Star Wars and thus is capable of providing the response to device 810A. As other examples, device 840 may determine it stores data including user's personal calendar, contacts, photos, media items, or the like, and thus is capable of providing a response for a user request for information or task performance using these stored data. In accordance with a determination that device 840 is capable of providing the response to the user request, device 840 can provide a response 1134 to device 810A. For example, device 840 can stream the movie "Star Wars" to device 810A. The digital assistant operating on device 810A receives response 1134 from device 810A, and provides a representation of response 1134 to the user. For example, the digital assistant operating on device 810A can provide audio outputs 1136 (e.g., play the movie "Star Wars") using its display and speakers. In some examples, device 840 can provide at least a portion of the response to device 810A while provide other portions of the response to one or more other devices. For example, device 840 can provide the audio portion of the movie "Star Wars" to device 810A while provide the video portion of the movie to a device 1137 (e.g., a TV).

With reference to FIG. 11C, as described, device 840 receives the representation of the user request 1128, which may cause device 840 to determine whether it is capable of providing the response to the user request. In some examples, device 840 may determine that it is incapable of providing the response to the user request. For example, device 840 may determine that it does not store the movie "Star Wars" and thus cannot provide the response. As other examples, device 840 may determine that the user request is for information that is not stored in device 840 (e.g., stock information, web searching request, etc.), and thus determine it cannot provide the response.

As shown in FIG. 11C, in accordance with a determination that the device 840 is incapable of providing a response to the user request, device 840 can forward a representation of user request 1128 to device 820 via network(s) 850. As described, device 820 can be a server. Based on the representation of user request 1128, device 820 can then determine whether it is capable of providing a response. For example, device 820 may determine whether it stored a requested movie, or whether a requested movie is accessible from user 804's cloud account or from a web source (e.g., a media website). If device 820 determines that it stores the requested movie or that the requested movie is accessible, device 820 determines that it is capable of providing the response. In some examples, device 820 can provide a response 1132 to device 840, which can then forward to device 810A and optionally device 1137 (e.g., a TV). In some examples, device 820 can provide response 1132 directly to device 810A and optionally device 1137. For example, device 820 can send the audio portion of the movie Star Wars to device 810A, while sending the video portion of the movie Star Wars to device 1137 (via device 840). The digital assistant operating on device 810A, and optionally device 1137, receives response 1132, and provides a representation of response 1132 to the user. For example, the digital assistant operating on device 810A, and optionally device 1137, can provide output 1136 based on the received response 1132 (e.g., play the movie "Star Wars").

Using the example illustrated in FIG. 11C, instead of providing speech input 1126, user 804 may provide a speech input such as "Play the movie Star Wars on my TV and set up another screen on my computer." Similar to those described above, the digital assistant operating on device 810A can provide a representation of the user request to device 840, and receive a response to the user request from device 840 or device 820, based on a determination whether device 840 (e.g., a TV set-top box disposed in the vicinity of device 810A) or device 820 (e.g., a server) is capable of providing the response. In some embodiments, the user request may indicate that the response to the user request is to be provided to multiple devices. Thus, device 840 and/or device 820 can provide the response accordingly. For example, the digital assistant operating on device 810A can receive a portion of the response (e.g., audio portion of a movie); device 1137 can receive another portion of the response (e.g., the video portion of a movie); and another device (e.g., the user's computer) can receive a duplicate copy of the response (e.g., a copy of both the audio and video portions of the movie). In some examples, user 804 may want to watch a movie using a device such as his or her computer or tablet, but not using device 810A. User 804 may provide a speech input such as "Play the movie Star Wars on my computer" or "Play the movie Star Wars on my tablet." The speech input may be provided as an initial input to start the task performance (e.g., start to play the movie Star Wars). The speech input may also be provided as a subsequent input while a task is being performed (e.g., while device 840 is streaming the movie to device 810A and/or device 1137). Similar to those described above, device 810A can provide a representation of the user request to device 840 and/or device 820. The representation of the user request may indicate a response is to be provided to the user's computer or tablet (not shown in FIG. 11C). The user's computer or tablet can thus receive a response to the user request from device 840 or device 820, based on a determination whether device 840 (e.g., a TV set-top box disposed in the vicinity of device 810A) or device 820 (e.g., a server) is capable of providing the response.

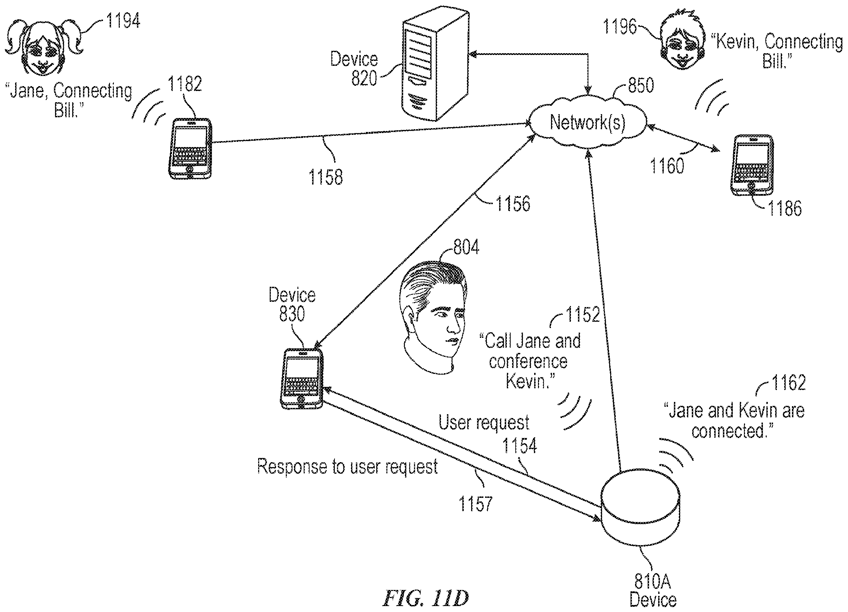

With reference to FIG. 11D, in some embodiments, user 804 may provide a speech input 1152 such as "Call Jane and conference Kevin." The digital assistant operating on device 810A receives speech input 1152 and can provide a representation of a user request 1154 to device 830 (e.g., the user's smartphone). User request 1154 can include a request to perform a task at device 830 (e.g., calling Jane and conferencing Kevin). Device 830 receives the representation of user request 1154, and determines that it is capable of performing the task. As described above in connection with FIGs. 1-7C, and similarly in other examples, a natural language processing module of the digital assistant operating on device 830 (and/or device 810A) can identify an actionable intent based on the user request and generate a structure query to represent the identified actionable intent. For example, based on speech input 1152, device 830 can thus determine if the actionable intent is "making phone calls." In some examples, the digital assistant can actively elicit and obtain information needed to fully infer the user intent (e.g., by disambiguating words, elicit further clarification inputs from the user, and/or use context information such as the user's contact list). A structured query for "making phone calls" may include parameters such as {callees}, {telephone numbers}, and the like. Next, a task flow processing module of the digital assistant can receive the structured query and perform the actions required to provide a response to the user request. Accordingly, device 830 can perform the task according to user request 1154 (e.g., call user 1194's device 1182 and conference in user 1196's device 1186). Based on the performance of the task, device 830 can also provide a response 1157 to device 810A. For example, the digital assistant operating on device 810A can receive response 1157 from device 830, indicating that the conference with user 1194 (e.g., Jane) and user 1196 (e.g., Kevin) has been established. Accordingly, the digital assistant operating on device 810A can provide an audio output 1162 such as "Jane and Kevin are connected."

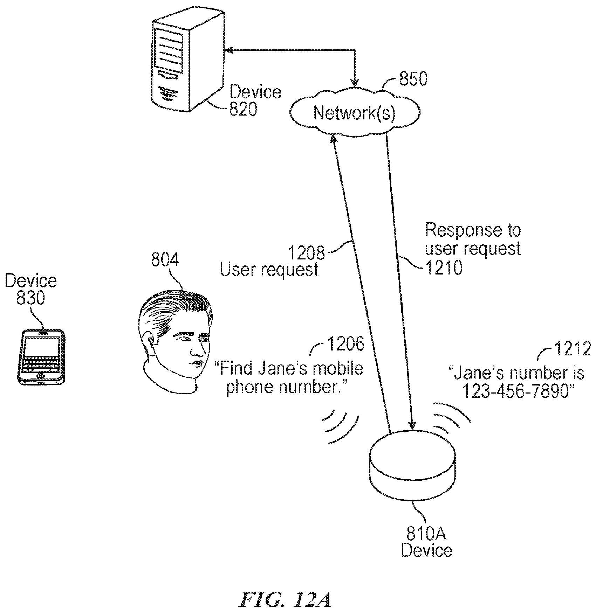

FIGs. 12A-12C illustrate functionalities of providing digital assistant services based on a user request for information, according to various examples. With reference to FIG. 12A, user 804 may provide a speech input 1206 such as "Find Jane's mobile phone number." Speech input 1206 thus represents a user request for a telephone number. The digital assistant operating on device 810A receives speech input 1206, and provides a representation of a user request 1208 to a remote device (e.g., device 820 such as a server) via network(s) 850, and not to a device that is disposed in the vicinity of device 810A (e.g. device 830 such as the user's smartphone). The digital assistant operating on device 810A may not provide the representation of user request 1208 to a device that is disposed in the vicinity of device 810A for a number of reasons. For example, the digital assistant operating on device 810A may determine that the information is unlikely to be available at a device that is disposed in the vicinity of device 810A (e.g., device 830); that there is no or poor connection to a device that is in the vicinity of device 810A (e.g., device 830 is out of communication range with device 810A); that the bandwidth to a device that is disposed in the vicinity of device 810A is limited or inferior; that a predetermined configuration requires providing representations of user requests to a remote device; or the like.

In some embodiments, device 820 receives the representation of user request 1208, which may cause device 820 to determine whether it is capable of providing the response to the user request. For example, device 820 may determine that the user 804's cloud account stores the requested telephone number and thus is capable of providing a response to the user request. In accordance with a determination that device 820 is capable of providing a response to the user request, device 820 can provide response 1210 to device 810A. For example, device 820 can provide Jane's telephone number to device 810A. The digital assistant operating on device 810A receives response 1210 from device 820, and provides a representation of response 1210 to user 804. For example, the digital assistant operating on device 810A can provide an audio output 1212 such as "Jane's number is 123-456-7890."

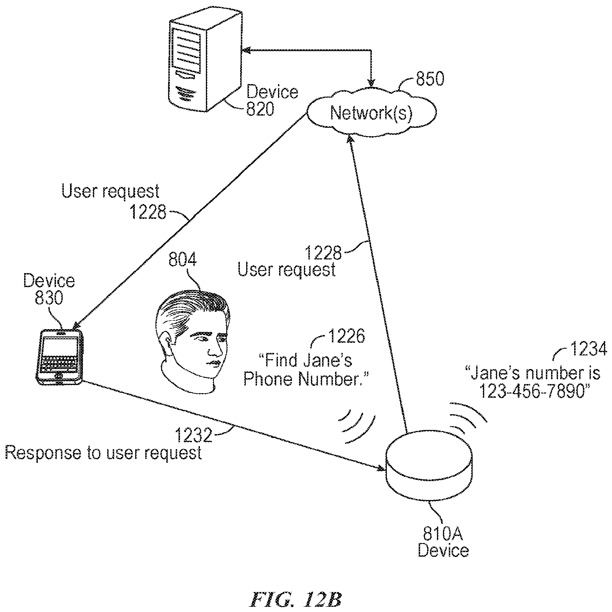

With reference to FIG. 12B, similar to FIG. 12A, after device 810A receives a speech input 1226 such as "Find Jane's phone number," it can provide a representation of a user request 1228 to device 820 via network(s) 850. In some embodiments, device 820 receives the representation of user request 1228, which may cause device 820 to determine whether it is capable of providing a response to user request 1228. For example, device 820 may determine that the user 804's cloud account does not store Jane's telephone number and thus is incapable of providing a response to the user request. In accordance with a determination that device 820 is incapable of providing the response to the user request, device 820 can forward the representation of user request 1228 to device 830. Device 830 can be a device disposed in the vicinity of device 810A and can be a device associated with user 804 (e.g., user 804's personal device such as a smartphone). Similar to those described above, device 830 can determine whether it is capable of providing a response to the user request (e.g., whether it stores Jane's telephone number), and provides response 1232 to device 810A in accordance with the determination. For example, in accordance with a determination that device 830 is capable of providing Jane's telephone number, device 830 can provide Jane's telephone number to device 810A. The digital assistant operating on device 810A receives the response 1232 from device 830, and provides a representation of response 1232 to the user. For example, the digital assistant operating on device 810A can provide an audio output 1234 such as "Jane's number is 123-456-7890." In some examples, the digital assistant operating on device 810A can receive the response directly from device 830. In some embodiments, device 830 can provide a response to device 820, which then forward the response to device 810A, as described below.

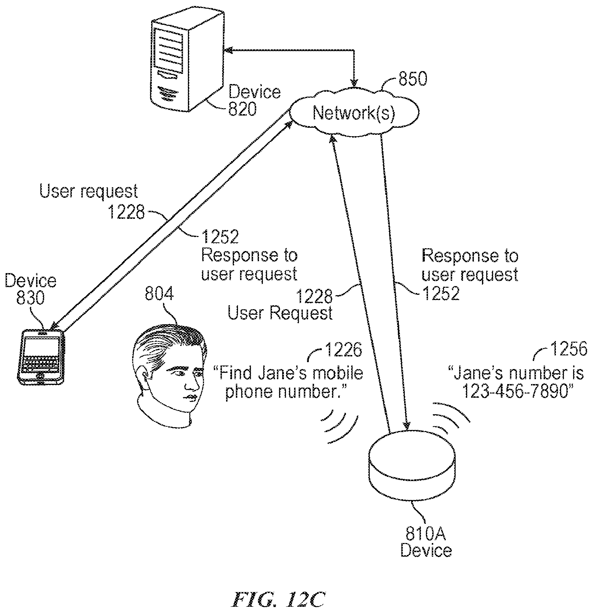

With reference to FIG. 12C and continuing the above example described in connection with FIG. 12B, the digital assistant operating on device 810A can receive a response 1252 indirectly from device 830. For example, device 830 can provide a response 1252 (e.g. Jane's telephone number) to device 820 (e.g., a server), which can then forward response 1252 to device 810A. The digital assistant operating on device 810A receives response 1252 from device 820, and provides a representation of response 1252 to user 804. For example, the digital assistant operating on device 810A can provide an audio output 1256 such as "Jane's number is 123-456-7890."

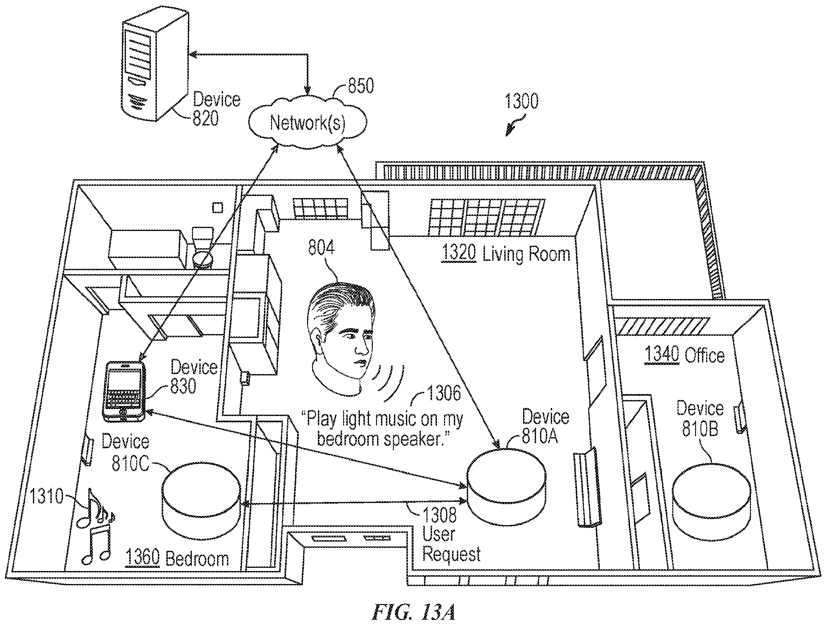

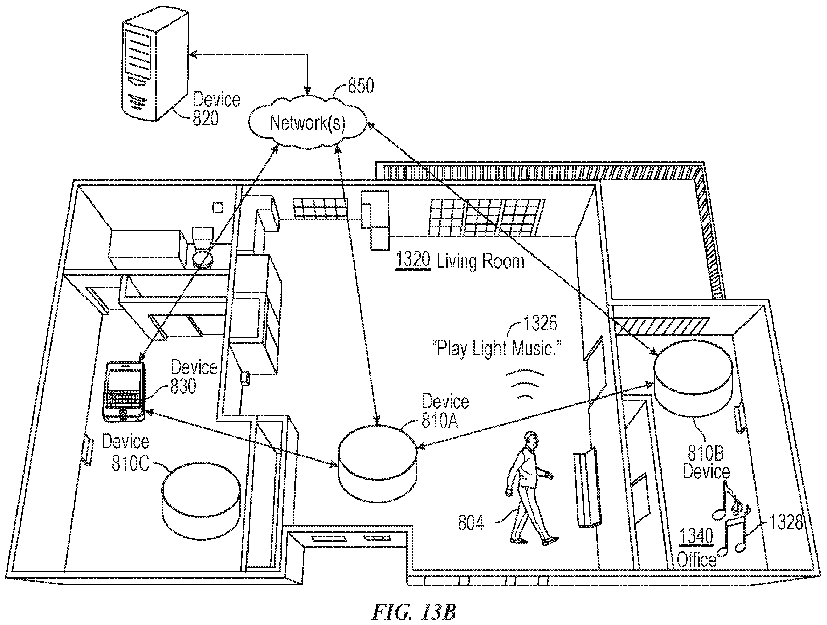

FIGs. 13A-13B illustrate functionalities of providing digital assistant services at a first electronic device or additional electronic devices, according to various examples. With reference to FIG. 13A, as described above, a plurality of devices 810A-C can be service-extension devices for extending digital assistant services from one device to another. For example, as shown in FIG. 13A, devices 810A-C can be disposed in the vicinity of device 830 (e.g., user 804's smartphone device) to extend digital assistant services provided by device 830. In some examples, disposing a plurality of devices 810A-C in the vicinity of device 830 may include disposing devices 810A-C within a predetermined boundary or distance of device 830. For example, devices 810A-C may be disposed in the same house or building as device 830. As shown in FIG. 13A, in some embodiments, devices 810A-C may be disposed in a manner for extending digital assistant services to different portions of an area 1300. As shown in FIG. 13, area 1300 may include, for example, a living room 1320, an office 1340, and a bedroom 1360. In some examples, device 810A can be disposed in living room 1320, device 810B can be disposed in office 1340; and device 810C can be disposed in bedroom 1360. As described above, devices 810A-C can be communicatively coupled to each other and to other devices (e.g., devices 820 and 830).

As shown in FIG. 13A, user 804 may be located within living room 1302, in which device 810A is disposed. User 804 may want to go to bed with some light music, and thus provide a speech input 1306 such as "Play light music on my bedroom speaker" to device 810A. The digital assistant operating on device 810A receives speech input 1306 representing a user request. Similar to those described above, device 810A can provide a representation of the user request to at least one of device 830 (e.g., the user's smartphone disposed in the vicinity of device 810A) or device 820 (e.g., a remoted disposed server). At least one of device 820 or device 830 determines whether the respective device is capable of providing a response to the user request, and provides the response to device 810A. The digital assistant operating on device 810A can then provide a representation of the response to user 804 (e.g., an audio output).

In some embodiments, prior to providing a representation of the response to user 804, the digital assistant operating on device 810A can determine whether the representation of the response is to be provided by device 810A or another device. For example, speech input 1306 may include "Play light music on my bedroom speaker." Accordingly, the digital assistant operating on device 810A can determine that the user intent is not to play the music on device 810A, but rather on device 810C disposed within bedroom 1360. The determination can be made using, for example, natural language processing described above. In accordance with a determination that the representation of the response is not to be provided by device 810A, device 810A can forward the response to, or cause the response to be provided to, device 810C disposed in bedroom 1360. Device 810C can thus provide an audio output 1310 playing the light music user requested. In other examples, in accordance with a determination that the representation of the response is to be provided by device 810A, device 810A can itself provide the representation of response to the user 804. As described above, multiple devices 810A-C can be disposed in area 1400. In some examples, a digital assistant (the digital assistant operating on device 810A, 810B, 810C, device 830, etc.) can determine the location of each device 810A-C (e.g., based on an initial configuration). For example, during initial configuration, a device or a device set can be assigned a name such as "Living Room" based on its location within the user's home. In some embodiments, the name of a device or a device set is a default name such as "Device 1" or "Device 1 - Living Room." In some embodiments, the device location (e.g., a room name) and other device configurations are included in configuration data. During a configuration process, configuration data is received and stored by the devices.

As described above, prior to provide a representation of the response to user 804, the digital assistant operating on device 810A can determine whether a representation of the response is to be provided by device 810A or another device. In some examples, such determination can be based on the user request represented by the user's speech input (e.g., "Play light music on my bedroom speaker"). In some examples, such determination can be based on at least one of detecting a location of the user or tracking the user's movement. With reference to FIG. 13B, user 804 may be located within living room 1302, in which device 810A is disposed. User 804 may want to go to office 1340 and having some light music, and thus provide a speech input 1326 such as "Play light music" to device 810A. Speech input 1326 does not indicate on which device 810A-C user would like the music to be played. The digital assistant operating on device 810A receives speech input 1326 representing a user request. Similar to those described above, device 810A can provide a representation of the user request to at least one of device 830 (e.g., the user's smartphone disposed in the vicinity of device 810A) or device 820 (e.g., a remoted disposed server). At least one of device 820 or device 830 determines whether the respective device is capable of providing a response to the user request, and provides the response to device 810A.

Prior to provide a representation of the response to user 804, device 810A can determine whether the representation of the response (e.g., an audio output) is to be provided by device 810A or another device. In some examples, device 810A can make such determination based on at least one of detecting of user 804's location or tracking user 804's movement. For example, device 810A may detect that user 804 is located in living room 1320 but is moving toward office 1340. Device 810A can detect location and/or movement using, for example, one or more sensors such as motion sensors, positioning systems, cameras, etc. In accordance with a determination that user 804 is moving toward office 1340, the digital assistant operating on device 810A can determine that the user intent is not to play the music on device 810A, but rather on device 810B disposed within office 1340, or that the music playback should be started on device 810A, but continued on device 810B disposed in office 1340 (and optionally discontinued on device 810A). In accordance with a determination that the representation of the response is not to be provided by device 810A, device 810A can forward the response, or cause the response to be provided, to device 810B disposed in office 1340. Device 810B can thus provide an audio output 1328 playing the light music user requested.

In other examples, in accordance with a determination that the representation of the response is to be provided by device 810A (e.g., user 804 is located in living room 1320 and not moving), device 810A can itself provide the representation of response to the user 804. It is appreciated that the digital assistant operating on device 810A can determine whether the response is to be provided device 810A or another device based on any context information, such as the user's preferences (e.g., user 804 prefers to listen to music before bedtime), past devices used for providing responses, device attributes and capabilities (e.g., device 810A may provide better sound than device 810B), etc.

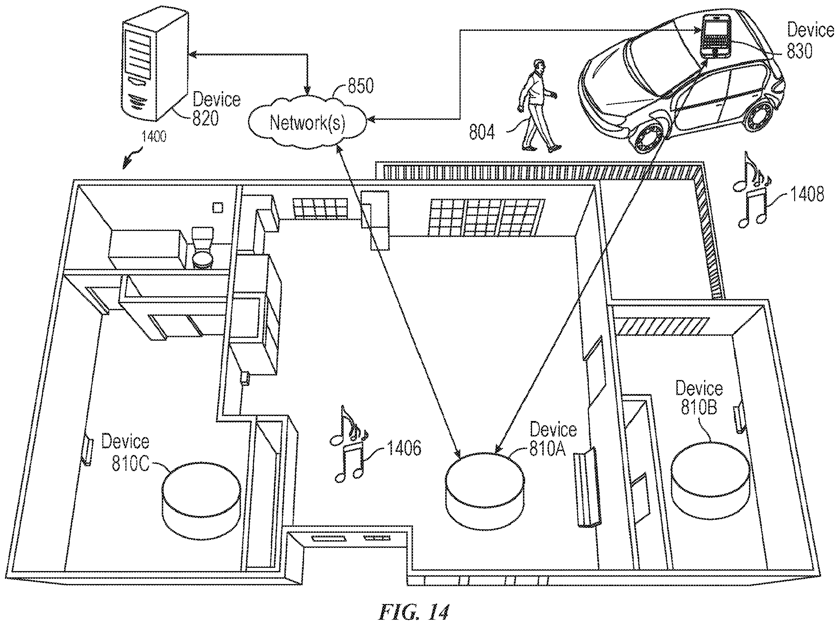

FIG. 14 illustrates functionalities of providing continuity of digital assistant services between different electronic devices, according to various examples. As illustrated in FIG. 14, the digital assistant operating on device 810A may be providing a response 1406 to user 804 (e.g., playing music). While device 810A is in the process of providing response 1406, user 804 may move out of area 1400, in which device 810A is disposed. For example, user 804 may need to leave his or her house and go to work. In some embodiments, the digital assistant operating on device 810A can determine whether the response 1406 is to be continually provided a different electronic device. As an example, while device 810A is providing response 1406, user 804 may provide a speech input such as "Continue to play the music on my smartphone." Device 810A receives this speech input and can determine that the user intent is to continue to play the music on device 830 (e.g., the user's smartphone). Such determination can be made using natural language processing techniques described above. Based on the determined user intent, device 810A can determine that response 1406 should be to continue to provide the music at a different device.

In some embodiments, user 804 can also provide the speech input such as "Continue to play the music on my smartphone" to device 830, instead to device 810A. Based on the speech input and context information (e.g., device 810A is currently providing audio outputs), device 830 can determine the user intent is to continually perform a task that is being performed at device 810A. For example, device 830 can communicate with device 810A (and other devices communicatively coupled to device 830) to determine the status information of device 810A. The status information of device 810A may indicate that it is currently playing music. Accordingly, device 830 may determine that the user intent is to continually play the music that is being currently played on device 810A. Based on the determination, device 830 can communicate with device 810A for continually performing the task that is being currently performing by device 810A. For example, device 830 can obtain the content and/or metadata (e.g., time stamps associated with the currently playing music), continually play the music by device 830, and cause device 810A to stop playing.

As another example illustrated in FIG. 14, while the digital assistant operating on device 810A is providing response 1406, device 810A can perform at least one of detecting a location of the user or tracking the user's movement. Device 810A can detect location and/or movement using, for example, one or more sensors such as motion sensors, positioning systems, cameras, etc. As an example, device 810A can continuously or periodically track the user 804's current location and/or movement. In some examples, device 810A can detect whether the user 804's location variation with respect to device 810A satisfies a predetermined condition. For example, device 810A can detect the user 804 has moved out of a predetermined boundary of area 1400 (e.g., a house). As a result, device 810A can determine that response 1406 should be continually provided at a different device.

As another example, while device 810A is in the process of providing response 1406, it can detect the movement of a device associated with user 804 (e.g., device 830 such as the user's smartphone). For example, device 810A can determine that the communication signal strength of device 830 reduced over a short duration of time, indicating that device 830 likely moves out of the boundary of area 1400. As a result, device 810A can determine that response 1406 should be continually provided at a different device (e.g., device 830).

In some embodiments, in accordance with a determination that response 1406 is to be continually provided at a different electronic device, device 810A can cause response 1406 to be continually provided by one or more different electronic devices. For example, device 810A can transmit the remaining content (e.g., the rest of the response 1406) for providing response 1406 and/or metadata associated with providing the response 1406 (e.g., the timestamp of the current playing media that was streamed from device 820 or device 830) to device 830 (e.g., the user's smartphone). In some examples, device 810A can also send a notification to another device (e.g., device 820), from which the content of response 1406 is obtained. The notification may indicate or request that the response 1406 is to be continually provided at another device and thus the content of response 1406 should be provided to that device. Based on the received remaining content and/or metadata, device 830 can continue to provide response 1406 to user 804. More details of continually providing digital assistant services on a different device are described in co-pending U.S. Patent Application No. 15/271,766, entitled "INTELLIGENT DIGITAL ASSISTANT IN A MULTI-TASKING ENVIRONMENT," filed September 21, 2016.

In the above description in connection with FIGs. 8A-8B, 9A-9C, 10A-10C, 11A-11D, 12A-12C, 13A-13B, and 14, device 820 can be a remote device such as a server. In some embodiments, a device can be disposed in the vicinity of devices 810A-C, operating as a proxy device for device 820. As one example and with reference back to FIG. 8A, device 840 (e.g., a TV set-top box) can operate as a proxy device for device 820 (e.g., a remote server). A proxy device can operate as an intermediary for requests from client devices (e.g., device 810A) seeking resources from other devices (e.g., servers). As a proxy, device 840 can operate to process requests from a plurality of home automation devices (e.g., a smart thermostat, a smart door, a smart light switch, etc.). For example, based on user's speech inputs (e.g., speech input received via device 810A), a smart thermostat may be required to perform a task of adjusting temperature and/or humidity levels. The smart thermostat may thus communicate with device 840 to request current temperature and humidity data from various sensors. Device 840 can thus operate as a proxy to relay the request to appropriate devices and/or sensors and provide the data to the smart thermostat.

### 5. Exemplary functions of a digital assistant providing digital assistant services based on notifications of events.

FIGs. 2, 4, 6, and 15A-15G illustrate functionalities of providing digital assistant services by a digital assistant operating on an electronic device. In some examples, the digital assistant (e.g., digital assistant system 700) is implemented by a user device according to various examples. In some examples, the user device, a server (e.g., server 108, device 820), or a combination thereof, may implement a digital assistant system (e.g., digital assistant system 700). The user device can be implemented using, for example, device 200, 400, 600, 810A-C, 820, and/or 830. In some examples, the user device is a device having audio outputting capabilities and network connectivity, a smartphone, a laptop computer, a desktop computer, or a tablet computer.

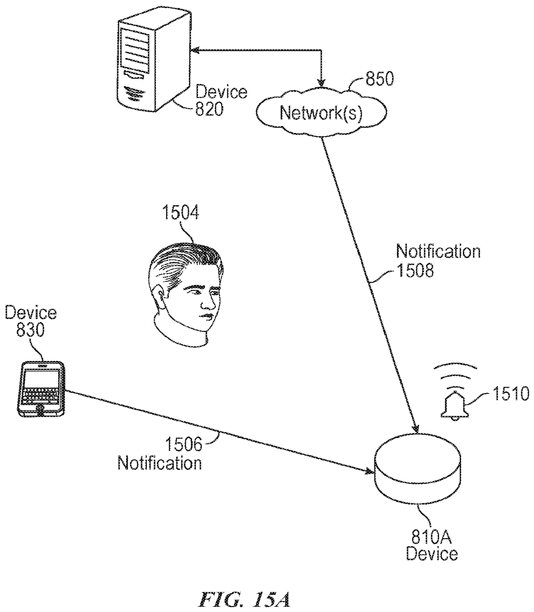

FIGs. 15A-15G illustrate functionalities of providing digital assistant services based on notifications of events, according to various examples. As illustrated in FIG. 15A, device 810A can receive a notification 1506 and/or 1508 of one or more events associated with user 1504. As described above, device 810A (and similarly other devices 810B-C) can include one or more audio input and output devices (e.g., a microphone and one or more speakers), one or more network communication interfaces, and optionally one or more indicators (e.g., lights) for providing device operational indications. In some examples, as shown in FIG. 15A, device 810A may receive notification 1506 from device 830 (e.g., the user's smartphone) and/or notification 1508 from device 820 (e.g., a remote server).

In some examples, a notification of an event can include a representation of at least one of an incoming call, a reminder, a message, a voicemail, a news alert, or the like. For example, a digital assistant operating on device 830 may receive a calendar reminder from a calendar application, and may forward a representation of the calendar reminder to device 810A. As shown in FIG. 15A, in response to receiving the notification 1506 and/or 1508, the digital assistant operating on device 810A can output one or more indications 1510 of notification 1506 and/or 1508. In some examples, an indication 1510 can be an audio indication (e.g., a beep, a tone, etc.), a visual indication (e.g., flashing lights, displayed messages, etc.), or a combination of audio and visual indications. While FIG. 15A illustrates that indication 1510 is provided by device 810A, indication 1510 can also be provided by other devices, such as device 830 and/or devices 810B-C (not shown in FIG. 15A). As described, device 830 can be, for example, the user's smartphone, smart watch, tablet, etc.; and devices 810B-C can be similar type of devices as device 810A and are disposed in the vicinity of device 810A (e.g., in the same house). Thus, an indication of a notification can be provided to user 1504 by any device at any location. Providing indications by multiple devices disposed at various locations can improve the likelihood of capturing user 1504's attention regarding the notifications. In some examples, a notification is only provided by one device (e.g., device 810A) in order to minimize the disturbance to user 1504.

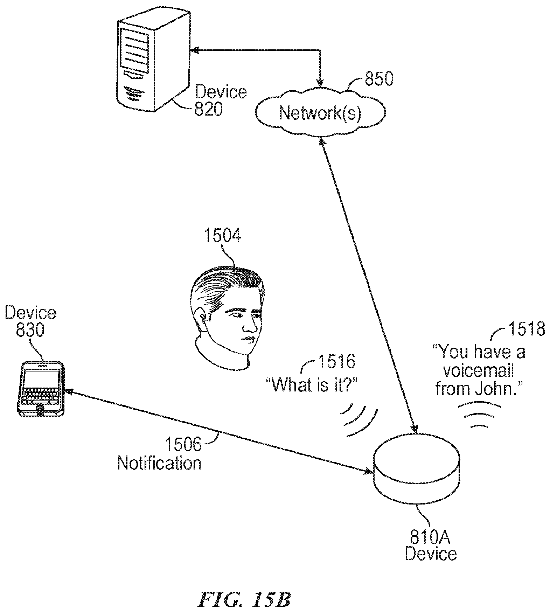

As illustrated in FIG. 15B and continuing the above example, user 1504 receives indication 1510 and may provide a speech input 1516 inquiring about indication 1510. For example, speech input 1516 can include "What is it?" In some examples, the digital assistant operating on device 810A receives speech input 1516 and can output a response 1518 in accordance with the notification of the event. For example, as shown in FIG. 15B, if the notification of the event includes a representation of a voice message from John, the digital assistant operating on device 810A can output a response 1518 such as "You have a voicemail from John." If the notification of the event includes a representation of a calendar reminder, the digital assistant operating on device 810A can output a response 1518 such as "You have an upcoming event on your calendar." If the notification of the event includes a representation of an incoming call from John, the digital assistant operating on device 810A can output a response 1518 such as "You have an incoming call from John."

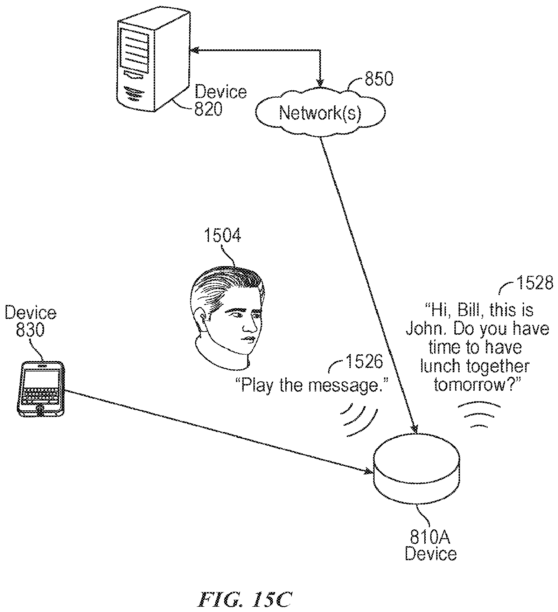

As illustrated in FIG. 15C and continuing the above example, after outputting response 1518 in accordance with the notification of the event, the digital assistant operating on device 810A can continue to monitor user inputs by, for example, listening for user utterances during or after response 1518. For example, the digital assistant operating on device 810A may receive a subsequent speech input 1526. Speech input 1526 may include, for example, "Play the message," "What is the event?", or "Take the call from John."

In some examples, as shown in FIG. 15C, the digital assistant operating on device 810A receives speech input 1526 and can determine the user intent based on speech input 1526. For example, the digital assistant operating on device 810A can determine that the user intent is to play the voicemail from John, listen to the upcoming calendar event, or take the call from John. Accordingly, the digital assistant operating on device 810A can provide the notification to user 1504 in accordance with the determined user intent. For example, the digital assistant operating on device 810A can provide an audio output 1528 corresponding to the voicemail from John (e.g., "Hi, Bill, this is John. Do you have time to have lunch together tomorrow?").

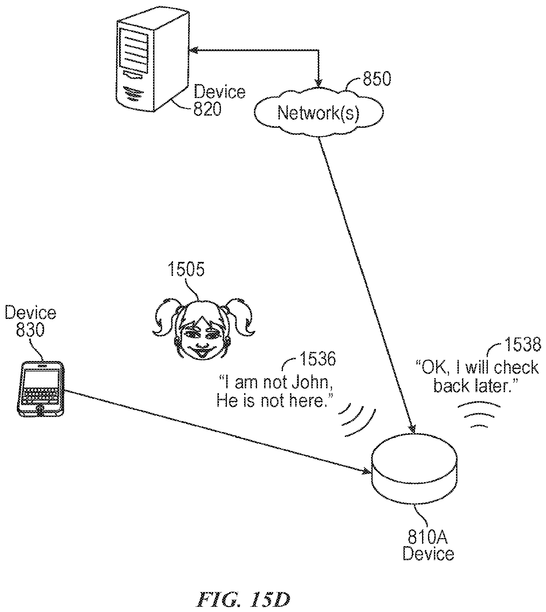

In some embodiments, the digital assistant operating on device 810A can determine whether the notification is to be provided at device 810A in according with one or more speech inputs. As described above, in some examples, device 810A can be shared among multiple users. Therefore, a notification of an event that device 810A receives may or may be for a particular user (e.g., user 1504). As illustrated in FIG. 15D and continuing the above example where device 810A outputs a response in accordance with the notification of the event (e.g., "Bill, you have a voicemail from John"), device 810A may receive a subsequent speech input 1536 from user 1505, which is a user that is different from the intended user for providing the notification of the event. Speech input 1536 may include, for example, "I am not Bill. He is not here."

The digital assistant operating on device 810A obtains an identity of the user who provides one or more speech inputs and determines whether the notification is to be provided to the user who provides the one or more speech inputs. As shown in FIG. 15D, for example, based on speech input 1536 (e.g., "I am not Bill. He is not here"), the digital assistant operating on device 810A can determine that user 1505 is not the user to which the notification is intended to be provided (e.g., "not Bill"). Accordingly, the digital assistant operating on device 810A can determine that the notification should not be provided to user 1505.

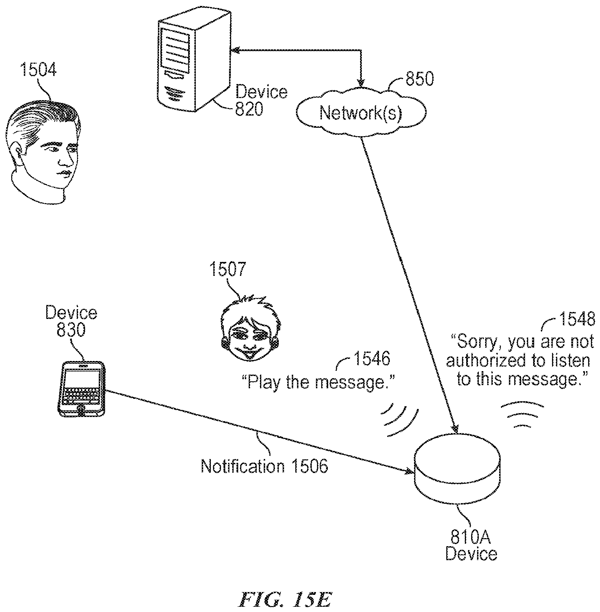

In some examples, to obtain the identity of the user who provides one or more speech inputs, the digital assistant operating on device 810A can obtain authentication data associated with the user. As illustrated in FIG. 15E and continuing the above example where device 810A outputs a response in accordance with the notification of the event (e.g., "Bill, you have a voicemail from John"), the digital assistant operating on device 810A may receive a subsequent speech input 1546 from user 1507, which is a user that is different from the intended user for providing the notification of the event. User 1507 may be, for example, a guest in user 1504's (e.g., Bill) house. User 1507 may decide to listen to Bill's message and thus speech input 1546 may include, for example, "Play the message." In some examples, the digital assistant operating on device 810A can obtain authentication data associated with user 1507. Similar to those described above, the authentication data can include user 1507's voice biometrics, user 1507's facial recognition data, sensing of another device that identifies the user 1507 (e.g., the user's smart watch), and other credentials of the user 1507 (e.g. fingerprints, passwords, etc.). Based on the authentication data, the digital assistant operating on device 810A can obtain a determination of the identity of user 1507. For example, the digital assistant operating on device 810A can authenticate user 1507 based on the authentication data. As another example, the digital assistant operating on device 810A can provide the authentication data to at least one of device 830 (e.g., Bill's smartphone) or device 820 (e.g., a server) for authentication. Device 830 and/or device 820 receive the authentication data and can perform authentication to obtain identity of user 1507 (e.g., matching voice biometrics, fingerprints, passwords, etc.). The digital assistant operating on device 810A can thus receive user 1507's identity from at least one of device 830 or device 820.

The digital assistant operating on device 810A determines, based on the identity of the user and based on the received notification, whether the notification should be provided to the user who provides at least one of the one or more speech inputs. For example, as shown in FIG. 15E, based on the identity of user 1507 (e.g., a guest in user 1504's house) and notification 1506 (e.g., a representation of a voicemail for Bill), the digital assistant operating on device 810A may determine that notification 1506 should not be provided to user 1507 because the identity of user 1507 does not match with the user for which the notification is intended (e.g., user 1507 is not Bill or authorized. Accordingly, the digital assistant operating on device 810A can provide an audio output 1548 informing user 1507 that he or she is not authorized to receive the notification (e.g., "Sorry, you are not authorized to listen to this message"). On the other hand, the digital assistant operating on device 810A may determine that notification 1506 should be provided to user 1507 because the identity of user 1507 matches with the user for which the notification is intended (e.g., user 1507 is Bill) or authorized. For example, user 1507 may be user 1504's family member and is authorized to receive notifications for user 1504. Accordingly, device 810A can provide an audio output including the content of the notification 1506.

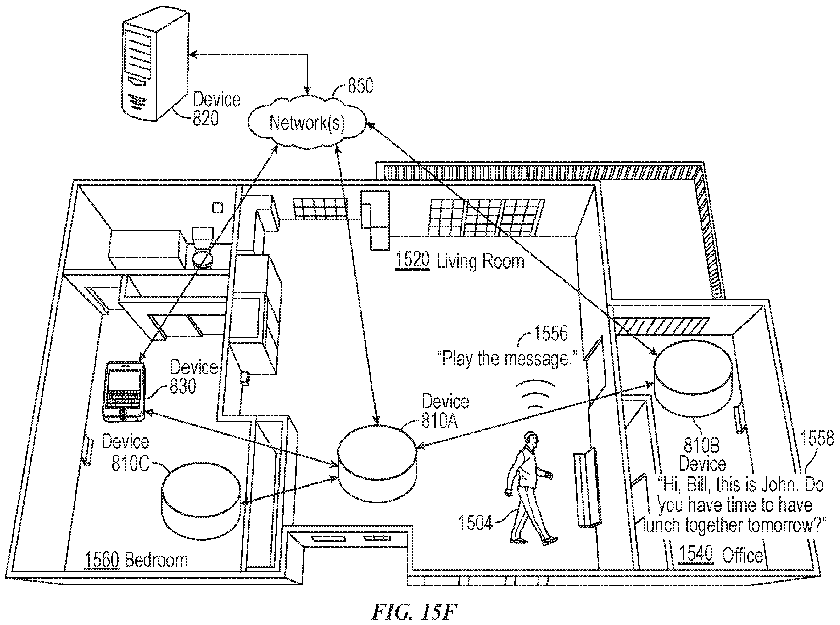

In some examples, in accordance with a determination that the notification is to be provided to the user who provides at least one of the one or more speech inputs, the digital assistant operating on device 810A can further determine whether the notification is to be provided at device 810A. As illustrated in FIG. 15F, based on a speech input 1556 (e.g., "Play the message"), device 810A can obtain the identity of user 1504 and determine that user 1504 is authorized to receive the notification. Thus, the digital assistant operation on device 810A can determine that the notification should be provided to user 1504. In some examples, the digital assistant operation on device 810A can further determine whether the notification is to be provided at device 810A. As shown in FIG. 15A, one or more devices may be disposed in the vicinity of user 1504. For example, device 810A may be disposed in living room 1520; device 810B may be disposed in office 1540; and device 810C may be disposed in bedroom 1560. In some examples, device 810A may or may not be the optimum device for providing notifications to user 1504. For example, user 1504 may be moving away from device 810A (e.g., moving toward office 1540). As another example, there may be other users (e.g., guests) near device 810A disposed in living room 1520, and thus user 1504 may not want to receive notifications from device 810A for privacy concerns.

Similar to those described above, in some examples, a determination of whether the notification is to be provided at device 810A can be based on the user request represented by the user's speech input (e.g., "Play the message on my office speaker"). In some examples, such determination can be based on at least one of detecting a location of the user or tracking the user's movement. For example, user 1504 may want to go to office 1540 to receive the notification (e.g., listen to a voicemail, pick up a phone call, etc.). The digital assistant operating on device 810A may detect that user 804 is located in living room 1520 but is moving toward office 1540. The digital assistant operating on device 810A can detect location and/or movement using, for example, one or more sensors such as motion sensors, positioning systems, cameras, signal strength measurements to the various devices, etc. Based on the detection of user movement, the digital assistant operating on device 810A can determine that the notification should be provided by device 810B disposed in office 1540, instead of device 810A disposed in living room 1520. In other examples, the digital assistant operating on device 810A may detect that user 804 is not moving and remains in living room 1520. Accordingly, device 810A can determine that the notification should be provided by device 810A disposed in living room 1520.

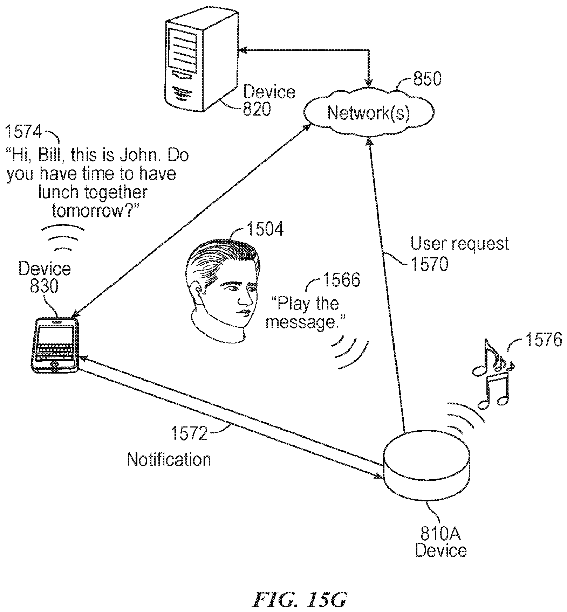

FIG. 15G illustrates another example in which device 810A may determine that the notification should be provided by another device. As shown in FIG. 15G, while receiving notification 1572 (e.g., a representation of a voicemail from John), device 810A may be providing audio outputs 1576 (e.g., playing a media item). Thus, the digital assistant operating on device 810A may determine that notification 1572 should not be provided at device 810A to avoid interruption of providing audio output 1576. Accordingly, the digital assistant operating on device 810A can determine an additional device for providing notification 1572. In some examples, such determination is based on context information. For instance, based on information that device 810A is currently providing audio output 1576 and based on detection of device 830, device 810A can determine that the notification 1572 can be provided at device 830. In some examples, device 810A can provide an output (e.g., audio and/or visual output) confirming with user 1504 that notification 1572 should be provided at another device. It is appreciated that the digital assistant operating on device 810A can determine whether the notification is to be provided at device 810A or at another device based on any context information, such as the user's preferences (e.g., user 1504 prefers to listen voicemail from a colleague on device 810B in office 1540), past devices used for providing notifications, device attributes and capabilities (e.g., device 810B may provide better sound than device 810A), etc.

In some embodiments, in accordance with a determination that a notification is to be provided at device 810A, the digital assistant operating on device 810A can provide the notification at device 810A. For example, as illustrated in the above examples, digital assistant operating on device 810A can provide audio outputs including the notification (e.g., output voicemails, phone calls, calendar reminders, etc.). In accordance with a determination that a notification is to be provided at a device different from device 810A, the digital assistant operating on device 810A can cause the notification to be provided at the another device. For example, the digital assistant operating on device 810A can forward the notification to device 830, or send a request to device 830 for providing the notification at device 830. Based on the notification or request, device 830 can provide audio outputs 1574 including the content of the notification (e.g., output voicemails, phone calls, calendar reminders, etc.).

### 6. Process for providing digital assistant services based on user inputs.

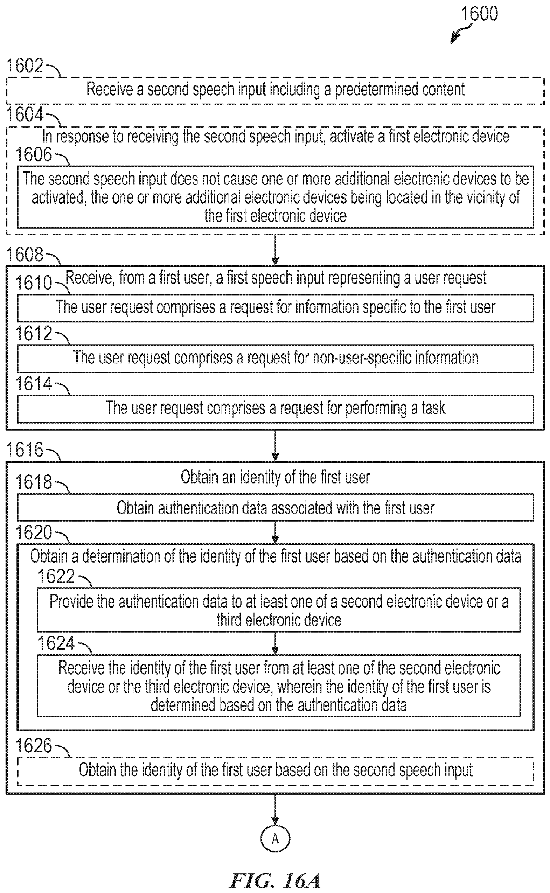

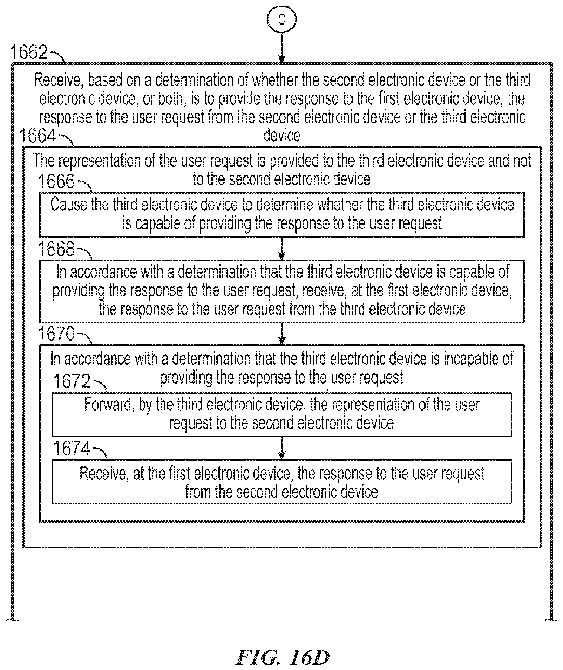

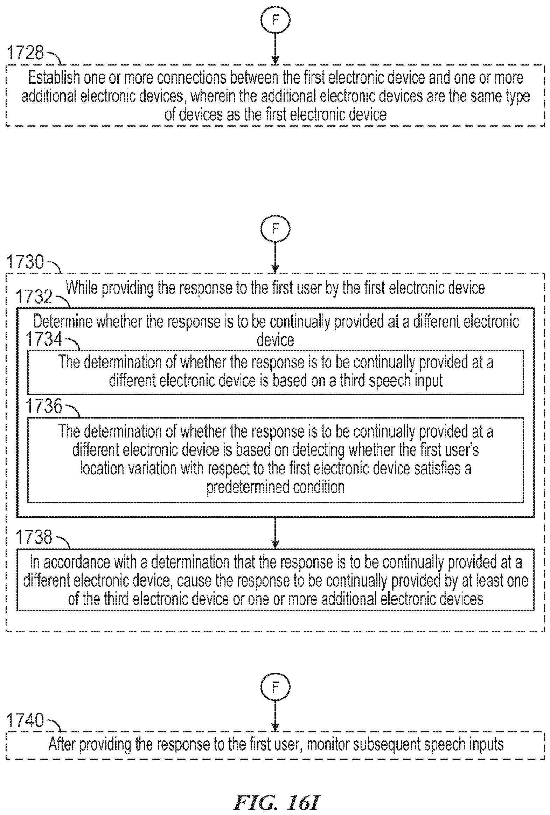

FIGs. 16A-16I illustrates process 1600 for operating a digital assistant for providing digital assistant services based on user inputs, according to various examples. Process 1600 is performed, for example, using one or more electronic devices implementing a digital assistant. In some examples, process 1600 is performed using a client-server system (e.g., system 100), and the blocks of process 1600 are divided up in any manner between the server (e.g., DA server 106) and a client device. In other examples, the blocks of process 1600 are divided up between the server and multiple client devices (e.g., a mobile phone and a smart watch). Thus, while portions of process 1600 are described herein as being performed by particular devices of a client-server system, it will be appreciated that process 1600 is not so limited. In other examples, process 1600 is performed using only a client device (e.g., user device 104, electronic device 810A, device 830, or device 840) or only multiple client devices. In process 1600, some blocks are, optionally, combined, the order of some blocks is, optionally, changed, and some blocks are, optionally, omitted. In some examples, additional steps may be performed in combination with the process 1600.

With reference to FIG. 16A, at block 1602, a second speech input including a predetermined content (e.g., "Wake up, speaker" or "Hey, Speaker") is received. At block 1604, in response to receiving the second speech input, a first electronic device is activated. The first electronic device can be a service-extension device (e.g., device 810A as shown in FIGs. 8A-15G). At block 1606, in some examples, the second speech input does not cause one or more additional electronic devices to be activated. The one or more additional electronic devices may be disposed in the vicinity of the first electronic device. For example, the volume or sound pressure associated with the speech input can be detected and recorded by both of the first electronic device and an additional electronic device. Based on the comparison of the sound pressure detected at the two devices, the user's position relative to the two devices can be determined. For example, it may be determined that the user is physically closer to the first electronic device than to other device. As a result, the first electronic device may be activated while the other device may not be activated.

At block 1608, a first speech input representing a user request is received from a first user. At block 1610, the user request comprises a request for information specific to the first user (e.g., the first user's calendar, contacts, etc.). At block 1612, the user request comprises a request for non-user-specific information (e.g., weather information, stock prices, sports game information, etc.) At block 1614, the user request comprises a request for performing a task (e.g., play music, establish a conference, etc.).

At block 1616, an identity of the first user is the obtained. At block 1618, authentication data associated with the first user is obtained. The authentication data may include, for example, user's voice biometrics, user's facial recognition data, sensing of another electronic device that identifies the user, other credentials of the user, such as the user's fingerprints, passwords, or the like. At block 1620, a determination of the identity of the first user is obtained based on the authentication data. At block 1622, to obtain the identity of the first user, the authentication data are provided to at least one of a second electronic device (e.g., a remote server) or the third electronic device (e.g., user's smartphone). At block 1624, the identity of the first user is received from at least one of the second electronic device or the third electronic device. The identity of the first user is determined based on the authentication data. At block 1626, the identity of the first user is obtained based on the second speech input (e.g., "Wake up, speaker" or "Hey, speaker"). As described above, the second speech input may be associated with the user's voice biometrics and can be used for determination of the user's identity.

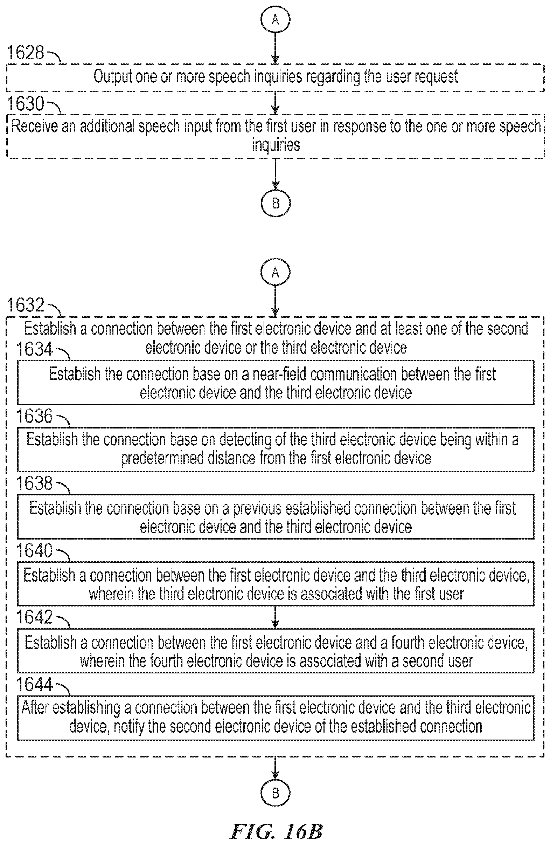

With reference to FIG. 16B, at block 1628, one or more speech inquiries regarding the user request represented by the first speech input is outputted. The speech inquiries may be used to clarify the first speech input with the first user (e.g., "What's that?" or "I did not quite get that"). At block 1630, an additional speech input is received from the first user in response to the one or more speech inquiries. For example, the first user may repeat or rephrase the first speech input).

At block 1632, a connection is established between the first electronic device (e.g., a server-extension device) and at least one of the second electronic device (e.g., a remote server) or the third electronic device (e.g., a device disposed in the vicinity of the first electronic device). At block 1634, establishing a connection is based on a near-field communication between the first electronic device and the third electronic device. At block 1636, establishing a connection is based on detecting of the third electronic device being within a predetermined distance from the first electronic device. At block 1638, establishing a connection is based on a previous established connection between the first electronic device and the third electronic device. For example, the connected can be established based a log file indicating that the first electronic device and the third electronic device have been connected in the past before. The log file may also indicate connection parameters used in the previous connection.

As described above, a server-extension device can be shared by multiple users and thus connect to multiple devices associated with one or more users. At block 1640, a connection is established between the first electronic device (e.g., a service-extension device) and the third electronic device (e.g., a client device of the first user). The third electronic device is associated with the first user. At block 1642, a connection is established between the first electronic device and a fourth electronic device (e.g., a tablet device of the second user). The fourth electronic device is associated with a second user. At block 1644, in some examples, after establishing a connection between the first electronic device and the third electronic device, the second electronic device is notified of the established connection. For example, after a connection is established between a server-extension device (e.g., device 810A shown in FIGs. 8A-8B) and a smartphone device, a server can be notified of the established connection.

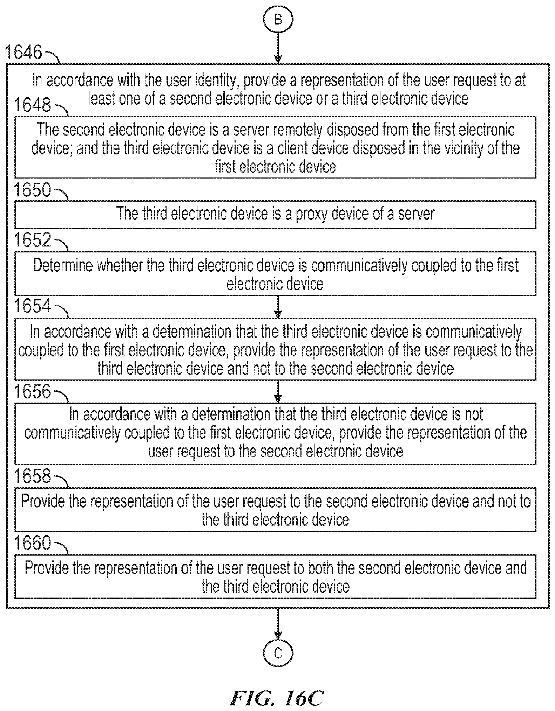

With reference to FIG. 16C, as described above, an identity of the first user is obtained. At block 1646, in accordance with the user identity, a representation of the user request is provided to at least one of a second electronic device or a third electronic device. At block 1648, the second electronic device is a server remotely disposed from the first electronic device; and the third electronic device is a client device disposed in the vicinity of the first electronic device. At block 1650, the third electronic device is a proxy device of a server. For example, a client device (e.g., device 840 shown in FIG. 8A) can operate as a proxy device for a server (e.g., device 820 shown in FIG. 8A) to process requests from other devices (e.g., home automation devices such as am intelligent thermostat).

At block 1652, in some examples, to provide the representation of the user request to at least one of the second electronic device or the third electronic device, it is determined whether the third electronic device (e.g., a client device disposed in the vicinity of the first electronic device) is communicatively coupled to the first electronic device (e.g., a service-extension device). At block 1654, in accordance with a determination that the third electronic device is communicatively coupled to the first electronic device, the representation of the user request is provided to the third electronic device and not to the second electronic device. At block 1656, in accordance with a determination that the third electronic device is not communicatively coupled to the first electronic device, the representation of the user request is provided to the second electronic device.

At block 1658, in some examples, the representation of the user request is provided to the second electronic device (e.g., a remote server) and not to the third electronic device (e.g., a client device disposed in the vicinity of the first electronic device). At block 1660, in some examples, the representation of the user request is provided to both the second electronic device and the third electronic device.

As described above, the second electronic device and/or the third electronic device receives the representation of the user request and can determine whether one or both is to provide a response to the first electronic device. With reference to FIG. 16C, at block 1662, based on a determination of whether the second electronic device or the third electronic device, or both, is to provide a response to the first electronic device, the response to the user request is received from the second electronic device or the third electronic device.

At block 1664, as described above, in some examples, the representation of the user request is provided to the third electronic device and not to the second electronic device. At block 1666, for receiving the response to the user request, it is caused the third electronic device (e.g., a client device) to determine whether the third electronic device is capable of providing the response to the user request. At block 1668, in accordance with a determination that the third electronic device is capable of providing the response to the user request, it is received, at the first electronic device, the response to the user request from the third electronic device. At block 1670, a determination is made that the third electronic device is incapable of providing the response to the user request. At block 1672, in accordance with such a determination, the representation of the user request is forwarded by the third electronic device to the second electronic device. At block 1674, the response to the user request is received at the first electronic device from the second electronic device.

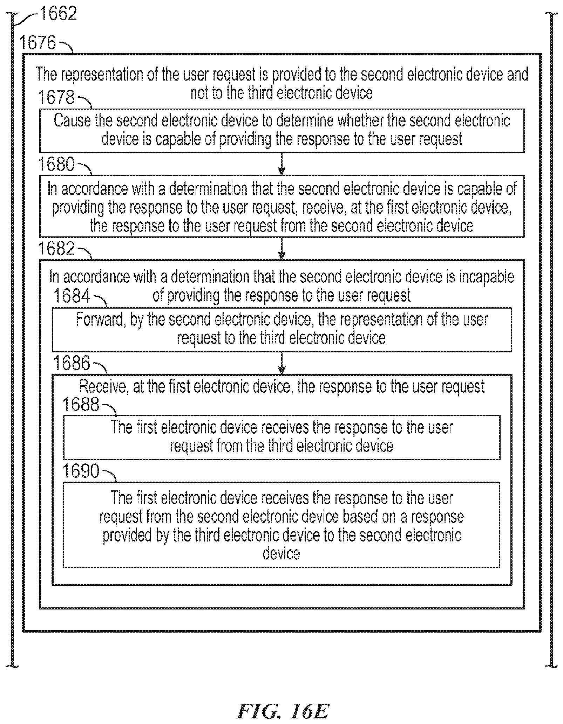

With reference to FIG. 16E, as described above, in some examples, at block 1676, the representation of the user request is provided to the second electronic device (e.g., a remote server) and not to the third electronic device (e.g., a client device). At block 1678, for receiving a response to the user request at the first electronic device, it is caused the second electronic device to determine whether the second electronic device is capable of providing the response to the user request. At block 1680, in accordance with a determination that the second electronic device is capable of providing the response to the user request, the response to the user request is received at the first electronic device from the second electronic device. At block 1682, it is determined that the second electronic device is incapable of providing the response to the user request.

At block 1684, in accordance with such a determination, the representation of the user request is forwarded by the second electronic device to the third electronic device. The third electronic device (e.g., a client device) can thus provide a response based on the user request. At block 1686, the response to the user request.is received at the first electronic device. At block 1688, the first electronic device receives the response to the user request from the third electronic device. At block 1690, the first electronic device receives the response to the user request from the second electronic device (e.g., a remote server) based on a response provided by the third electronic device to the second electronic device. For example, a client device can forward the response to the remote server, which provides the response to the first electronic device (e.g., a server-extension device).

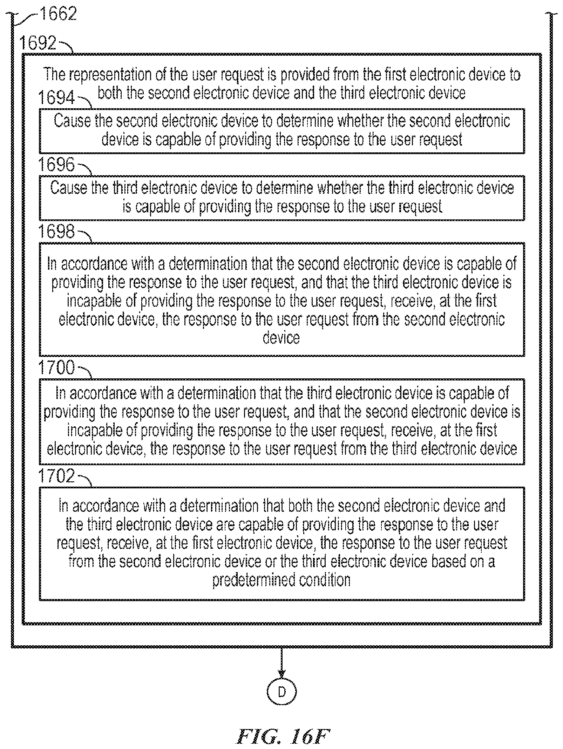

With reference to FIG. 16F, as described, in some examples, at block 1692, the representation of the user request is provided from the first electronic device to both the second electronic device and the third electronic device. At block 1694, for receiving the response to the user request, it is caused the second electronic device (e.g., a remote server) to determine whether the second electronic device is capable of providing the response to the user request. At block 1696, for receiving the response to the user request, it is caused the third electronic device (e.g., a client device disposed in the vicinity of the first electronic device) to determine whether the third electronic device is capable of providing the response to the user request. One or both of the determinations in block 1694 and block 1696 can be performed.

At block 1698, in accordance with a determination that the second electronic device is capable of providing the response to the user request, and that the third electronic device is incapable of providing the response to the user request, the response to the user request is received at the first electronic device from the second electronic device. At block 1700, in accordance with a determination that the third electronic device is capable of providing the response to the user request, and that the second electronic device is incapable of providing the response to the user request, the response to the user request is received at the first electronic device from the third electronic device. At block 1702, in accordance with a determination that both the second electronic device and the third electronic device are capable of providing the response to the user request, the response to the user request is received at the first electronic device from the second electronic device or the third electronic device based on a predetermined condition. The predetermined condition can be, for example, a pre-configured policy (e.g., the third electronic device is the default device to provide a response), user preferences, bandwidth conditions of the connections to the second and third electronic devices, etc.

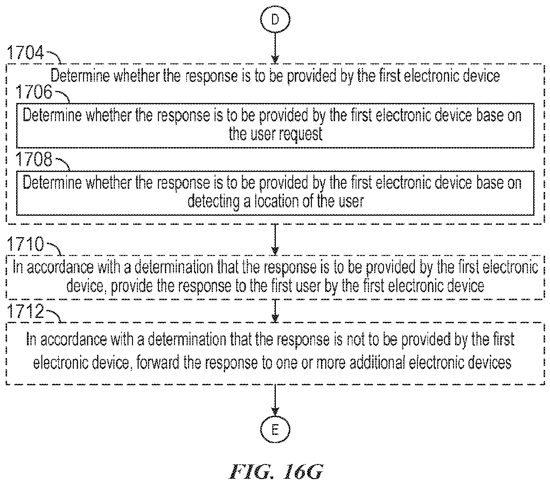

With reference to FIG. 16G, at block 1704, it is determining whether the representation of the response is to be provided by the first electronic device (e.g., a service-extension device). At block 1706, the determination of whether the response is to be provided by the first electronic device is based on the user request (e.g., the user's speech input indicates that the response is to be provided at a different electronic device). At block 1708, the determination of whether the response is to be provided by the first electronic device is based on at least one of detecting a location of the user or tracking the user's movement. For example, if it is detected that the user is moving away from the first electronic device toward another device, the response may not be provided by the first electronic device.

At block 1710, in accordance with a determination that the representation of the response is to be provided by the first electronic device, the representation of the response is provided to the first user by the first electronic device. At block 1712, in accordance with a determination that the representation of the response is not to be provided by the first electronic device, the response to is forwarded to one or more additional electronic devices, which can provide the response to the first user.

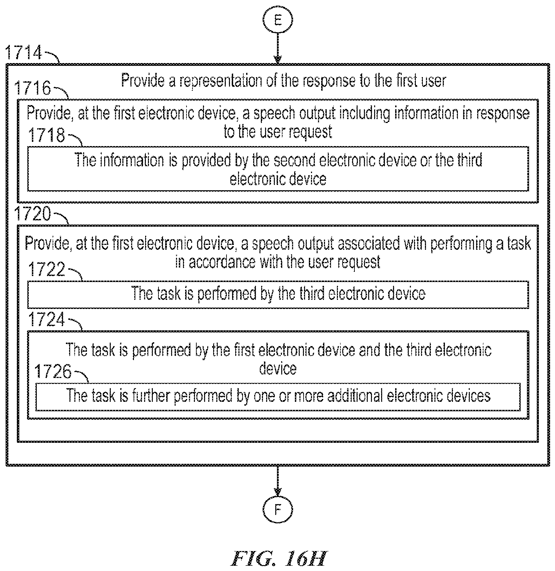

With reference to FIG. 16H, at block 1714, a representation of the response is provided to the first user. At block 1716, to provide the representation of the response, a speech output including information in response to the user request is provided at the first electronic device. At block 1718, the information is provided by the second electronic device or the third electronic device to the first electronic device.

At block 1720, to provide the representation of the response, a speech output associated with performing a task in accordance with the user request is provided at the first electronic device. At block 1722, in some examples, the task is performed by the third electronic device (e.g., a client device such as the first user's smartphone). At block 1724, in some examples, the task is performed by the first electronic device and the third electronic device. For example, the first electronic device may output an audio portion of a response, while the third electronic device (e.g., a TV set-top box connected to a TV screen) may output a video portion of the response. At block 1726, the task is further performed by one or more additional electronic devices. For example, in addition to providing a response (e.g., playing a movie) at a service-extension device and a client device such as a TV set-top box, the response may be further provided at an additional device such as a laptop computer.

At block 1728, in some examples, one or more connections are established between the first electronic device and one or more additional electronic devices. The additional electronic devices are the same type of devices as the first electronic device. For example, connections can be established among multiple service-extension devices (e.g., devices 810A-C as shown in FIGs. 8A-8B).

At block 1730, the response is being provided to the first user by the first electronic device. At block 1732, while providing the response to the first user by the first electronic device, it is determined whether the response is to be continually provided at a different electronic device (e.g., a client device such as the user's smartphone). At block 1734, the determination of whether the response is to be continually provided at a different electronic device is based on a third speech input (e.g., a speech input from the first user such as "Continue to play the song on my phone"). At block 1736, the determination of whether the response is to be continually provided at a different electronic device is based on detecting whether the first user's location variation with respect to the first electronic device satisfies a predetermined condition. For example, it can be determined whether the first user has moved out of a predetermined boundary such that the response should be continually provided at a device different from the first electronic device.

At block 1738, in accordance with a determination that the response is to be continually provided at a different electronic device, the response is caused to be continually provided by at least one of the third electronic device or one or more additional electronic devices.

At block 1740, after providing the response to the first user, subsequent speech inputs are monitored.

### 7. Process for providing digital assistant services based on notifications of events.

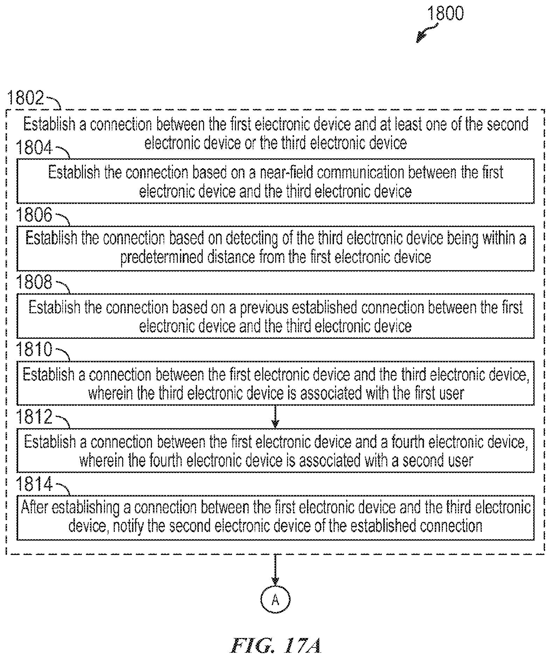

FIGs. 17A-17D illustrates process 1800 for operating a digital assistant for providing digital assistant services based on notifications of events, according to various examples. Process 1800 is performed, for example, using one or more electronic devices implementing a digital assistant. In some examples, process 1800 is performed using a client-server system (e.g., system 100), and the blocks of process 1800 are divided up in any manner between the server (e.g., DA server 106) and a client device. In other examples, the blocks of process 1800 are divided up between the server and multiple client devices (e.g., a mobile phone and a smart watch). Thus, while portions of process 1800 are described herein as being performed by particular devices of a client-server system, it will be appreciated that process 1800 is not so limited. In other examples, process 1800 is performed using only a client device (e.g., user device 104, devices 810A-C) or only multiple client devices. In process 1800, some blocks are, optionally, combined, the order of some blocks is, optionally, changed, and some blocks are, optionally, omitted. In some examples, additional steps may be performed in combination with the process 1800.

With reference to FIG. 17A, at block 1802, prior to receiving a notification of an event, a connection is established between a first electronic device (e.g., a service-extension device) and at least one of a second electronic device (e.g., a server) or a third electronic device (e.g., a client device disposed in the vicinity of the first electronic device). At block 1804, establishing the connection is based on a near-field communication between the first electronic device and the third electronic device. At block 1806, establishing the connection is based on detecting of the third electronic device being within a predetermined distance from the first electronic device. At block 1808, establishing the connection is based on a previous established connection between the first electronic device and the third electronic device.

As described above, the first electronic device (e.g., a service-extension device) can be shared by multiple users. At block 1810, a connection between the first electronic device and the third electronic device is established; and the third electronic device is associated with the first user. At block 1812, a connection between the first electronic device and a fourth electronic device is established; and the fourth electronic device is associated with a second user. At block 1814, after establishing a connection between the first electronic device and the third electronic device, the second electronic device (e.g., a remote server) is notified of the established connection.

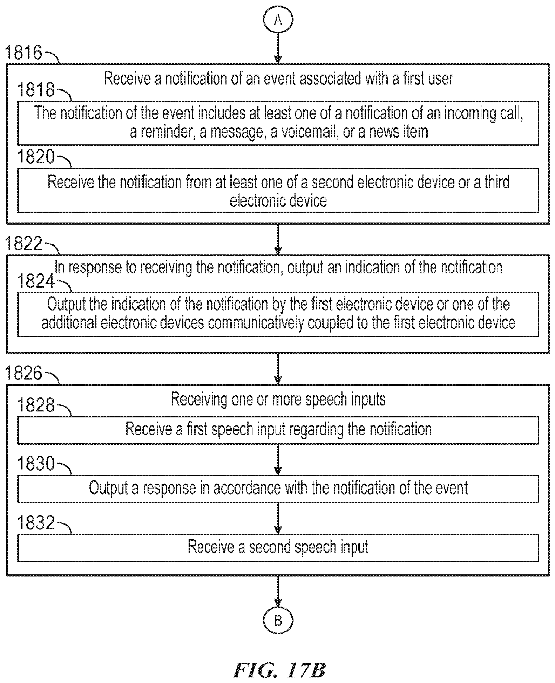

With reference to FIG. 17B, at block 1816, a notification of an event associated with a first user is received. At block 1818, the notification of the event includes a representation of at least one of an incoming call, a reminder, a message, a voicemail, or a news alert. At block 1820, the notification is received from at least one of a second electronic device (e.g., a remote server) or a third electronic device (e.g., a client device disposed in the vicinity of the first electronic device).

At block 1822, in response to receiving the notification, an indication of the notification is outputted. An indication can be, for example, a beep, an alert, a ringtone, etc. At block 1824, the indication of the notification is outputted by the first electronic device or one of the additional electronic devices communicatively coupled to the first electronic device. For example, a client device such as user's smartphone can output the indication of the notification; and another service-extension device can output the indication of the notification.

At block 1826, one or more speech inputs are received. At block 1828, for example, a first speech input is received regarding the notification (e.g., the user may provide a first speech input inquiring about the indication of the even notification such as "What is it?"). At block 1830, a response is outputted in accordance with the notification of the event. For example, a speech output may be provided such as "You have a voicemail from John." At block 1832, a second speech input is received. For example, the user may say "Play the voicemail."

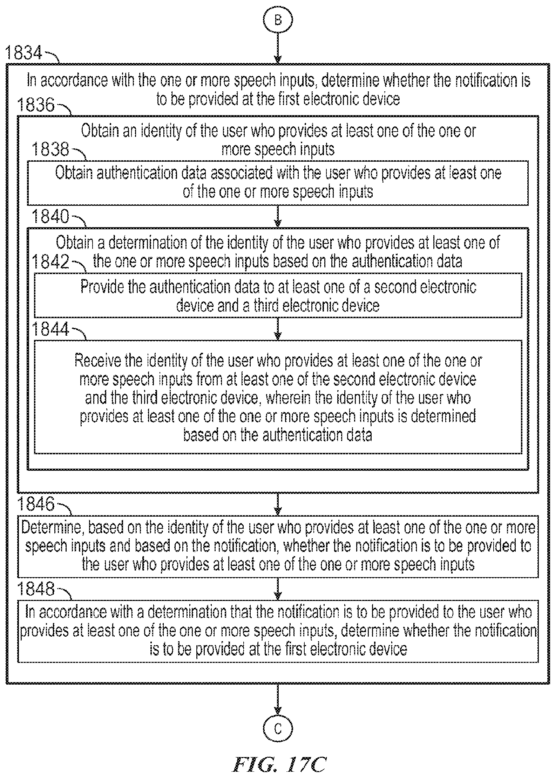

With reference to FIG. 17C, at block 1834, in accordance with the one or more speech inputs, it is determined whether the notification is to be provided at the first electronic device. At block 1836, to determine whether the notification is to be provided at the first electronic device, it is obtained an identity of the user who provides at least one of the one or more speech inputs. At block 1838, to obtain the identity of the user, it is obtained authentication data associated with the user who provides at least one of the one or more speech inputs. The authentication data can include, for example, the user's biometrics, fingerprints, facial recognition data, passwords, etc. At block 1840, it is obtained a determination of the identity of the user who provides at least one of the one or more speech inputs based on the authentication data.

At block 1842, to obtain the determination of the identity of the user who provides at least one of the one or more speech inputs, the authentication data is provided to at least one of a second electronic device and a third electronic device. At block 1844, it is received the identity of the user who provides at least one of the one or more speech inputs from at least one of the second electronic device and the third electronic device. The identity of the user who provides at least one of the one or more speech inputs is determined based on the authentication data.

At block 1846, it is determined, based on the identity of the user who provides at least one of the one or more speech inputs and based on the notification, whether the notification is to be provided to the user who provides at least one of the one or more speech inputs. At block 1848, in accordance with a determination that the notification is to be provided to the user who provides at least one of the one or more speech inputs, it is determined whether the notification is to be provided at the first electronic device.

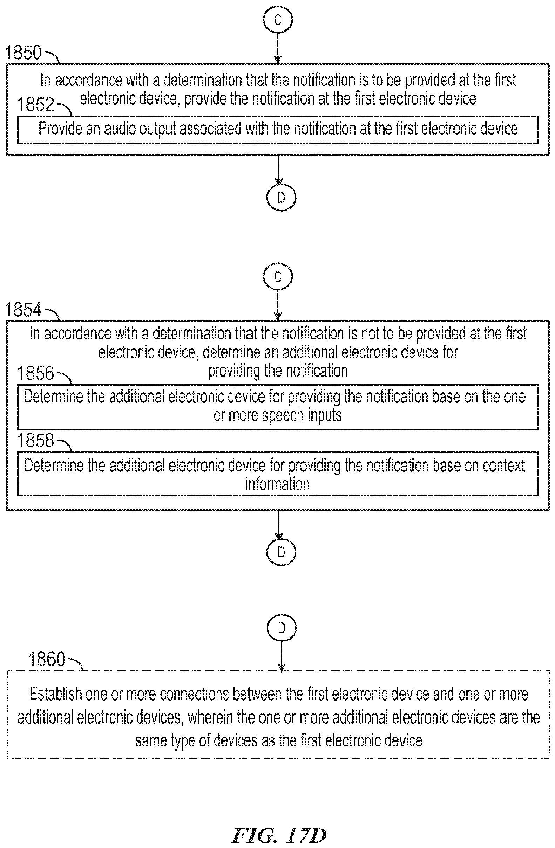

With reference to FIG. 17D, at block 1850, in accordance with a determination that the notification is to be provided at the first electronic device, the notification is provided at the first electronic device. At block 1852, to provide the notification at the first electronic device, an audio output is provided associated with the notification at the first electronic device.

At block 1854, in accordance with a determination that the notification is not to be provided at the first electronic device, an additional electronic device for providing the notification is determined. At block 1856, determining the additional electronic device for providing the notification is based on the one or more speech inputs. At block 1858, determining the additional electronic device for providing the notification is based on context information.

The operations described above with reference to FIGs. 16A-16I and 17A-17D are optionally implemented by components depicted in FIGs. 1-4, 6A-B, and 7A-C. For example, the operations of process 1600 and 1800 may be implemented by digital assistant system 700. It would be clear to a person having ordinary skill in the art how other processes are implemented based on the components depicted in FIGS. 1-4, 6A-B, and 7A-C.

### 8. Exemplary functions of providing digital assistant services using multiple devices.

As described above, digital assistant services can be provided by one or more devices. Due to device capability limitations, certain devices may be incapable of, or not optimum for, providing certain digital assistant services. For example, a smartwatch typically has a small screen size and thus is not optimum for playing video. As another example, unlike a smartphone, a TV set-top box may be incapable of providing speech outputs for text messages.

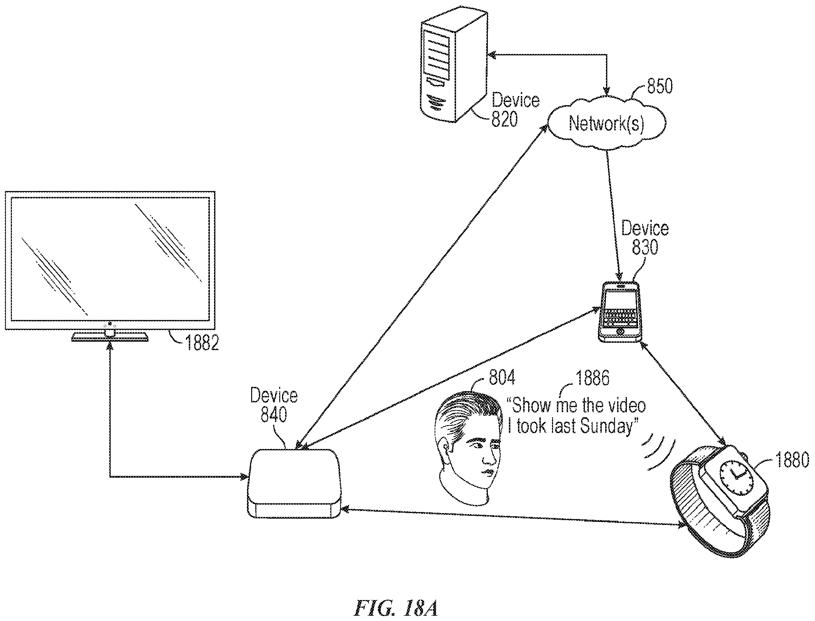

FIGs. 18A-18E illustrate functionalities for providing digital assistant services based on capabilities of multiple electronic devices, according to various examples. In some examples, the digital assistant (e.g., digital assistant system 700) is implemented by a user device according to various examples. In some examples, the user device, a server (e.g., server 108, device 820), or a combination thereof, may implement a digital assistant system (e.g., digital assistant system 700). The user device can be implemented using, for example, device 200, 400, 600, 820, 830, 840, 1880, and/or 1882. In some examples, the user device is a device having audio outputting capabilities and network connectivity, a smart watch, smartphone, a laptop computer, a desktop computer, or a tablet computer.

As illustrated in FIG. 18A, user 804 may provide a speech input 1886 such as "Show me the video I took last Sunday." Speech input 1886 can represent a user request (e.g., a request for information or a request for performing a task). In some examples, the digital assistant operating on device 1880 receives speech input 1886 from user 804. Device 1880 can be, for example, a client device (e.g., a wearable device such as smart watch). Device 1880 can also be a device similar to device 810A described above, which can include one or more audio input and output devices (e.g., a microphone and one or more speakers) and one or more network communication interfaces. Device 1880 may or may not be capable of, or optimum for, responding to the user request (e.g., providing the requested information or performing the requested tasks). For example, device 1880 may not have a display or may have a small-sized display that is not optimum to play video.

In some embodiments, the digital assistant operating on device 1880 can obtain capability data associated with one or more electronic devices capable of being communicatively coupled to device 1880. For example, as shown in FIG. 18A, the digital assistant operating on device 1880 can determine that device 820 (e.g., a remote server), device 830 (e.g., a client device such as the user's smartphone), device 840 (a TV set-top box) are communicatively coupled to device 1880. The determination can be made, for example, via Bluetooth pairing, Wi-Fi connection, etc., similar to as described above with respect to device 810A. Based on the determination that devices 820, 830, and 840 are communicatively coupled, the digital assistant operating on device 1880 can obtain capability data associated with these devices. In some examples, some devices are client devices disposed in the vicinity of device 1880 and some devices are disposed remotely from device 1880. For example, device 1880, device 830, and device 840 are client devices disposed within a predetermined boundary (e.g., a house, a building, a car, etc.); and device 820 is a server disposed remotely.

In some examples, capability data can include device capabilities associated with electronic devices capable of being communicatively coupled to device 1880. Device capabilities can include one or more physical capabilities and/or informational capabilities. Physical capabilities of a device can include the device's physical attributes such as whether the device has a display, the size of the display, the number of speakers, network capabilities, or the like. Informational capabilities of a device can include data that the device is capable of providing. For example, device 830 may store media items (e.g., videos and photos) that user 804 took, and is thus capable of providing the stored media items to other devices communicatively connected to device 830.

In some examples, prior to obtaining the capability data, the digital assistant operating on device 1880 can be configured to establish communication with other electronic devices (e.g., devices 820, 830, and/or 840). In some examples, the communication can be established via a direct communication connection, such as Bluetooth, near-field communication (NFC), BTLE (Bluetooth Low Energy), or the like, or via a wired or wireless network, such as a local Wi-Fi network. For example, the digital assistant operating on device 1880 can detect device 830 via Bluetooth discovery, and communicatively coupled to devices 830 via Bluetooth connection. As another example, the digital assistant operating on device 1880 can detect a Wi-Fi network and couple to device 840 via the Wi-Fi network. As another example, the digital assistant operating on device 1880 can detect a near field communication when the device 830 (e.g., a client device such as the user's smartphone) is in close proximity with, or physically in touch with, device 1880. For instance, to pair up device 1880 and device 830, user 804 may tap device 1880 with device 830, thereby establishing near-field communication between the two devices. As another example, the digital assistant operating on device 1880 may detect that device 830 (e.g., a client device such as the user's smartphone) is within a predetermined distance (e.g., within a range of Bluetooth communication) and establish a connection with device 830. For instance, as user 804 approaches device 1880 with device 830, the digital assistant operating on device 1880 detects that device 830 is within communication range, and thus connects device 1880 with device 830. As another example, the digital assistant operating on device 1880 may establish a connection with device 830 based on one or more previous established connections between the two devices. For instance, the digital assistant operating on device 1880 can store a log file including the devices that it connected in the past, and optionally connection parameters. Thus, based on the log file, the digital assistant operating on device 1880 can determine, for example, that it has connected to device 830 before. Based on such determination, the digital assistant operating on device 1880 can establish the connection with device 830 again.

In some examples, prior to obtaining the capability data, the digital assistant operating on device 1880 can inquire user 804 regarding accessing one or more devices capable of being communicatively coupled to device 1880. For example, the digital assistant operating on device 1880 may provide a speech output such as "Do I have your permission to access your phone and TV?" In some examples, user 804 may respond with a speech input either permitting the access or denying the access. In response to receiving the speech input, the digital assistant operating on device 1880 can determine whether it is authorized to access the devices communicatively coupled to device 1880. For example, if user 804's speech input is "OK," the digital assistant operating on device 1880 can determine that it is authorized to access devices 830 and 840. If user 804's speech input is "No," the digital assistant operating on device 1880 can determine that it is not authorized to access devices 830 and 840. If user 804's speech input is "Yes for my phone, No for my TV" (e.g., user 804 may be watching another video by using device 840 and device 1882 (e.g., a TV display), and does not wish to disturb the video playing on device 1882), the digital assistant operating on device 1880 can determine that it is authorized to access device 830 but not device 840 for playing the video on device 1882.

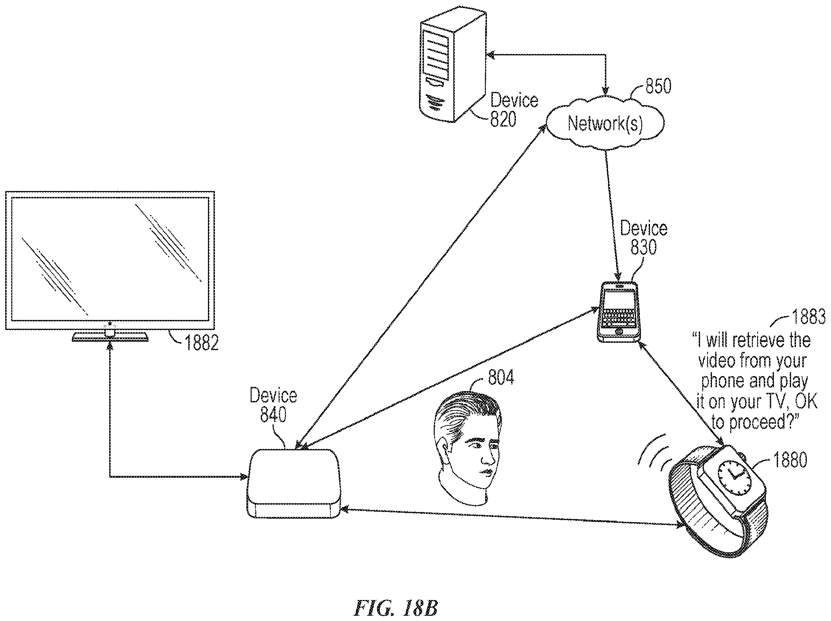

With reference to FIGs. 18A and 18B, in some embodiments, in accordance with the capability data, the digital assistant operating on device 1880 can identify, from the one or more electronic devices capable of being communicatively coupled to the device, a device for providing at least a portion of a response to the user request. In some examples, the digital assistant operating on device 1880 can obtain one or more steps for responding to the user request based on speech input 1886. The one or more steps for responding to the user request can include steps for providing requested information and/or steps for performing a requested task. For example, based on speech input 1886 such as "Show me the video I took last Sunday," device 1880 can determine the user request is to find the video user 804 took last Sunday and play it. The determination can be made using natural language processing techniques described above.

According to the determined user request, the digital assistant operating on device 1880 can determine one or more steps required for responding to the user request. For example, the digital assistant operating on device 1880 can determine that step # 1 for playing a video user 804 took last Sunday is to find the particular video that user 804 took last Sunday; and step # 2 is to play the particular video. In some embodiments, the determination of the one or more steps can be made on another device (e.g., device 820 such as a remote server) and provided to device 1880. In some embodiments, the determination of the one or more steps can be made using both device 820 and device 1880. For example, a digital assistant can operate on device 1880 in the front end to interface with user 804 and operate on device 820 in the back end to process the user input. In some embodiments, the one or more steps for responding to the user request can form at least a portion of an execution plan. An execution plan may include the steps for responding to the user request and the device for perform each of the steps.

In some embodiments, the digital assistant operating on device 1880 can identify one or more devices for performing the steps for responding to the user request based on capability data associated with one or more electronic devices capable of being communicatively coupled to device 1880. Continuing the above example, the digital assistant operating on device 1880 can identify a device for performing step # 1 of finding a particular video that user 804 took last Sunday; and identify a device for performing step # 2 of playing the particular video. As shown in FIG. 18B, the digital assistant operating on device 1880 may determine that, among the devices communicatively connected to device 1880 (e.g., devices 820, 830, and 840), the capability data of device 830 (e.g., a client device such as the user's smartphone) indicate that device 830 has the capability of finding the particular video user 804 took last Sunday. For example, user 804 took a video last Sunday using device 830, and therefore the informational capability data of device 830 may indicate that a file stored in device 830 has a format of a video and a time stamp of last Sunday. Accordingly, the digital assistant operating on device 1880 can identify device 830 for performing step # 1 of finding the particular video user 804 intended.

As another example, the digital assistant operating on device 1880 may determine that, among devices 820, 830, and 840, the capability data of device 840 (e.g., a TV set-top box) indicate that device 840 is an optimum device for performing step # 2 of playing videos. For example, device capability data of devices 830 and 840 may both indicate that the devices are capable of playing videos. Device capability data of device 840 may further indicate that one or more device attributes (e.g., display size/resolution/number of speakers) of a device 1882 (e.g., a TV screen), on which device 840 can play the video, are superior than the device attributes of device 830. For example, the display size of device 1882 is bigger than the display size of device 830. As a result, the digital assistant operating on device 1880 can identify device 840, instead of device 830, for performing step # 2 of playing the video.

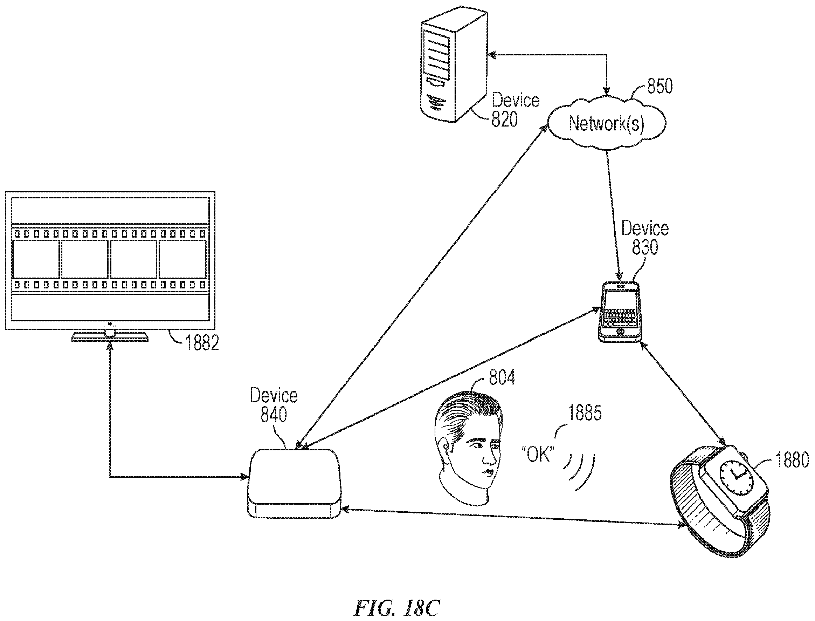

In some embodiments, as shown in FIG. 18B, based on the determination of the devices for performing the steps for responding to the user request, the digital assistant operating on device 1880 can provide a speech output to user 804 seeking confirmation or permission to access the devices identified for responding to the user request. For example, as shown in FIG. 18B, the digital assistant operating on device 1880 can provide a speech output 1883 such as "I will retrieve the video from your phone and play it on your TV, OK to proceed?" With reference to FIG. 18C, in some examples, device 1880 may receive subsequent speech input 1885 from user 804. In response to receiving speech input 1885, the digital assistant operating on device 1880 can determine whether at least a portion of the response is to be provided by one or more devices communicatively coupled to device 1880. For example, if speech input 1885 includes "OK," the digital assistant operating on device 1880 can determine that the video should be retrieved from device 830 and played on device 1882 (e.g., a TV display) using device 840 (e.g., a TV set-top box). If speech input 1885 includes "No, play the video on my phone," the digital assistant operating on device 1880 can determine that the video should be retrieved from device 830, but played on device 830 rather than device 1882. It is appreciated that, in some examples, providing speech output 1883 seeking confirmation/permission and receiving subsequence user input 1885 are optional.

In some embodiments, prior to providing a speech output for confirming or requesting permission to user the devices identified for responding to the user request, the digital assistant can annotate one or more steps for responding to the user request, and providing the speech output based on the annotation. Using the above example, the digital assistant operation on device 1880 can determine whether performing a particular step would require altering a state of a device. For instance, for performing step # 2 of playing video on device 1882 (e.g., a TV display), a state of device 840 may be altered (e.g., changing from a state of power off to power on, switching from the current playing video to the video user requested, etc.). As a result, the digital assistant operating on device 1880 can annotate step # 2 as a step that requires altering state of the identified device.

As another example, for performing step # 1 of finding the video user 804 took on last Sunday, the digital assistant operating on device 1880 may determine that performing step # 1 would not require altering the state of device 830. As a result, the digital assistant operating on device 1880 may not annotate step # 1 as a step that requires altering state of the identified device. In some examples, based on the annotation, the digital assistant operating on device 1880 can then provide a speech output seeking confirmation or permission to use the devices identified for responding to the user request. Using the above example, because step # 2 of playing video is a state-altering step for the identified device 840, the digital assistant operating on device 1880 can provide a speech output seeking permission to access device 840. The speech output may include, for example, "I will play the video on your TV, OK to proceed?" And because step # 1 of finding a video is a not state-altering step for the identified device 830, the digital assistant operating on device 1880 may not provide a speech output seeking permission to access device 830.

With reference to FIG. 18C, in some embodiments, the digital assistant operating on device 1880 can cause one or more identified devices to provide at least a portion of a response to the user request. For example, the digital assistant operating on device 1880 can request device 830 to search and find the video user 804 took last Sunday and transmit the video to device 840. It can further request device 840 to play the video on device 1882 (e.g., a TV).

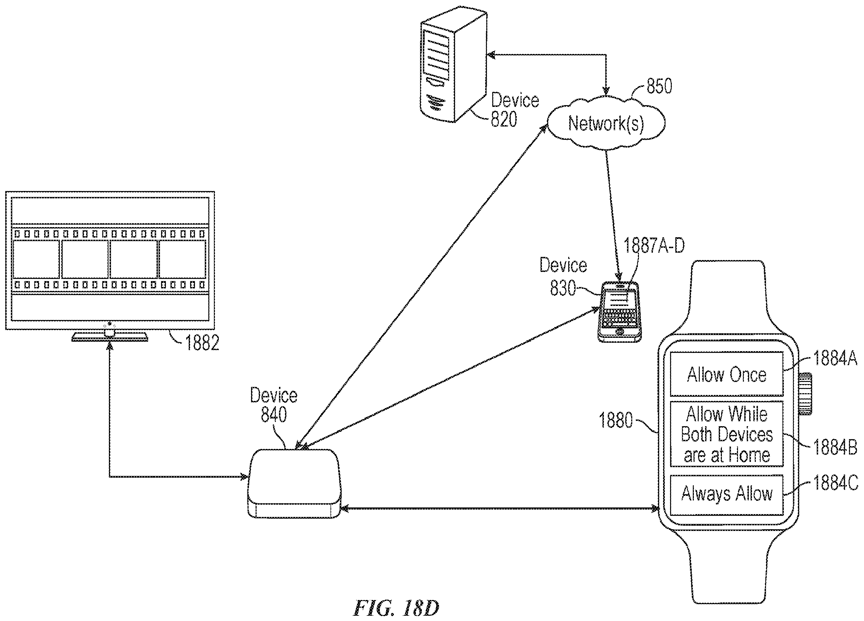

As described above, in some examples, prior to obtaining the capability data, the digital assistant operating on device 1880 can seek confirmation or permission to access one or more electronic devices being capable of communicatively coupled to device 1880. For example, the digital assistant operating on device 1880 may provide a speech output such as "Do I have your permission to access your phone?" With reference to FIG. 18D, in some embodiments, the digital assistant operating on device 1880 can provide one or more duration options for accessing the devices being capable of communicatively coupled to device 1880. For example, as illustrated in FIG. 18D, the digital assistant operating on device 1880 can display options 1884A-C on device 1880. Option 1884A may include "Allow Once," indicating that the access to device 830 from device 1880 is permitted only this time. Option 1884B may include "Allow while both devices are at home," indicating that the access to device 830 from device 1880 is permitted while both devices are within a predetermined boundary (e.g., within or nearby a house). Option 1884C may include "Always allow," indicating the access to device 830 from device 1880 is always permitted. In some examples, the digital assistant may also provide an option 1884D (not shown), which may include "Not allow," indicating that access to device 830 from device 1880 is denied. In some embodiments, similar duration options 1887A-D can be displayed on device 830, thereby enabling the user of device 830 (e.g. a user that may or may not be the same as the user of device 1880) to control the access of device 830.

In some embodiments, the digital assistant operating on device 1880 can receive a selection of a duration option from user 804 and access the devices capable of being communicatively coupled to device 1880 based on the selected duration option. For example, if the selection is option 1884A such as "Allow once," the digital assistant operating on device 1880 may only access device 830 to find the video the user requested for this time.

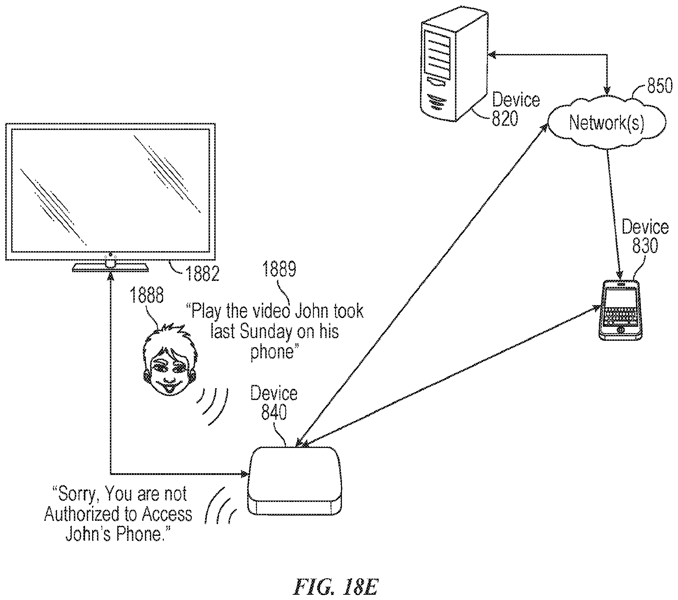

As described above, in some embodiments, a digital assistant can cause one or more identified devices to provide at least a portion of a response to the user request. In some embodiments, prior to causing the identified devices to provide a response, the digital assistant can obtain an identity of the user and determine whether the user is authorized to receive at least a portion of the response. As illustrated in FIG. 18E, for example, device 840 may be a device (e.g., a TV set-top box) that is shared between multiple users and thus user 1888 may be a user that is authorized to access device 840. Device 830 may be a client device such as a smartphone of another user (e.g., user 804). User 1888 may not be authorized to access device 830. In some examples, user 1888 may provide a speech input 1889 such as "Play the video Bill Took last Sunday on his phone." The digital assistant operating on device 840 may identify, based on the capability data of devices communicatively coupled to device 840, device 830 for providing at least a portion of a response to the user request. In some embodiments, before accessing device 830 to perform a step for responding to the user request, the digital assistant operating on device 840 can obtain the identity of user 1888. In some examples, obtaining the identity of user 1888 can be based on a voice profile. A voice profile may include voice biometrics, such as the user's voice characteristics (e.g., acoustic patterns, voiceprints, the user's accent, or the like). A voice profile can be associated with a particular user and uniquely identifies the user. For example, a voice profile of user 1888 can include voice characteristics of user 1888 and thus uniquely identify user 1888. In some examples, a voice profile can also assistant the natural language processing described above to more accurately determine the user intent. For example, the speech-to-text conversion process may be more accurately performed using a voice profile that includes the user's accent data.

With reference to FIG. 18E, the digital assistant operating on device 840 can compare the voice characteristics in speech input 1889 with one or more voice profiles of one or more authorized users of device 830. Based on the comparison, the digital assistant operating on device 840 may determine that voice characteristics in speech input 1889 does not match any of the voice profile for authorized user of device 830. As a result, the digital assistant operating on device 840 can determine that user 1888 is not authorized to access device 830, and thus not authorized to access the video stored in device 830. 9. Process for providing digital assistant services using multiple devices.

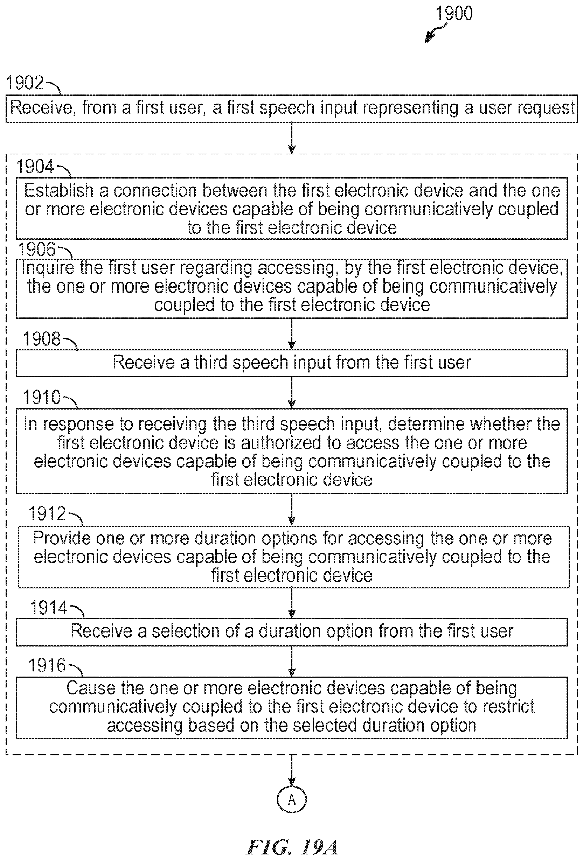

FIGs. 19A-19D illustrates process 1900 for operating a digital assistant for providing digital assistant services based on notifications of events, according to various examples. Process 1900 is performed, for example, using one or more electronic devices implementing a digital assistant. In some examples, process 1900 is performed using a client-server system (e.g., system 100), and the blocks of process 1900 are divided up in any manner between the server (e.g., DA server 106) and a client device. In other examples, the blocks of process 1900 are divided up between the server and multiple client devices (e.g., a mobile phone and a smart watch). Thus, while portions of process 1900 are described herein as being performed by particular devices of a client-server system, it will be appreciated that process 1900 is not so limited. In other examples, process 1900 is performed using only a client device (e.g., user device 104, device 1880) or only multiple client devices. In process 1900, some blocks are, optionally, combined, the order of some blocks is, optionally, changed, and some blocks are, optionally, omitted. In some examples, additional steps may be performed in combination with the process 1900.

With reference to FIG. 19A, at block 1902, a first speech input representing a user request is received from a first user. At block 1904, prior to obtaining capability data associated with the one or more electronic devices capable of being communicatively coupled to the first electronic device, a connection is established between the first electronic device and the one or more electronic devices capable of being communicatively coupled to the first electronic device. In some examples, the first electronic device and the electronic devices capable of being communicatively coupled to the first electronic device are disposed within a predetermined boundary (e.g., a house). In some examples, establishing the connection is based on a near-field communication between the first electronic device and the one or more electronic devices capable of being communicatively coupled to the first electronic device. In some examples, establishing the connection is based on detecting of the one or more electronic devices capable of being communicatively coupled to the first electronic device being within a predetermined distance from the first electronic device. In some examples, establishing the connection is based on one or more previous established connections between the first electronic device and the one or more electronic devices capable of being communicatively coupled to the first electronic device.

At block 1906, prior to obtaining capability data associated with the one or more electronic devices capable of being communicatively coupled to the first electronic device, the first user is inquired regarding accessing, by the first electronic device, the one or more electronic devices capable of being communicatively coupled to the first electronic device. At block 1908, a third speech input is received from the first user. The third speech input may indicate whether the first electronic device is authorized to access other devices. At block 1910, in response to receiving the third speech input, it is determined whether the first electronic device is authorized to access the one or more electronic devices capable of being communicatively coupled to the first electronic device.

At block 1912, it is provided one or more duration options for accessing the one or more electronic devices capable of being communicatively coupled to the first electronic device. The duration options may include, for example, allow once, allow while both devices are at home, always allow, not allow. At block 1914, a selection of a duration option is received from the first user. At block 1916, the one or more electronic devices capable of being communicatively coupled to the first electronic device are accessed based on the selected duration option.

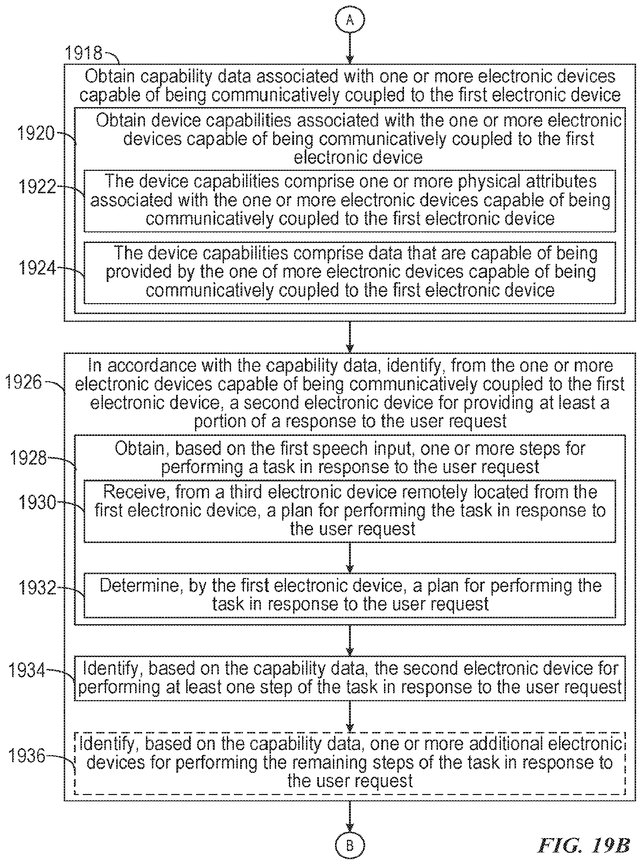

With reference to FIG. 19B, at block 1918, it is obtained capability data associated with one or more electronic devices capable of being communicatively coupled to the first electronic device. At block 1920, to obtain capability data, it is obtained device capabilities associated with the one or more electronic devices capable of being communicatively coupled to the first electronic device. At block 1922, the device capabilities include one or more physical attributes associated with the one or more electronic devices capable of being communicatively coupled to the first electronic device. At block 1924, the device capabilities include data that are capable of being provided by the one of more electronic devices capable of being communicatively coupled to the first electronic device.

At block 1926, in accordance with the capability data, it is identified, from the one or more electronic devices capable of being communicatively coupled to the first electronic device, a second electronic device for providing at least a portion of a response to the user request. At block 1928, to identify the second electronic device, one or more steps for responding to the user request are obtained based on the first speech input. In some examples, at block 1930, to obtain the one or more steps, a plan for responding to the user request is received from a third electronic device (e.g., a server) remotely located from the first electronic device. In some examples, at block 1932, a plan for responding to the user request is determined by the first electronic device (e.g., a client device such as a wearable device), wherein the plan comprising one or more steps for responding to the user request.

At block 1934, it is identified, based on the capability data, the second electronic device (e.g., device 840 such as a TV set-top box) for performing at least one step for responding to the user request. At block 1936, it is identified, based on the capability data, one or more additional electronic devices for performing the remaining steps for responding the user request.

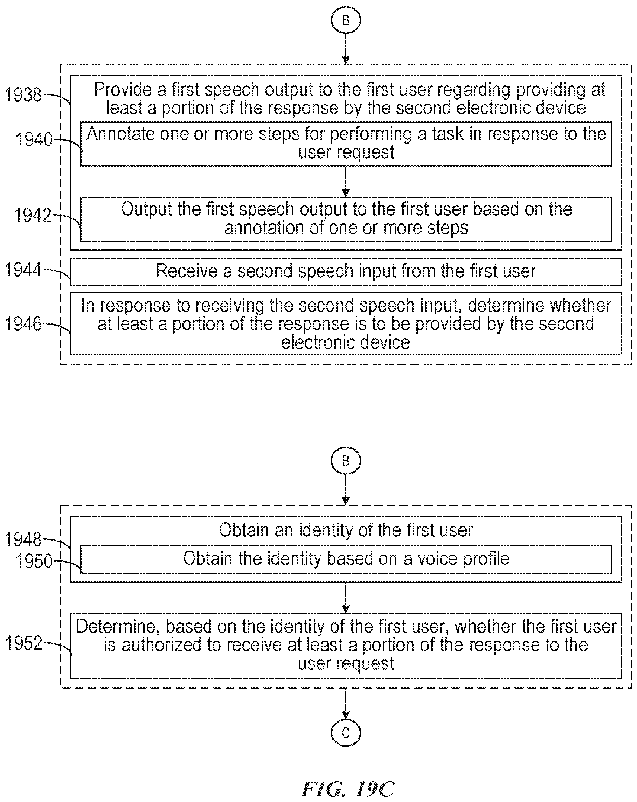

With reference to FIG. 19C, at block 1938, a first speech output is provided to the first user regarding providing at least a portion of the response by the second electronic device. For example, the first speech output may be a speech out requesting authorization to access the second electronic device. At block 1940, for providing the first speech output, one or more steps for responding to the user request are annotated. For example, some steps may be annotated as state-altering steps and thus may require authorization; and some steps may not be annotated and thus may not require authorization. At block 1942, the first speech output is provided to the first user based on the annotation of one or more steps.

At block 1944, a second speech input is received from the first user. The second speech input may indicate whether the first user authorizes accessing certain devices. At block 1946, in response to receiving the second speech input, it is determined whether at least a portion of the response is to be provided by the second electronic device.

At block 1948, in some examples, prior to causing the second electronic device to provide at least a portion of the response to the first user, an identity of the first user is obtained. At block 1950, the identity is obtained based on a voice profile. At block 1952, it is determined, based on the identity of the first user, whether the first user is authorized to receive at least a portion of the response to the user request.

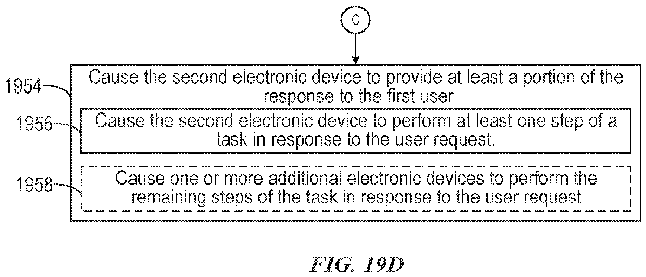

With reference to FIG. 19D, at block 1954, the second electronic device is caused to provide at least a portion of the response to the user request. At block 1956, the second electronic device is caused to perform at least one step for responding to the user request. At block 1958, one or more additional electronic devices are caused to perform the remaining steps for responding to the user request.

The operations described above with reference to FIGs. 19A-19D are optionally implemented by components depicted in FIGs. 1-4, 6A-B, and 7A-C. For example, the operations of process 1900 may be implemented by digital assistant system 700. It would be clear to a person having ordinary skill in the art how other processes are implemented based on the components depicted in FIGS. 1-4, 6A-B, and 7A-C.

In accordance with some implementations, a computer-readable storage medium (e.g., a non-transitory computer readable storage medium) is provided, the computer-readable storage medium storing one or more programs for execution by one or more processors of an electronic device, the one or more programs including instructions for performing any of the methods or processes described herein.

In accordance with some implementations, an electronic device (e.g., a portable electronic device) is provided that comprises means for performing any of the methods or processes described herein.

In accordance with some implementations, an electronic device (e.g., a portable electronic device) is provided that comprises a processing unit configured to perform any of the methods or processes described herein.

In accordance with some implementations, an electronic device (e.g., a portable electronic device) is provided that comprises one or more processors and memory storing one or more programs for execution by the one or more processors, the one or more programs including instructions for performing any of the methods or processes described herein.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art.

As described above, one aspect of the present technology is the gathering and use of data available from various sources to obtain a user's identity. As described above, data for authenticating a user may include voice biometrics, facial recognition data, fingerprints, etc. The present disclosure contemplates that in some instances, this gathered data may include personal information data that uniquely identifies or can be used to contact or locate a specific person. As described above, informational capabilities of client devices may be obtained. The informational capabilities of client devices may include personal information data. Such personal information data can include personal identification data, demographic data, location-based data, telephone numbers, email addresses, home addresses, or any other identifying information.

The present disclosure recognizes that the use of such personal information data, in the present technology, can be used to the benefit of users. For example, the personal information data can be used to deliver targeted content that is of greater interest to the user. Accordingly, use of such personal information data enables calculated control of the delivered content. Further, other uses for personal information data that benefit the user are also contemplated by the present disclosure.

The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of advertisement delivery services, the present technology can be configured to allow users to select to "opt in" or "opt out" of participation in the collection of personal information data during registration for services. In another example, users can select not to provide location information for targeted content delivery services. In yet another example, users can select to not provide precise location information, but permit the transfer of location zone information.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences based on non-personal information data or a bare minimum amount of personal information, such as the content being requested by the device associated with a user, other non-personal information available to the content delivery services, or publically available information.

## Claims

1. A method for providing a digital assistant service, comprising:
at a first electronic device with one or more processors and memory, the first electronic device being configured to extend digital assistant services to a plurality of users:
receiving a notification of an event associated with a first user;
in response to receiving the notification, outputting an indication of the notification;
receiving one or more speech inputs;
in accordance with the one or more speech inputs,
obtaining an identity of the user who provides at least one of the one or more speech inputs;
determining, based on the identity of the user who provides at least one of the one or more speech inputs and based on the notification, whether the notification is to be provided to the user who provides at least one of the one or more speech inputs;
in accordance with a determination that the notification is to be provided to the user who provides at least one of the one or more speech inputs, determining whether the notification is to be provided at the first electronic device; and
in accordance with a determination that the notification is to be provided at the first electronic device, providing the notification at the first electronic device, and
in accordance with a determination that the notification is not to be provided at the first electronic device, determining an additional electronic device for providing the notification, and providing the notification at the additional electronic device.

2. The method of claim 1, wherein the notification of the event includes a representation of at least one of an incoming call, a reminder, a message, a voicemail, or a news alert.

3. The method of any of claims 1 and 2, wherein receiving the notification of the event comprises:
receiving the notification from at least one of a second electronic device or a third electronic device.

4. The method of any of claims 1-3, wherein outputting an indication of the notification comprises:
outputting the indication of the notification by one of additional electronic devices communicatively coupled to the first electronic device.

5. The method of any of claims 1-4, wherein receiving the one or more speech inputs comprises:
receiving a first speech input regarding the notification;
outputting a response in accordance with the notification of the event; and
receiving a second speech input.

6. The method of any of claims 1-5,
wherein obtaining the identity of the user who provides at least one of the one or more speech inputs comprises:
obtaining authentication data associated with the user who provides at least one of the one or more speech inputs; and
obtaining a determination of the identity of the user who provides at least one of the one or more speech inputs based on the authentication data.

7. The method of claim 6, wherein obtaining the determination of the identity of the user who provides at least one of the one or more speech inputs comprises:
providing the authentication data to at least one of a second electronic device and a third electronic device; and
receiving the identity of the user who provides at least one of the one or more speech inputs from at least one of the second electronic device and the third electronic device, wherein the identity of the user who provides at least one of the one or more speech inputs is determined based on the authentication data.

8. The method of any of claims 1-7, wherein providing the notification at the first electronic device comprises:
providing an audio output associated with the notification at the first electronic device.

9. The method of any of claims 1-8 , wherein determining the additional electronic device for providing the notification is based on the one or more speech inputs.

10. The method of any of claims 1-9, wherein determining the additional electronic device for providing the notification is based on context information.

11. The method of any of claims 1-10, further comprising, prior to receiving the notification, establishing a connection between the first electronic device and at least one of a second electronic device or a third electronic device.

12. The method of claim 11, wherein establishing the connection is based on a near-field communication between the first electronic device and the third electronic device.

13. The method of any of claims 11 and 12, wherein establishing the connection is based on detecting of the third electronic device being within a predetermined distance from the first electronic device.

14. The method of any of claims 11-13, wherein establishing the connection is based on a previous established connection between the first electronic device and the third electronic device.

15. The method of any of claims 11-14, further comprising:
establishing a connection between the first electronic device and the third electronic device, wherein the third electronic device is associated with the first user; and
establishing a connection between the first electronic device and a fourth electronic device, wherein the fourth electronic device is associated with a second user.

16. The method of any of claims 11-15, further comprising: after establishing a connection between the first electronic device and the third electronic device, notifying the second electronic device of the established connection.

17. The method of any of claims 1-16, further comprising, establishing one or more connections between the first electronic device and one or more additional electronic devices, wherein the one or more additional electronic devices are the same type of devices as the first electronic device.

18. A first electronic device comprising:
one or more processors;
memory; and
one or more programs stored in memory, the one or more programs including instructions adapted to perform the method of any one of claims 1-17.

19. A computer-readable storage medium comprising one or more programs for execution by one or more processors of a first electronic device, the one or more programs including instructions which, when executed by the one or more processors, cause the first electronic device to perform the method of any one of claims 1-17.

## Patentansprüche

1. Verfahren zum Bereitstellen eines Digitalassistentdienstes, umfassend:
an einer ersten elektronischen Vorrichtung mit einem oder mehreren Prozessoren und Speicher, wobei die erste elektronische Vorrichtung konfiguriert ist, um Digitalassistentdienste auf eine Vielzahl von Benutzern zu erweitern:
Empfangen einer Benachrichtigung eines Ereignisses, das einem ersten Benutzer zugeordnet ist;
als Reaktion auf das Empfangen der Benachrichtigung, Ausgeben einer Angabe der Benachrichtigung;
Empfangen einer oder mehrerer Spracheingaben;
gemäß der einen oder den mehreren Spracheingaben,
Erhalten einer Identität des Benutzers, der mindestens eine der einen oder der mehreren Spracheingaben bereitstellt;
Bestimmen, basierend auf der Identität des Benutzers, der mindestens eine der einen oder der mehreren Spracheingaben bereitstellt, und basierend auf der Benachrichtigung, ob die Benachrichtigung dem Benutzer, der mindestens eine der einen oder der mehreren Spracheingaben bereitstellt, bereitgestellt werden soll;
gemäß einer Bestimmung, dass die Benachrichtigung dem Benutzer, der mindestens eine der einen oder der mehreren Spracheingaben bereitstellt, bereitgestellt werden soll, Bestimmen, ob die Benachrichtigung an der ersten elektronischen Vorrichtung bereitgestellt werden soll; und
gemäß einer Bestimmung, dass die Benachrichtigung an der ersten elektronischen Vorrichtung bereitgestellt werden soll, Bereitstellen der Benachrichtigung an der ersten elektronischen Vorrichtung und
gemäß einer Bestimmung, dass die Benachrichtigung nicht an der ersten elektronischen Vorrichtung bereitgestellt werden soll, Bestimmen einer zusätzlichen elektronischen Vorrichtung zum Bereitstellen der Benachrichtigung und Bereitstellen der Benachrichtigung an der zusätzlichen elektronischen Vorrichtung.

2. Verfahren nach Anspruch 1, wobei die Benachrichtigung des Ereignisses eine Darstellung von mindestens einem von einem eingehenden Anruf, einer Erinnerung, einer Nachricht, einer Sprachmitteilung oder einer Nachrichtenmeldung einschließt.

3. Verfahren nach einem der Ansprüche 1 und 2, wobei das Empfangen der Benachrichtigung des Ereignisses umfasst:
Empfangen der Benachrichtigung von mindestens einer zweiten elektronischen Vorrichtung oder einer dritten elektronischen Vorrichtung.

4. Verfahren nach einem der Ansprüche 1-3, wobei das Ausgeben einer Angabe der Benachrichtigung umfasst:
Ausgeben der Angabe der Benachrichtigung durch eine von zusätzlichen elektronischen Vorrichtungen, die kommunikativ an die erste elektronische Vorrichtung gekoppelt sind.

5. Verfahren nach einem der Ansprüche 1-4, wobei das Empfangen der einen oder der mehreren Spracheingaben umfasst:
Empfangen einer ersten Spracheingabe bezüglich der Benachrichtigung;
Ausgeben einer Antwort gemäß der Benachrichtigung des Ereignisses und
Empfangen einer zweiten Spracheingabe.

6. Verfahren nach einem der Ansprüche 1-5,
wobei das Erhalten der Identität des Benutzers, der mindestens eine der einen oder der mehreren Spracheingaben bereitstellt, umfasst:
Erhalten von Authentifizierungsdaten, die dem Benutzer, der mindestens eine der einen oder der mehreren Spracheingaben bereitstellt, zugeordnet sind; und
Erhalten einer Bestimmung der Identität des Benutzers, der mindestens eine der einen oder der mehreren Spracheingaben bereitstellt, basierend auf den Authentifizierungsdaten.

7. Verfahren nach Anspruch 6, wobei das Erhalten der Bestimmung der Identität des Benutzers, der mindestens eine der einen oder der mehreren Spracheingaben bereitstellt, umfasst:
Bereitstellen der Authentifizierungsdaten an mindestens eine von einer zweiten elektronischen Vorrichtung und einer dritten elektronischen Vorrichtung und
Empfangen der Identität des Benutzers, der mindestens eine der einen oder der mehreren Spracheingaben bereitstellt, von mindestens einer der zweiten elektronischen Vorrichtung und der dritten elektronischen Vorrichtung, wobei die Identität des Benutzers, der mindestens eine der einen oder der mehreren Spracheingaben bereitstellt, basierend auf den Authentifizierungsdaten bestimmt wird.

8. Verfahren nach einem der Ansprüche 1-7, wobei das Bereitstellen der Benachrichtigung an der ersten elektronischen Vorrichtung umfasst:
Bereitstellen einer Audioausgabe, die der Benachrichtigung zugeordnet ist, an der ersten elektronischen Vorrichtung.

9. Verfahren nach einem der Ansprüche 1-8, wobei das Bestimmen der zusätzlichen elektronischen Vorrichtung zum Bereitstellen der Benachrichtigung auf der einen oder den mehreren Spracheingaben basiert.

10. Verfahren nach einem der Ansprüche 1-9, wobei das Bestimmen der zusätzlichen elektronischen Vorrichtung zum Bereitstellen der Benachrichtigung auf Kontextinformationen basiert.

11. Verfahren nach einem der Ansprüche 1-10, ferner umfassend, vor dem Empfangen der Benachrichtigung, ein Herstellen einer Verbindung zwischen der ersten elektronischen Vorrichtung und mindestens einer von einer zweiten elektronischen Vorrichtung oder einer dritten elektronischen Vorrichtung.

12. Verfahren nach Anspruch 11, wobei das Herstellen der Verbindung auf einer Nahfeldkommunikation zwischen der ersten elektronischen Vorrichtung und der dritten elektronischen Vorrichtung basiert.

13. Verfahren nach einem der Ansprüche 11 und 12, wobei das Herstellen der Verbindung auf einem Erkennen basiert, dass sich die dritte elektronische Vorrichtung innerhalb eines vorbestimmten Abstands von der ersten elektronischen Vorrichtung befindet.

14. Verfahren nach einem der Ansprüche 11-13, wobei das Herstellen der Verbindung auf einer vorherigen hergestellten Verbindung zwischen der ersten elektronischen Vorrichtung und der dritten elektronischen Vorrichtung basiert.

15. Verfahren nach einem der Ansprüche 11-14, ferner umfassend:
Herstellen einer Verbindung zwischen der ersten elektronischen Vorrichtung und der dritten elektronischen Vorrichtung, wobei die dritte elektronische Vorrichtung dem ersten Benutzer zugeordnet ist; und
Herstellen einer Verbindung zwischen der ersten elektronischen Vorrichtung und einer vierten elektronischen Vorrichtung, wobei die vierte elektronische Vorrichtung einem zweiten Benutzer zugeordnet ist.

16. Verfahren nach einem der Ansprüche 11-15, ferner umfassend: nach dem Herstellen einer Verbindung zwischen der ersten elektronischen Vorrichtung und der dritten elektronischen Vorrichtung, Benachrichtigen der zweiten elektronischen Vorrichtung über die hergestellte Verbindung.

17. Verfahren nach einem der Ansprüche 1-16, ferner umfassend ein Herstellen einer oder mehrerer Verbindungen zwischen der ersten elektronischen Vorrichtung und einer oder mehreren zusätzlichen elektronischen Vorrichtungen, wobei die eine oder die mehreren zusätzlichen elektronischen Vorrichtungen der gleiche Typ von Vorrichtungen wie die erste elektronische Vorrichtung sind.

18. Erste elektronische Vorrichtung, umfassend:
einen oder mehrere Prozessoren;
Speicher; und
ein oder mehrere im Speicher gespeicherte Programme, wobei das eine oder die mehreren Programme Anweisungen einschließen, die angepasst sind, um das Verfahren nach einem der Ansprüche 1-17 durchzuführen.

19. Computerlesbares Speicherungsmedium, umfassend ein oder mehrere Programme zur Ausführung durch einen oder mehrere Prozessoren einer ersten elektronischen Vorrichtung, wobei das eine oder die mehreren Programme Anweisungen einschließen, die bei Ausführung durch den einen oder die mehreren Prozessoren die erste elektronische Vorrichtung veranlassen, das Verfahren nach einem der Ansprüche 1-17 durchzuführen.

## Revendications

1. Procédé pour fournir un service d'assistant numérique, comprenant :
au niveau d'un premier dispositif électronique avec un ou plusieurs processeurs et de la mémoire, le premier dispositif électronique étant configuré pour étendre des services d'assistant numérique à une pluralité d'utilisateurs :
la réception d'une notification d'un événement associé à un premier utilisateur ;
en réponse à la réception de la notification, la sortie d'une indication de la notification ;
la réception d'une ou plusieurs entrées vocales ;
conformément à la ou aux entrées vocales,
l'obtention d'une identité de l'utilisateur qui fournit au moins une parmi la ou les entrées vocales ;
le fait de déterminer, sur la base de l'identité de l'utilisateur qui fournit au moins une parmi la ou les entrées vocales et sur la base de la notification, si la notification doit être fournie à l'utilisateur qui fournit au moins une parmi la ou les entrées vocales ;
conformément à une détermination que la notification doit être fournie à l'utilisateur qui fournit au moins une parmi la ou les entrées vocales, le fait de déterminer si la notification doit être fournie au niveau du premier dispositif électronique ; et
conformément à une détermination que la notification doit être fournie au niveau du premier dispositif électronique, la fourniture de la notification au niveau du premier dispositif électronique, et
conformément à une détermination que la notification ne doit pas être fournie au niveau du premier dispositif électronique, la détermination d'un dispositif électronique supplémentaire pour fournir la notification, et la fourniture de la notification au niveau du dispositif électronique supplémentaire.

2. Procédé selon la revendication 1, dans lequel la notification de l'événement inclut une représentation d'au moins un parmi un appel entrant, un rappel, un message, un message vocal, ou une alerte actualités.

3. Procédé selon l'une quelconque des revendications 1 et 2, dans lequel la réception de la notification de l'événement comprend :
la réception de la notification depuis au moins un parmi un deuxième dispositif électronique ou un troisième dispositif électronique.

4. Procédé selon l'une quelconque des revendications 1 à 3, dans lequel la sortie d'une indication de la notification comprend :
la sortie de l'indication de la notification par un parmi des dispositifs électroniques supplémentaires couplés par communications au premier dispositif électronique.

5. Procédé selon l'une quelconque des revendications 1 à 4, dans lequel la réception de la ou des entrées vocales comprend :
la réception d'une première entrée vocale concernant la notification ;
la sortie d'une réponse conformément à la notification de l'événement ; et
la réception d'une deuxième entrée vocale.

6. Procédé selon l'une quelconque des revendications 1 à 5,
dans lequel l'obtention de l'identité de l'utilisateur qui fournit au moins une parmi la ou les entrées vocales comprend :
l'obtention de données d'authentification associées à l'utilisateur qui fournit au moins une parmi la ou les entrées vocales ; et
l'obtention d'une détermination de l'identité de l'utilisateur qui fournit au moins une parmi la ou les entrées vocales sur la base des données d'authentification.

7. Procédé selon la revendication 6, dans lequel l'obtention de la détermination de l'identité de l'utilisateur qui fournit au moins une parmi la ou les entrées vocales comprend :
la fourniture des données d'authentification à au moins un parmi un deuxième dispositif électronique et un troisième dispositif électronique ; et
la réception de l'identité de l'utilisateur qui fournit au moins une parmi la ou les entrées vocales depuis au moins un parmi le deuxième dispositif électronique et le troisième dispositif électronique, l'identité de l'utilisateur qui fournit au moins une parmi la ou les entrées vocales étant déterminée sur la base des données d'authentification.

8. Procédé selon l'une quelconque des revendications 1 à 7, dans lequel la fourniture de la notification au niveau du premier dispositif électronique comprend :
la fourniture d'une sortie audio associée à la notification au niveau du premier dispositif électronique.

9. Procédé selon l'une quelconque des revendications 1 à 8, dans lequel la détermination du dispositif électronique supplémentaire pour fournir la notification est basée sur la ou les entrées vocales.

10. Procédé selon l'une quelconque des revendications 1 à 9, dans lequel la détermination du dispositif électronique supplémentaire pour fournir la notification est basée sur des informations de contexte.

11. Procédé selon l'une quelconque des revendications 1 à 10, comprenant en outre, avant réception de la notification, l'établissement d'une connexion entre le premier dispositif électronique et au moins un parmi un deuxième dispositif électronique ou un troisième dispositif électronique.

12. Procédé selon la revendication 11, dans lequel l'établissement de la connexion est basé sur une communication en champ proche entre le premier dispositif électronique et le troisième dispositif électronique.

13. Procédé selon l'une quelconque des revendications 11 et 12, dans lequel l'établissement de la connexion est basé sur la détection du troisième dispositif électronique se trouvant à une distance prédéterminée du premier dispositif électronique.

14. Procédé selon l'une quelconque des revendications 11 à 13, dans lequel l'établissement de la connexion est basé sur une connexion établie précédente entre le premier dispositif électronique et le troisième dispositif électronique.

15. Procédé selon l'une quelconque des revendications 11 à 14, comprenant en outre :
l'établissement d'une connexion entre le premier dispositif électronique et le troisième dispositif électronique, le troisième dispositif électronique étant associé au premier utilisateur ; et
l'établissement d'une connexion entre le premier dispositif électronique et un quatrième dispositif électronique, le quatrième dispositif électronique étant associé à un deuxième utilisateur.

16. Procédé selon l'une quelconque des revendications 11 à 15, comprenant en outre : après établissement d'une connexion entre le premier dispositif électronique et le troisième dispositif électronique, la notification du deuxième dispositif électronique de la connexion établie.

17. Procédé selon l'une quelconque des revendications 1 à 16, comprenant en outre, l'établissement d'une ou plusieurs connexions entre le premier dispositif électronique et un ou plusieurs dispositifs électroniques supplémentaires, le ou les dispositifs électroniques supplémentaires étant le même type de dispositifs que le premier dispositif électronique.

18. Premier dispositif électronique comprenant :
un ou plusieurs processeurs ;
de la mémoire ; et
un ou plusieurs programmes stockés en mémoire, le ou les programmes incluant des instructions conçues pour mettre en œuvre le procédé selon l'une quelconque des revendications 1 à 17.

19. Support de stockage lisible par ordinateur comprenant un ou plusieurs programmes pour exécution par un ou plusieurs processeurs d'un premier dispositif électronique, le ou les programmes incluant des instructions qui, lorsqu'elles sont exécutées par le ou les processeurs, amènent le premier dispositif électronique à mettre en œuvre le procédé selon l'une quelconque des revendications 1 à 17.
